(19) Europäisches Patentamt / European Patent Office / Office européen des brevets

(11) **EP 4 263 642 B1**

(12) **EUROPEAN PATENT SPECIFICATION**


(45) Date of publication and mention of the grant of the patent:
**22.01.2025 Bulletin 2025/04**

(21) Application number: **21852093.0**

(22) Date of filing: **16.12.2021**

(51) International Patent Classification (IPC):
***C08F 295/00*** *(2006.01)*

(52) Cooperative Patent Classification (CPC):
(C-Sets available)
**C08F 212/08; C08F 295/00;** C08F 4/65908; C08F 4/65912; C08F 210/02; C08F 2410/01; C08F 2410/02 (Cont.)

(86) International application number:
**PCT/US2021/063915**

(87) International publication number:
**WO 2022/133143 (23.06.2022 Gazette 2022/25)**


(54) **DUAL REACTOR CHAIN SHUTTLING REACTIONS FOR ETHYLENE/VINYLARENE DIBLOCK AND TRIBLOCK INTERPOLYMERS**

DOPPELREAKTORKETTEN-SHUTTLING-REAKTIONEN FÜR ETHYLEN-/VINYLAREN-DIBLOCK- UND TRIBLOCK-INTERPOLYMERE

RÉACTIONS DE TRANSFERT DE CHAÎNE À DOUBLE RÉACTEUR POUR DES INTERPOLYMÈRES DIBLOCS ET TRIBLOCS D'ÉTHYLÈNE/DE VINYLARÈNE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2020 US 202063127350 P**

(43) Date of publication of application:
**25.10.2023 Bulletin 2023/43**



(73) Proprietor: **Dow Global Technologies LLC**
**Midland, MI 48674 (US)**

(72) Inventors:
- **AUYEUNG, Evelyn**
  **Lake Jackson, Texas 77566 (US)**
- **JENKINS, Roxanne M.**
  **Lake Jackson, Texas 77566 (US)**
- **PATTON, Jasson T.**
  **Bay City, Michigan 48706 (US)**
- **MURPHY, Jaclyn**
  **Ashland, Massachusetts 01721 (US)**
- **DEVORE, David D.**
  **Midland, Michigan 48674 (US)**
- **BAILLIE, Rhett A.**
  **Lake Jackson, Texas 77566 (US)**
- **ZHOU, Zhe**
  **Lake Jackson, Texas 77566 (US)**
- **KARJALA Jr., Thomas Wesley**
  **Lake Jackson, Texas 77566 (US)**

(74) Representative: **Boult Wade Tennant LLP**
**Salisbury Square House**
**8 Salisbury Square**
**London EC4Y 8AP (GB)**



(56) References cited:
**WO-A1-2007/035485**

- **PHILLIP D. HUSTAD ET AL: "Continuous Production of Ethylene-Based Diblock Copolymers Using Coordinative Chain Transfer Polymerization", MACROMOLECULES, vol. 40, no. 20, 1 October 2007 (2007-10-01), US, pages 7061 - 7064, XP055330758, ISSN: 0024-9297, DOI: 10.1021/ma0717791**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



EP 4 263 642 B1

- **SEUNG SOO PARK ET AL: "Biaxial Chain Growth of Polyolefin and Polystyrene from 1,6-Hexanediylzinc Species for Triblock Copolymers", MACROMOLECULES, vol. 50, no. 17, 21 August 2017 (2017-08-21), US, pages 6606 - 6616, XP055605641, ISSN: 0024-9297, DOI: 10.1021/acs.macromol.7b01365**

(52) Cooperative Patent Classification (CPC): (Cont.)

C-Sets
**C08F 210/02, C08F 2/001;**
**C08F 210/02, C08F 4/52;**
**C08F 210/02, C08F 4/54;**
**C08F 210/02, C08F 4/64144;**
**C08F 210/02, C08F 4/6592;**
**C08F 212/08, C08F 4/52;**
**C08F 212/08, C08F 210/02, C08F 210/14;**
**C08F 212/08, C08F 210/14;**
C08F 210/02, C08F 212/08;
C08F 210/02, C08F 212/08, C08F 2500/01, C08F 2500/32, C08F 2500/34, C08F 2500/27;
C08F 210/02, C08F 212/08, C08F 2500/03, C08F 2500/32, C08F 2500/34, C08F 2500/27;
C08F 210/02, C08F 212/08, C08F 2500/04, C08F 2500/32, C08F 2500/34, C08F 2500/02, C08F 2500/27;
C08F 210/02, C08F 212/08, C08F 2500/04, C08F 2500/32, C08F 2500/34, C08F 2500/27;
C08F 210/16, C08F 210/14, C08F 212/08;
C08F 212/08, C08F 210/02

## Description

CROSS-REFERENCE TO RELATED APPLICATIONS

The present application claims the benefit of priority to U.S. Provisional Application No. 63/127,350, filed on December 18, 2020.

BACKGROUND OF THE INVENTION

The catalytic production of olefin block copolymers (OBC) via chain shuttling technology has resulted in differentiated materials, such as the INFUSE Olefin Block Copolymers and the INTUNE Olefin Block Copolymers. Such copolymers are typically made from ethylene and an alpha-olefin. The use of chain shuttling technology to produce styrenic block interpolymers offers an attractive route to high value polymers using a continuous solution polymerization process. High value styrenic polymers like SEBS (styrene-ethylene/butene-styrene) are produced in a batch process, via anionic polymerization, initiated by organolithium compounds. This costly polymerization consists of the sequential addition of monomers, followed by an expensive hydrogenation step. There is a need for chain shuttling technology to produce ethylene/vinylarene diblock and triblock interpolymers using dual reactor, continuous solution polymerization.

A. Valente et al., Angew. Chem.. Int. Ed. 2014, 53, 4638-4641. *Isoprene-Styrene Chain Shuttling Copolymerization Mediated by a Lanthanide Half-Sandwich Complex and a Lanthanidocene: Straightforward Access to a New Type of Thermoplastic Elastomers,* discloses an isoprene and styrene chain shuttling polymerization, using with n-butylethylmagnesium, a lanthanide half-sandwich complex and a lanthanidocene. The resulting multiblock structures have alternating hard (styrene-rich) and soft (isoprene-rich) segments.

U.S. Publication 2014/0088276 (*Manufacturing Method for Multidimensional Polymer, and Multidimensional Polymer)* discloses the polymerization of stereo-controlled (syndiotactic) block copolymers of a styrene-type monomer with a conjugated diene, such as isoprene or butadiene, by chain shuttling technology and coordinative chain transfer polymerization. The polymerization takes place in the presence of a first catalyst and a second catalyst. Each of the first catalyst and the second catalyst, independently, contain the following: a) a group 3 metal atom or a lanthanoid metal atom, and for example, Sc, b) a Cp-type ligand containing a substituted or an unsubstituted cyclopentadienyl derivative. c) monoanion ligands, and d) a neutral Lewis base.

U.S. Patent 8,623,976 (*Polymerization Catalyst Compositions Containing Metallocene Complexes and the Polymers Produced by Using the Same*) discloses a catalyst composition comprising the following: a) metallocene complex containing the following:

i) a group 3 metal atom or a lanthanoid metal atom, and for example, Sc,
ii) a Cp* ligand of a substituted or an unsubstituted cyclopentadienyl derivative,
iii) monoanionic ligand,
iv) a neutral Lewis base;

b) an ionic compound of a non-ligand anion and a cation, and for example, tetrakis(pentafluorophenyl)borate. The catalyst composition is used to polymerize various polymers, such as ethylene/styrene copolymers (see Examples 11-17). The polymerized styrene may be in syndiotactic form.

L. Pan et al., Angew. Chem.. Int. Ed. 2011, 50, 12012-12015, *Chain-Shuttling Polymerization at Two Different Scandium Sites: Regio- and Stereospecific "One-Pot" Block Copolymerization of Styrene, Isoprene, and Butadiene,* discloses the chain-shuttling polymerization of styrene, isoprene and butadiene, by two different catalysts and a chain shuttling agent (triisobutylaluminum, TIBA). The catalysts show different monomer selectivity and stereoselectivity in the presence of TIBA, resulting in the regio- and stereospecific copolymerization of styrene, isoprene and butadiene.

S. S. Park et al., Macromolecules 2017, 50, 6606-6616. *Biaxial Chain Growth of Polyolefin and Polystyrene from 1,6-Hexanediylzinc Species for Triblock Copolymers,* discloses the preparation of triblock copolymers, by initiating (anionic) styrene polymerization from a polymeryl zincate species. A polyethylene/polypropylene copolymer is grown from a dual-headed zinc species using coordinative chain transfer polymerization, followed by addition of the anionic initiator (for example, $Me_3SiCH_2Li$-(pmdeta)) and styrene monomer. The coordinative chain transfer polymerization takes place in the presence of a transition metal (for example. Zr or Hf) complex. Thus, anionic polymerization is used to grow polystyrene end blocks, which do not exhibit any stereoregularity.

U.S. Publication 2018/0022852 *(Organic Zinc Compound Comprising Polyolefin-Polystyrene Block Copolymer, and Method for Preparing the Same)* discloses the preparation of an organic zinc compound, such as that of Formula 1, as shown therein, and which comprises a styrene-based polymer or a polyolefin-polystyrene block copolymer. This preparation method comprises preparing an intermediate by coordination polymerizing an olefin monomer using a transition metal catalyst, and then inserting, in part, styrene monomers into the intermediate by anionic polymerization.

Transition metal catalysts include Zr metal compounds represented by Formula 6A and Formula 6B, each shown therein (see paragraphs [0076] and [0077]]).

Y. Luo et al., J. Am. Chem. Soc. 2004, 126, 13910-13911, *Scandium Half-Metallocene-Catalyzed Syndiospecific Styrene Polymerization and Styrene-Ethylene Copolymerization: Unprecedented Incorporation of Syndiotactic Styrene-Styrene Sequences in Styrene-Ethylene Copolymers,* discloses the polymerization of syndiospecific styrene-ethylene copolymers, using a scandium half-sandwich complex. The melting temperature (Tm) of the copolymer can be modified by adjusting the ethylene incorporation, where ethylene incorporation results in a decrease in the Tm. No chain-shuttling was demonstrated with the Sc catalyst.

H. Hagihara et al.. Polymer Journal 2012, 44, 147-154. *Synthesis of Ethylene-Styrene Copolymer Containing Syndiotactic Polystyrene Sequence by Trivalent Titanium Catalyst.* discloses the polymerization of syndiotactic styrene-ethylene copolymers, using a trivalent titanium catalyst, tris(acetylacetonate) titanium ($Ti(acac)_3$). Different polymers were produced by the $Ti(acac)_3$ catalyst, which may be attributed to the presence of multiple oxidation sites on this catalyst.

F. Lin et al., Journal of Polymer Science, Part A: Polymer Chemistry 2017, 55, 1243-1249, *Synthesis and Characterization of Crystalline Styrene-b-(Ethylene-co-Butylent,,) -b - Styrene Triblock Copolymers,* discloses the synthesis and characterization of crystalline styrene-b-(ethylene-co-butylene)-b-styrene (SEBS). The cationic, rare earth metal complex, $[(\eta^5\text{-Flu-CH}_2\text{-Py})Ho(CH_2SiMe_3)\}(THF)$, was used for a living polymerization of butadiene and styrene. The sequential addition of styrene, butadiene and styrene monomers formed an SBS triblock. The SBS triblock consisted of elastic polybutadiene sequences with 1,4 regularity and crystalline syndiotactic polystyrene. The SBS triblock was hydrogenated to form the SEBS.

B. Liu et al., Macromolecules 2016, 49, 6226-6231, *Regioselective Chain Shuttling Polymerization of Isoprene: An Approach to Access New Materials from Single Monomer,* discloses the chain transfer polymerization of isoprene using a pyridyl-methylene fluorenyl scandium complex, in combination with $[Ph_3C]B(C_6F_5)_4$ and $i$$Bu_3Al$.. The polymerization yielded high 1,4-selectivity of the isoprene. Additional catalysts structures include "pryridyl-methylene functionalized fluorenyl ligated rare earth metal complexes 1-9, as shown therein, and where the metal is Sc, Y. Lu, Tm, Er, Ho, Dy, Tb or Gd (see page 6227 (Chart 1)).

U.S. Patent 8.710,143 *(Catalyst Composition Comprising Shuttling Agent for Ethylene Multi-Block Copolymer Formation)* discloses the polymerization of multiblock copolymers using the following: (A) a first metal complex olefin polymenzation catalyst, (B) a second metal complex olefin polymerization catalyst capable of preparing polymers differing in chemical or physical properties from the polymer prepared by catalyst (A), under equivalent polymerization conditions, and (C) a chain shuttling agent. Suitable monomers include ethylene and one or more addition polymerizable monomers, such as 1-octene and styrene (see column 16, lines 3-32). Suitable catalysts include metal complexes, where the metal is selected from Group 3-15, preferably Groups 3-10, more preferably Groups 4-8, and most preferably Group 4 (Ti, Zr and Hf). See, for example, column 19, line 61, to column 20, line 6. An ethylene/styrene multiblock polymer was prepared using Cat. A1 (Hf) and Cat. B1 (Zr), each as shown therein (see column 85, lines 12-30; column 86, lines 21-52; column 115, line 21, to column 116, line 23 and Tables 27 and 28).

Additional olefin block copolymers (OBCs) and associated polymerizations are disclose in the following references: U.S. Patent 7,915,192; U.S. Patent 8,124,709; U.S. Patent 8,501,885; U.S. Patent 8,716,400; EP1716190B1; EP1926763B1; and EP2582747B1.

However, there remains a need for chain shuttling technology to produce ethylene/stereoregular vinylarene diblock and triblock interpolymers, in dual reactors using continuous solution polymerization. This need has been met by the following invention.

SUMMARY OF THE INVENTION

In a first aspect, a process to form a composition comprising an ethylene/vinylarene diblock interpolymer and/or an ethylene/vinylarene triblock interpolymer, said process comprising at least the following steps:

A) polymerizing in a reactor A. a mixture A comprising ethylene, and optionally an alpha-olefin. and optionally a vinylarene, in the presence of at least the following: a) a metal complex S selected from the following: Formula S1, Formula S2, Formula S3, Formula S4, or Formula S5:

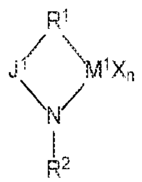
(Formula S1),

wherein $M^1$ is a metal selected from titanium (Ti), zirconium (Zr), or hafnium (Hf); and wherein the metal is in a formal oxidation state of +2, +3. or +4;
each X is independently selected from a substituted or unsubstituted ($C_1$-$C_{30}$)hydrocarbyl, a substituted or unsubstituted ($C_1$-$C_{30}$)heterohydrocarbyl, or -H; and wherein each X is independently a monodentate ligand or a bidentate ligand;
n is 0, 1, or 2. and optionally when n is 1, X may be a bidentate ligand;
$R^1$ is a bridging group comprising from 2 to 41 atoms other than hydrogen, and wherein, optionally, the bond between $R^1$ and M is a pi bond;
$R^2$ is selected from a substituted or an unsubstiluted ($C_1$-$C_{30}$)hydrocarbyl group, or a substituted or an unsubstituted ($C_1$-$C_{30}$)heterohydrocarbyl group:
$J^1$ is a bridging group linking N and $R^1$, and comprising from 2 to 40 atoms other than hydrogen, and wherein, optionally, the bridging group comprises a N atom that can interact with the metal ($M^1$) via an electron donative bond: and
wherein the metal complex is overall charge-neutral;

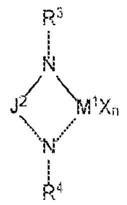
(Formula S2),

wherein $M^1$ is a metal selected from titanium (Ti), zirconium (Zr), or hafnium (Hf); and where the metal is in a formal oxidation state of +2, +3, or +4;
each X is independently selected from a substituted or unsubstituted ($C_1$-$C_{30}$)hydrocarbyl, a substituted or unsubstituted ($C_1$-$C_{30}$)heterohydrocarbyl or -H: and wherein each X is independently a monodentate or a bidentate ligand;
n is 0, 1, or 2, and optionally when n is 1, X may be a bidentate ligand:
each of $R^3$ and $R^4$ is independently selected from a substituted or an unsubstituted ($C_6$-$C_{20}$)aryl group, or a substituted or an unsubstituted ($C_5$-$C_{20}$)heteroaryl group;
N and N are linked by a bridging group, $J^2$, which comprises from 2 to 40 atoms other than hydrogen, and wherein, optionally, the bridging group comprises a N atom that can interact with the metal via an electron donative bond; and
wherein the metal complex is overall charge-neutral;

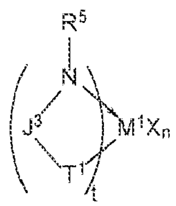
(Formula S3),

wherein $M^1$ is a metal selected from titanium (Ti), zirconium (Zr), or hafnium (Hf); and wherein the metal is in a formal oxidation state of +2, +3, or +4;
each X is independently selected from a substituted or unsubstituted ($C_1$-$C_{30}$)hydrocarbyl, substituted, a unsubstituted ($C_1$-$C_{30}$)heterohydrocarbyl, or -H; and wherein each X is independently a monodentate ligand or a bidentate ligand:
n is 0, 1, or 2, and optionally when n is 1, X may be a bidentate ligand;
$R^5$ is a substituted or unsubstituted ($C_1$-$C_{30}$)hydrocarbyl group. a substituted or unsubstituted ($C_1$-$C_{30}$)heterohydrocarbyl group, -Si($R^C$)$_3$, or -H;
$T^1$ is selected from -O-, -S-, -N($R^N$)-, or -P($R^P$)-;
t is 1 or 2;
and wherein $T^1$ and N are linked by a bridging group, denoted by $J^3$, which comprises from 4 to 50 atoms other than hydrogen;
wherein each $R^P$, $R^N$, and $R^C$ in Formula S3 is independently a substituted or an unsubstituted ($C_1$-$C_{30}$) hydrocarbyl. a substituted or an unsubstituted ($C_1$-$C_{30}$)heterohydrocarbyl, or -H; and

wherein the metal complex is overall charge-neutral;

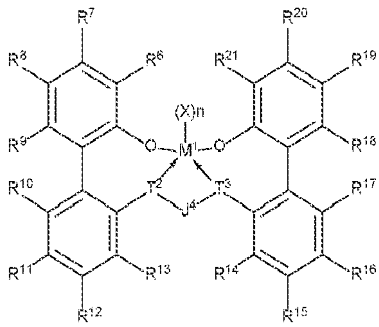

(Formula S4),

wherein $M^1$ is a metal selected from zirconium (Zr) or hafnium (Hf); and wherein the metal is in a formal oxidation state of +2, +3, or +4;

each X is independently selected from a substituted or unsubstituted $(C_1-C_{30})$hydrocarbyl. a substituted or unsubstituted $(C_1-C_{30})$heterohydrocarbyl, or -H; and wherein each X is independently a monodentate ligand or a bidentate ligand:

n is 0, 1, or 2, and optionally when n is 1, X may be a bidentate ligand;

each of $-T^2-$ and $-T^3-$ is independently selected from -O-, -S-. $-N(R^N)-$, or $-P(R^P)-$;

$R^6$ and $R^{21}$ are each independently selected from the group consisting of-H. a substituted or unsubstituted $(C_1-C_{40})$hydrocarbyl, a substituted or unsubstituted $(C_1-C_{40})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R)-$, $(R^C)_2NC(O)-$, halogen, radicals having formula (I), radicals having formula (II), and radicals having formula (III):

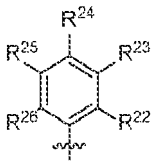 (I), 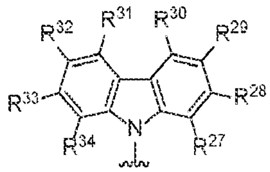 (II), 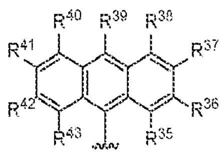 (III),

where each of $R^{22-26}$, $R^{27-34}$, and $R^{35-43}$ is independently selected from a substituted or unsubstituted $(C_1-C_{40})$hydrocarbyl, a substituted or unsubstituted $(C_1-C_{40})$heterohydrocarbyl, $-Si(R^C)_3$, $-Ge(R^C)_3$, $-P(R^P)_2$, $-N(R^N)_2$, $-N=CHR^C$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R^N)-$, $(R^C)_2NC(O)-$, halogen, or -H;

each of $R^{7-20}$ is independently selected from a substituted or unsubstituted $(C_1-C_{40})$hydrocarbyl, a substituted or unsubstituted $(C_1-C_{40})$heterohydro-carbyl, $\sim Si(R^C)_3$, $-Ge(R^C)_3$, $-P(R^P)_2$, $-N(R^N)_2$, $-N=CHR^C$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R^N)-$, $(R^C)_2NC(O)-$, halogen, or -H;

$J^4$ is a substituted or unsubstituted $(C_1-C_{40})$hydrocarbylene or a substituted or unsubstituted $(C_1-C_{40})$hetero-hydrocarbylene, wherein the substituted or unsubstituted $(C_1-C_{40})$hydrocarbylene has a portion that comprises a 1-carbon atom to 10-carbon atom linker backbone, linking the groups $T^2$ and $T^3$ in Formula S4 (to which $J^4$ is bonded): or the substituted or unsubstituted $(C_1-C_{40})$heterohydrocarbylene has a portion that comprises a 1-atom to 10-atom linker backbone. linking the groups $T^2$ and $T^3$ in Formula S4, wherein each of the 1 to 10 atoms of the l-atom to 10-atom linker backbone, independently, is a carbon atom or heteroatom of a heteroatom group, wherein each heteroatom group is independently O, S, S(O), $S(O)_2$, $Si(R^C)_2$, $Ge(R^C)_2$, $P(R^C)$, or $N(R^C)$, wherein each $R^C$ is independently a substituted or unsubstituted $(C_1-C_{30})$hydrocarbyl or a substituted or unsubstituted $(C_1-C_{30})$heterohydro-carbyl; and wherein each $R^P$, $R^N$, and remaining $R^C$ in Formula S4 is independently a substituted or unsubstituted $(C_1-C_{30})$hydrocarbyl, a substituted or unsubstituted $(C_1-C_{30})$-heterohydrocarbyl, or -H; and

wherein the metal complex is overall charge-neutral: or

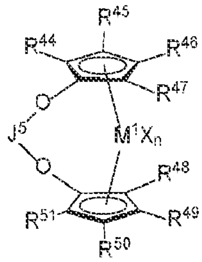

(Formula S5),

wherein $M^1$ is a metal selected from titanium (Ti), zirconium (Zr), or hafnium (Hf); and wherein the metal is in a formal oxidation state of +2, +3, or +4;

each X is independently selected from a substituted or unsubstituted ($C_1$-$C_{30}$)hydrocarbyl, a substituted or unsubstituted ($C_1$-$C_{30}$)heterohydrocarbyl, or -H; and wherein each X is independently a monodentate ligand or a bidentate ligand;

n is 0, 1, or 2, and optionally when n is 1, X may be a bidentate ligand:

$R^{44-51}$ are each independently selected from a substituted or unsubstituted ($C_{1-40}$)hydrocarbyl, a substituted or unsubstituted ($C_1$-$C_{40}$)heterohydrocarbyl. -Si($R^C$)$_3$, or -H; and optionally two or more groups from $R^{44-51}$ are linked, such that that cyclopentadienyl group is a substituted or unsubstituted indenyl group, or a substituted or unsubstituted fluorenyl group: and wherein $R^C$ is selected from a substituted or unsubstituted ($C_1$-$C_{30}$)hydrocarbyl, a substituted or unsubstituted ($C_1$-$C_{30}$)heterohydrocarbyl, or -H;

O and O are linked by a bridging group, denoted by $J^5$, which comprises from 1 to 30 atoms other than hydrogen: and

wherein the metal complex is overall charge-neutral;

B) polymerizing in a reactor B, a mixture B comprising ethylene, a vinylarene, and optionally an alpha-olefin, in the presence of at least the following: b) a metal complex H selected from the following Formula H1 or Formula H2:

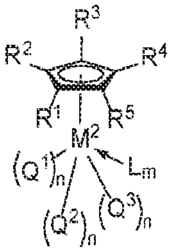

(Formula H1),

wherein $M^2$ is Ti, Sc. Y, or an element from the lanthanide series;

$R^1$, $R^2$, $R^3$, $R^4$, and $R^5$ are each independently H, or a substituted or unsubstituted hydrocarbyl group, a substituted or unsubstituted heterohydrocarbyl group:

$Q^1$, $Q^2$, and $Q^3$ are each independently a substituted or unsubstituted hydrocarbyl group, a substituted or unsubstituted heterohydrocarbyl group, or a halogen;

L is a Lewis base; and each n is independently 0 or 1; and m is an integer from 0 to 3;

wherein optionally at least one L group and at least one Q group are connected, and optionally at least one R group and at least one Q group are connected;

wherein the metal complex is overall charge-neutral;

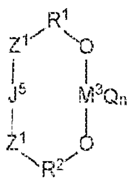

(Formula H2):

wherein $M^3$ is a metal selected from titanium (Ti), zirconium (Zr), or hafnium (Hf); and wherein the metal is in a formal oxidation state of +2, +3, or +4;

each Q is independently selected from a substituted or unsubstituted ($C_1$-$C_{30}$)-hydrocarbyl, a substituted or unsubstituted ($C_1$-$C_{30}$)heterohydrocarbyl, or -H; and wherein each Q is independently a monodentate ligand or a

bidentate ligand:

n is 0, 1, or 2. and optionally when n is 1, X may be a bidentate ligand;

$R^1$ and $R^2$ are each independently a bridging group comprising from 2 to 41 atoms other than hydrogen, and wherein, optionally, $R^1$ and $R^2$ each independently may be a substituted or unsubstituted arylene group;

each of $-Z^1-$ and $-Z^2-$ is independently selected from -O-, -S-, -Se-, $-N(R^N)-$, or $-P(R^P)-$; and wherein each of $-Z^1-$ and $-Z^2-$ independently can optionally interact with the metal via an electron donative bond;

$Z^1$ and $Z^2$ are linked by a bridging group, denoted by $J^5$, which comprises from 1 to 50 atoms other than hydrogen;

wherein $R^P$ and $R^N$, are each independently a substituted or unsubstituted $(C_1-C_{30})$-hydrocarbyl, a substituted or unsubstituted $(C_1-C_{30})$heterohydrocarbyl, or -H; and

wherein the metal complex is overall charge-neutral; and

wherein step A occurs before step B, and at least a portion of the reactor product in reactor A is transferred to reactor B; or step B occurs before step A, and at least a portion of the reactor product in reactor B is transferred to reactor A; and

wherein if step A occurs before step B, then at least one chain shuttling agent is fed into the reactor A; and

wherein if step B occurs before step A. then at least one chain shuttling agent is fed into the reactor B; and

wherein the vinylarene in step A = the vinylarene in step B: and the alpha-olefin in step A ::: the alpha-olefin in step B.

In a second aspect, a composition comprising an ethylene/vinylarene diblock interpolymer or an ethylene/vinylarene triblock interpolymer, said diblock interpolymer comprising at least one polymer structure selected from Structure 1, as shown below, and said triblock interpolymer comprising at least one polymer structure selected from Structure 2 or Structure 3. each as shown below, where AR refers to vinylarene-rich and AP refers to vinylarene-poor:

(AR)-(AP) (Structure 1),

(AR)-(AP)-(AR) (Structure 2).

(AP)-(AR)-(AP) (Structure 3);

and

wherein each (AR) segment independently comprises, in polymerized form, ethylene, the vinylarene and optionally an alpha-olefin, and

wherein each (AP) segment independently comprises, in polymerized form, ethylene. optionally the vinylarene and optionally the alpha-olefin, and

wherein each (AR) segment independently comprises, in polymerized form, > 10 mol% of the vinylarene, based on the total moles of polymerized monomers in the (AR) segment; and

wherein each (AP) segment independently comprises, in polymerized form, ≤ 10 mol% of the vinylarene, based on the total moles of polymerized monomers in the (AP) segment.

BRIEF DESCRIPTION OF THE DRAWINGS

Figure 1A is a schematic depicting the formation of an ethylene/styrene diblock interpolymer. Each black block represents an vinylarene-poor block comprising, in polymerized form, ethylene, optionally an alpha-olefin and optionally a vinylarene. Each grey (pink) block represents an vinylarene-rich block comprising, in polymerized form, ethylene, a vinylarene and optionally an alpha-olefin.

Figure 1B is a schematic depicting the formation of an ethylene/styrene triblock interpolymer. See above for block descriptions.

Figure 2 depicts the 1H NMR profile of CAT B.

Figure 3 depicts the 13C NMR profile of CAT B.

Figure 4 depicts PPR Data: Activity vs CSA Loading (μmoles).

Figure 5 depicts PPR Data: PS Molecule Weight (Mw) vs CSA Loading (μmoles).

Figure 6 depicts conventional GPC profiles of syndiotactic polystyrenes as noted. GPC profiles from left to right, starting at Log M = 3.00: "sPS 3 (100 DEZ polymer)," "sPS-5 (100 TEA polymer)," "sPS-2 (25 DEZ polymer)," "sPS-4 (25 TEA polymer)," "sPS-1 (no CSA polymer)."

Figure 7 depicts the 1H NMR profile of Triblock 2 (composition containing an ethylene/octene/styrene triblock).

Figure 8 depicts the 13C NMR profile of Triblock 2.

Figure 9 depicts the GPC profile of Triblock 1 (composition containing an ethylene/octene/styrene triblock). A dRL'UV dual detectors were used. GPC profiles from left to right, starting at Log M = 4.00: UV profile, RI profile.

Figure 10A depicts the conventional GPC profiles of the samples as noted GPC profiles from left to right, starting at Log M = 3.00: Triblock 2, IB-1 (In-Reactor Blend) (see Table 9).

Figure 10B depicts the conventional GPC profiles of the samples as noted GPC profiles from left to right, starting at Log M = 2.00: IB-2 (In-Reactor Blend). Triblock 3 (composition containing an ethylene/octene/styrene triblock). Diblock 1 (composition containing an ethylene/octene/styrene diblock), Diblock 2 (composition containing an ethylene/octene/styrene diblock) (see Table 7).

Figure 11 depicts Tensile Stress versus Tensile Strain for Triblock 2 and IB-1.

Figure 12 depicts conventional GPC profiles of atactic polystyrenes as noted. GPC profiles from left to right, starting at Log M ::: 2.00: "aPS-4 (100 DEZ polymer)," "aPS-5 (25 TEA" polymer)," "aPS-3 (25 DEZ polymer)," "aPS-1 (CAT C only polymer)," "aPS-2 (no CSA C and no CSA polymer)."

Figure 13 depicts CAT D PPR Data: Molecular Weight (Mw) versus Polymerization Efficiency.

Figure 14 depicts CAT E PPR Data: Molecular Weight (Mw) versus Polymerization Efficiency.

Figure 15 depicts CAT F PPR Data: Molecular Weight (Mw) versus Polymerization Efficiency.

DETAILED DRESCRIPTION OF THE INVENTION

Chain shuttling technology has been discovered to produce ethylene/vinylarene diblock and triblock interpolymers, via dual catalysts in two reactors. For example, the catalyst (metal complex) used to form vinylarene-poor segments (or blocks) in one reactor meets the following criteria: a) high native molecular weight, b) high chain shuttling constants, as determined by molecular weight reduction and narrowing of the molecular weight distribution in the presence of CSA (chain shuttling agent). and 3) high $\alpha$-olefin incorporation. The catalyst (metal complex) used for form vinylarene-rich segments (or blocks) in the other reactor meets the following criteria: a) good activity toward the vinylarene polymerization, b) high chain shuttling constants, as determined by molecular weight reduction and narrowing of the molecular weight distribution in the presence of a CSA, and c) compatibility with residual monomer carried over.

As discussed above, the invention provides, in a first aspect, a process to form a composition comprising an ethylene/vinylarene diblock interpolymer and: or an ethylene/vinylarene triblock interpolymer, as described above. An inventive process may comprise a combination of two or more embodiments, as described herein. Each step or component of an inventive process may comprise a combination of two or more embodiments, each described herein.

As discussed above, the invention also provides, in a second aspect, a composition comprising an ethylene/-vinylarene diblock interpolymer or an ethylene/vinylarene triblock interpolymer, as described above. An inventive composition may comprise a combination of two or more embodiments, as described herein The diblock interpolymer and the triblock interpolymer may each comprise a combination of two or more embodiments, as described herein.

Note, as used herein, in reference to structures of a metal complex, Arl = $Ar^1$, Ar2 = $Ar^2$, Ar3 = $Ar^3$, and so forth. Also, as used herein, in reference to such structures, $R^1$ = $R^1$, R2 = $R^2$, R3 = $R^3$, and so forth. The notation $R^a$-$R^{n,}$ where "a through n" represents consecutive numbers, refers to $R^3$, $R^{a+1}$, $R^{a+2}$, ..., $R^n$. For example, $R^3$-$R^7$ refers to $R^3$, $R^4$, $R^5$, $R^6$, $R^7$. As used herein, in reference to noted metal complexes, the notation "$\rightarrow$" refers to a bond formed from a donating electron pair (electron donative bond). Note. a pi ($\pi$) bond is shown herein by a straight line.

The following embodiments apply to an inventive process and/or an inventive composition as applicable.

In one embodiment, or a combination of two or more embodiments, each described herein, the metal complex S is selected from structure s1al or structure s1a2:

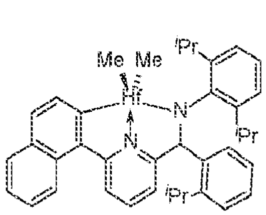 (s1al) or 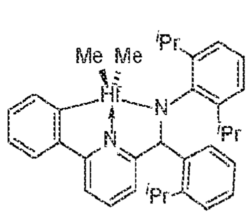 (s1a2).

In one embodiment, or a combination of two or more embodiments, each described herein, metal complex S is selected from Formula S1, and further Formula S1a as described herein: and the metal complex H is selected from Formula H1, and further Formula H1a or Formula Hlb. each as described herein.

In one embodiment, or a combination of two or more embodiments, each described herein, the metal complex H is selected from the following formulas h1a1, h1a2, h1a3, h1b1, h1b2, h1b3, h2a1 or h2a2. each as described herein

In one embodiment, or a combination of two or more embodiments, each described herein, the at least one chain

shuttling agent is selected from the following: an alkyl zinc compound, an alkyl aluminum compound, a dual headed chain shuttling agent, or a combination thereof.

In one embodiment, or a combination of two or more embodiments, each described herein, step A occurs before step B.

In one embodiment, or a combination of two or more embodiments, each described herein, step B occurs before step A.

In one embodiment, or a combination of two or more embodiments, each described herein, for the ethylene/-vinylarene diblock interpolymer or the ethylene/vinylarene triblock interpolymer. the vinylarene is styrene.

In one embodiment, or a combination of two or more embodiments, each described herein, the mixture A comprises the alpha-olefin.

In one embodiment, or a combination of two or more embodiments, each described herein, for the ethylene/-vinylarene diblock interpolymer or the ethylene/vinylarene triblock interpolymer, each (AR) segment independently comprises, in polymerized form, ≥ 15 mol%, or ≥ 20 mol%, or ≥ 25 mol%, or ≥ 30 mol%, or ≥ 35 mol%, or ≥ 40 mol%, or ≥ 45 mol%, or ≥ 50 mol%, or ≥ 55 mol%, or ≥ 60 mol%, of the vinylarene, based on the total moles of polymerized monomers in the (AR) segment In one embodiment, or a combination of two or more embodiments, each described herein, each (AR) segment independently comprises. in polymerized form, < 100 mol%, or ≤ 98 mol%, or ≤ 96 mol%, or ≤ 94 mol%, or ≤ 92 mol%, or ≤ 91 mol% of the vinylarene, based on the total moles of polymerized monomers in the (AR) segment.

In one embodiment, or a combination of two or more embodiments, each described herein, for the ethylene/-vinylarene diblock interpolymer or the ethylene/vinylarene triblock interpolymer, each (AP) segment independently comprises, in polymerized form, ≥ 0 mol%, or ≥ 0.2 mol%, or ≥ 0.4 mol%. or ≥ 0.6 mol%, or ≥ 0.8 mol%, or ≥ 1.0 mol% of the vinylarene, based on the total moles of polymerized monomers in the (AP) segment. In one embodiment, or a combination of two or more embodiments, each described herein, each (AP) segment independently comprises, in polymerized form, ≤ 10 mol%, or ≤ 9.0 mol%, or ≤ 8.0 mol%, or ≤ 7.0 mol%, or ≤ 6.0 mol%, or ≤ 5.0 mol% of the vinylarene, based on the total moles of polymerized monomers in the (AP) segment.

In one embodiment, or a combination of two or more embodiments, each described herein, for the ethylene/-vinylarene diblock interpolymer or the ethylene/vinylarene triblock interpolymer, each (AR) segment independently comprises, in polymerized form, ≥ 2.0 mol%, or ≥ 4.0 mol%, or ≥ 6.0 mol%, or ≥ 8.0 mol%, or ≥ 9.0 mol%, or ≥ 10 mol%, or ≥ 11 mol%, or ≥ 12 mol%, or ≥ 13 mol%, or ≥ 14 mol% of ethylene, based on the total moles of polymerized monomers in the (AR) segment. In one embodiment, or a combination of two or more embodiments, each described herein, each (AR) segment independently comprises, in polymerized form, ≤ 80 mol%, or ≤ 77 mol%, or ≤ 75 mol%, or ≤ 73 mol%, or ≤ 70 mol%. or ≤ 65 mol%, or ≤ 60 mol%, or ≤ 55 mol%, or ≤ 50 mol%, or ≤ 45 mol%, or ≤ 40 mol% of ethylene, based on the total moles of polymerized monomers in the (AR) segment.

In one embodiment, or a combination of two or more embodiments, each described herein, for the ethylene/-vinylarene diblock interpolymer or the ethylene/vinylarene triblock interpolymer, each (AP) segment independently comprises, in polymerized form ≥ 50 mol%, ≥ 52 mol%, or ≥ 54 mol%, or ≥ 56 mol%, or ≥ 58 mol%, or ≥ 60 mol%, or ≥ 62 mol%, or ≥ 64 mol%, or ≥ 66 mol%, or ≥ 68 mol%, or ≥ 70 mol% of ethylene, based on the total moles of polymerized monomers in the (AP) segment. In one embodiment, or a combination of two or more embodiments, each described herein, each (AP) segment independently comprises, in polymerized form. ≤ 100 mol%, or ≤ 98 mol%, or ≤ 96 mol%, or ≤ 94 mol%, or ≤ 92 mol%, or ≤ 90 mol% of ethylene, based on the total moles of polymerized monomers in the (AP) segment.

In one embodiment, or a combination of two or more embodiments, each described herein, for the ethylene/-vinylarene diblock interpolymer or the ethylene/vinylarene triblock interpoly mer, ≥ 20 mol%, or ≥ 40 mol%, or ≥ 60 mol%, or ≥ 80 mol%, or ≥ 85 mol%, or ≥ 90 mol%, or ≥ 92 mol%, or ≥ 94 mol%, or ≥ 96 mol%, or ≥ 98 mol%, or ≥ 99 mol% of the polymerized vinylarene in each (AR) segment is present in a "back to back" configuration as shown below in subsegment bb:

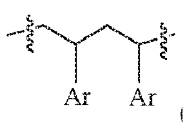

(subsegment bb); and wherein the mol% is based on the total moles of polymerized vinylarene in the (AR) segment.

In one embodiment, or a combination of two or more embodiments, each described herein, for the ethylene/-vinylarene diblock interpolymer or the ethylene/vinylarene triblock interpolymer, ≥ 20 mol%, or ≥ 40 mol%, or ≥ 60 mol%, or ≥ 80 mol%, or ≥ 85 mol%, or ≥ 90 mol%, or ≥ 92 mol%, or ≥ 94 mol%, or ≥ 96 mol%, or ≥ 98 mol%, or ≥ 99 mol% of the polymerized vinylarene in each (AR) segment is present in a syndiotactic "back to back" configuration as shown below in subsegment sbb:

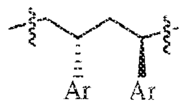

(subsegment sbb): and wherein the mol% is based on the total moles of polymerized vinylarene in the (AR) segment.

In one embodiment, or a combination of two or more embodiments, each described herein, for the ethylene/-vinylarene diblock interpolymer or the ethylene/vinylarene triblock interpolymer, none of the polymerized vinylarene in each (AP) segment is present in a "back to back" configuration as shown in subsegment bb:

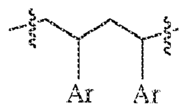

(subsegment bb); and wherein the mol% is based on the total moles of polymerized vinylarene in the (AP) segment.

Also provided is a composition formed from an inventive process as described herein. Also provided is an article comprising at least one component formed from an inventive composition.

**Ethylene/Vinylarene Diblock and Triblock Interpolymers**

Examples of the formation of an ethylene/vinylarene diblock interpolymer and the formation of an ethylene/-vinylarene triblock interpolymers are schematically shown in Figure 1A and Figure 1B, respectively. According to these figures, an ethylene/alpha-olefin random copolymer "block," directly bound to an organometallic reagent, such as a zinc or aluminum-based chain-shuttling agent (CSA) or a dual-headed chain shuttling agent (DHCSA), is generated in the first reactor. using a first transition metal catalyst. These resulting polymeryl zinc or polymeryl aluminum species of the first reactor are transferred into the second reactor. The lifetime of the first transition metal catalyst (metal complex) is spent by the time the contents of the first reactor are transferred to the second reactor. In the second reactor, styrene, ethylene and optionally, the alpha-olefin, are polymerized in the presence of a second transition metal catalyst, to produce a random styrene/ethylene interpolymer "block.'' The polymeryl zinc or polymeryl aluminum species from first reactor then undergoes chain shuttling with the second reactor catalyst, to grow the styrene/ethylene random "block" onto the ethylene/alpha-olefin polymeryl chain, yielding the desired diblock (Figure 1A) or triblock (Figure 1B) interpolymer. The two types of random blocks (vinylarene-rich or hard block and vinylarene-poor or soft block) differ in chemical or physical properties. Each block has two or more monomer types that are substantially randomly distributed within the block.

As discussed, the ethylene/vinylarene diblock and triblock interpolymers comprise two chemically distinct regions (referred to as "blocks"), preferably joined in a linear manner. In an embodiment, the blocks differ in the amount or type of incorporated comonomer, density, amount of crystallinity, type or degree of tacticity (isotactic or syndiotactic), or any other chemical or physical property. Compared to conventional block interpolymers of the art, including interpolymers produced by sequential monomer addition, fluxional catalysts, or anionic polymerization techniques, the present ethylene/vinylarene diblock and triblock interpolymers are characterized by unique distributions of both polymer polydispersity (PDI or Mw/Mn or MWD). block length distribution, and/or block number distribution, due to the effect of the shuttling agent(s) in combination with multiple catalysts, used in their preparation in dual reactors.

**Vinylarene Monomers**

Vinylarene monomers are aromatic monomers. and include, but are not limited to, aromatic vinyl compounds such as mono- or poly-alkylstyrenes (including styrene, o-methylstyrene, *m*-methylstyrene, *p*-methylstyrene, *o,p*-dimethylstyrene, o-ethylstyrene, methylstyrene and *p*-ethylsty rene), and functional group-containing derivatives, such as, o-chlorostyrene, *m*-chlorostyrene, *p*-chlorostyrene. divinylbenzene. 3-phenylpropene, 4-phenylpropene and $\alpha$-methylstyrene, provided the monomer is polymerizable under the conditions employed.

**Chain shuttling agent (CSA)**

The term, "chain shuttling agent (CSA)" refers to a compound or a mixture of compounds that is capable of causing a polymeryl exchange between at least two active catalyst sites of the catalysts included in the conditions of the polymerization. That is, transfer of a polymer fragment occurs both to, and from, one or more of the active catalyst sites. The CSA is able to chain transfer between, for example, the "AP (soft block) catalyst" and the "AR (hard block catalyst)."

Suitable shuttling agents include, but are not limited to, Group 1, 2, 12 or 13 metal compounds or complexes containing at least one substituted or unsubstituted hydrocarbyl group, preferably hydrocarbyl substituted aluminum,

gallium or zinc compounds containing from 1 to 12 carbons in each hydrocarbyl group, and reaction products thereof with a proton source. Preferred hydrocarbyl groups are alkyl groups, preferably linear or branched, C2-C8 alkyl groups. Chain shuttling agents include, but are not limited to, trialkylaluminum and dialkyl zinc compounds, especially triethylaluminum, tri(isopropyl)aluminum, tri(isobutyl)aluminum, tri(n-hexyl)aluminum, tri(n-octyl)aluminum, triethylgallium, or diethylzinc. See U.S. Patent 8,710,143.

Dual-headed chain shuttling agents (for example, an Al-DHCSA and an AlZn-DHCSA) are also suitable agents. Dual-headed chain shuttling agents include, but are not limited to structures of the following formula: $R1\text{-}[M\text{-}R2\text{-}]_n\text{-}M\text{-}R1$ where R1, R2 are each independently a hydrocarbon containing between 1 and 20 carbons, $n \geq 1$, and M = Zn. See also WO2018/064546 and U.S. Patent 8,501,885.

DEFINITIONS

Unless stated to the contrary, implicit from the context. or customary in the art, all parts and percentages are based on weight, and all test methods are current as of the filing date of this disclosure.

The term "composition." as used herein, includes a mixture of materials, which comprise the composition. as well as reaction byproducts and decomposition products formed from the materials of the composition. Any reaction byproduct or decomposition product is typically present in trace or residual amounts.

The term "polymer," as used herein, refers to a polymeric compound prepared by polymerizing monomers, whether of the same or a different type. The generic term polymer thus includes the term homopolymer (employed to refer to polymers prepared from only one type of monomer, with the understanding that trace amounts of impurities can be incorporated into the polymer structure), and the term interpolymer as defined hereinafter. Trace amounts of impurities, such as catalyst residues, can be incorporated into and/or within the polymer. Typically, a polymer is stabilized with very low amounts ("ppm'' amounts) of one or more stabilizers.

The term "interpolymer," as used herein, refers to a polymer prepared by the polymerization of at least two different types of monomers. The term interpolymer thus includes the term copolymer (employed to refer to polymers prepared from two different types of monomers) and polymers prepared from more than two different types of monomers.

The term "olefin-based polymer." as used herein, refers to a polymer that comprises, in polymerized form, 50 wt% or a majority weight percent of an olefin, such as ethylene or propylene (based on the weight of the polymer), and optionally may comprise one or more comonomers.

The term "propylene-based polymer," as used herein, refers to a polymer that comprises, in polymerized form, a majority weight percent of propylene (based on the weight of the polymer), and optionally may comprise one or more comonomers.

The term "ethylene-based polymer," as used herein, refers to a polymer that comprises, in polymerized form, 50 wt% or a majority weight percent of ethylene (based on the weight of the polymer), and optionally may comprise one or more comonomers.

The term "vinylarene-based polymer," as used herein, refers to a polymer that comprises, in polymerized form, a majority weight percent of the vinylarene (based on the weight of the polymer), and optionally may comprise one or more comonomers.

The term "styrene-based polymer," as used herein, refers to a polymer that comprises, in polymerized form, a majority weight percent of styrene (based on the weight of the polymer), and optionally may comprise one or more comonomers.

The term "ethylene/alpha-olefin interpolymer," as used herein, refers to a random interpolymer that comprises, in polymerized form, 50 wt% or a majority weight percent of ethylene (based on the weight of the interpolymer), and an alpha-olefin.

The term, "ethylene/alpha-olefin copolymer," as used herein, refers to a random copolymer that comprises, in polymerized form, 50 wt% or a majority weight percent of ethylene (based on the weight of the copolymer), and an alpha-olefin, as the only two monomer types.

The term, "ethylene/vinylarene copolymer," as used herein, refers to a random copolymer that comprises, in polymerized form, 50 wt% or a majority weight percent of ethylene (based on the weight of the copolymer), and a vinylarene, as the only two monomer types.

The phrase "a majority weight percent,'' as used herein, in reference to a polymer (or interpolymer, or terpolymer or copolymer), refers to the amount of monomer present in the greatest amount in the polymer.

The term "ethylene/vinylarene diblock interpolymer," as used herein, refers to a diblock interpolymer that comprises a vinylarene-rich (AR) segment and a vinylarene-poor (AP) segment See. for example. Figure 1A The AR segment comprises, in polymerized form. > 10 mol% of the vinylarene. The AP segment comprises, in polymerized form, ≤ 10 mol% of the vinylarene. Each mol% is based on the total moles of polymerized monomers in the respective segment. The diblock interpolymer comprises, in polymerized form, ethylene, the vinylarene, and may comprises other monomer types. The term "ethylene/vinylarene diblock copolymer," as used herein, refers to a diblock copolymer that comprises a

vinylarene-rich (AR) segment, as discussed above, and a vinylarene-poor (AP) segment, as discussed above. The diblock copolymer comprises, in polymerized form, ethylene and the vinylarene, as the only two monomer types.

The term "ethylene/alpha-olefin/vinylarene diblock interpolymer," as used herein, refers to a diblock interpolymer that comprises a vinylarene-rich (AR) segment and a vinylarene-poor (AP) segment. See, for example, Figure 1A. The AR segment comprises, in polymerized form, > 10 mol% of the vinylarene. The AP segment comprises, in polymerized form, ≤ 10 mol% of the vinylarene. Each mol% is based on the total moles of polymerized monomers in the respective segment. The diblock interpolymer comprises, in polymerized form, ethylene, the alpha-olefin and the vinylarene, and may comprises other monomer types. The term "elhylene/alpha-olefin/vinylarene diblock terpolymer." as used herein, refers to a diblock terpolymer that comprises a vinylarene-rich (AR) segment, as discussed above, and a vinylarene-poor (AP) segment, as discussed above. The diblock terpolymer comprises, in polymerized form, ethylene, the alpha-olefin, the vinylarene. as the only three monomer ty pes.

The term "ethylene/vinylarene triblock interpolymer." as used herein, refers to a triblock interpolymer that comprises either two vinylarene-rich (AR) segments and one vinylarene-poor (AP) segment located between the AR segments, or two vinylarene-poor (AP) segments and one vinylarene-rich (AR) segment, located between the AP segments. See, for example, Figure 1B. The AR segment comprises, in polymerized form. > 10 mol% of the vinylarene. The AP segment comprises, in polymerized form, ≤ 10 mol% of the vinylarene. Each mol% is based on the total moles of polymerized monomers in the respective segment. The triblock interpolymer comprises, in polymerized form, ethylene, the vinyiarene, and may comprises other monomer types. The term "ethylene/vinylarene triblock copolymer," as used herein, refers to a triblock copolymer that comprises either two vinylarene-rich (AR) segments and one vinylarene-poor (AP) segment. as discussed above, or two vinylarene-poor (AP) segments and one vinylarene-rich (AR) segment, as discussed above. Each AR segment and AP segment are described above. The triblock copolymer comprises, in polymerized form, ethylene and the vinylarene, as the only two monomer types.

The term "ethylene/alpha-olefin/vinylarene triblock interpolymer," as used herein, refers to a triblock interpolymer that comprises either two vinylarene-rich (AR) segments and one vinylarene-poor (AP) segment, located between the AR segments, or two vinylarene-poor (AP) segments and one vinylarene-rich (AR) segment, located between the AP segments. See, for example, Figure 1B. The AR segment comprises, in polymerized form. > 10 mol% of the vinylarene, The AP segment comprises, in polymerized form, ≤ 10 mol% of the vinylarene, Each mol% is based on the total moles of polymerized monomers in the respective segment. The triblock interpolymer comprises, in polymerized form, ethylene, the alpha-olefin, the vinylarene. and may comprises other monomer types. The term "ethylene/alpha-olefin/vinylarene triblock terpolymer." as used herein, refers to a triblock terpolymer that comprises, in polymerized form, either two vinylarene-rich (AR) segments and one vinylarene-poor (AP) segment. as discussed above, or two vinylarene-poor (AP) segments and one vinylarene-rich (AR) segment, as discussed above. Each AR segment and AP segment are described above. The triblock terpolymer comprises, in polymerized form, ethylene, the alpha-olefin and the vinylarene. as the only three monomer types.

The term "vinylarene," as used herein, refers to a chemical compound comprising a "-CR=CHR' (where R and R' are each independently H or an alkyl)" bonded to an aromatic ring structure, such as a monocyclic, bicyclic or tricyclic ring structure. The aromatic ring structure may or may not comprise one or more heteroatom groups, and may or may not be substituted with one or more heteroatom groups. Examples of vinylarenes include, but are not limited to, styrene, 2-vinyl toluene and 4-vinyltoluene, and alpha-methyl styrene.

The term "alkylsilane group," as used herein, refers to a chemical group comprising at least on -Si-R moiety, where R is an alkyl Some examples of such groups include the following: $-CH_2-Si(CH_3)_3$, $-CH_2-Si(H)(CH_3)_2$, $-CH_2-Si(H)_2(CH_3)$, $-Si(CH_3)_3$, $-Si(H)(CH_3)_2$, $-Si(H)_2(CH_3)$.

The term "heteroatom," refers to an atom other than hydrogen or carbon (for example. O, M or P).

The term "heteroatom group" refers to a heteroatom or to a chemical group containing one or more heteroatoms.

The terms "hydrocarbon," "hydrocarbyl group," and similar terms, as used herein. refer to a respective compound or chemical group, etc., containing only carbon and hydrogen atoms. A divalent "hydrocarbylene group" is defined in similar manner.

The terms "heterohydrocarbon," "heterohydrocarbyl group," and similar terms, as used herein, refer to a respective hydrocarbon," or "hydrocarbyl group, etc.. in which at least one carbon atom is substituted with a heteroatom group (for example, O, N or P). The monovalent heterohydrocarbyl group may be bonded to the remaining compound of interest via a carbon atom or via a heteroatom. A divalent "heterohydrocarbylene group" is defined in similar manner: and the divalent heterohydrocarbylene group may be bonded to the remaining compound of interest via two carbon atoms, or two heteroatoms, or a carbon atom and a heteroatom.

The terms "substituted hydrocarbon." "substituted hydrocarbyl group," and similar terms, as used herein, refer to a respective hydrocarbon or hydrocarbyl group, etc., in which one or more hydrogen atoms is/are independently substituted with a heteroatom group.

The terms "substituted heterohydrocarbon," "substituted heterohydrocarbyl group," and similar terms, as used herein, refer to a respective heterohydrocarbon or heterohydrocarbyl group, etc., in which one or more hydrogen atoms

is/are independently substituted with a heteroatom group.

The term "aryl," "aryl group," and similar terms used herein, refer to a monovalent aromatic hydrocarbyl or aromatic hydrocarbyl group, etc., comprising one or more ring structures; for example, a monocyclic, a bicyclic or a tricyclic ring structure.

The term "heteroaryl," "heteroaryl group," and similar terms used herein, refer to a monovalent aryl or aryl group, etc., in which one or more carbon atoms of the backbone ring structure(s) is/are independently replaced with a heteroatom group.

The terms "substituted aryl," "substituted aryl group," and similar terms, as used herein, refer to an aryl or aryl group, etc., in which one or more hydrogen atoms is/are independently substituted with a heteroatom group.

The terms "substituted heteroaryl," "substituted heteroaryl group," and similar terms, as used herein, refer to a heteroaryl or heteroaryl group, etc., in which one or more hydrogen atoms is/are independently substituted with a heteroatom group.

The term "arylene," "arylene group." and similar terms used herein, refer to a divalent aromatic hydrocarbylene or aromatic hydrocarbylene group, etc., comprising one or more ring structures; for example, a monocyclic, a bicyclic or a tricyclic ring structure.

The terms "substituted arylene." "substituted arylene group," and similar terms, as used herein, refer to an arylene or arylene group, etc., in which one or more hydrogen atoms is/are independently substituted with a heteroatom group.

The term "substituted or unsubstituted ($C_1$-$C_{30}$)hydrocarbyl,'' and other like terms, as used herein, denoted the range of total carbon atoms (for example, 1 to 30) that a substituted or unsubstituted hydrocarbyl radical may contain. Note, other monovalent chemical groups (for example, a substituted or unsubstituted ($C_6$-$C_{20}$) aryl group) with a noted carbon range are defined in like manner.

The term "substituted or unsubstituted ($C_1$-$C_{30}$)heterohydrocarbyl," and other like terms, as used herein, denoted the range of total carbon atoms (for example, 1 to 30) that a "substituted or unsubstituted heterohydrocarbyl radical may contain. Note, other monovalent chemical groups with a noted carbon range are defined in like manner.

The term "substituted or unsubstituted ($C_6$-$C_{20}$) arylene group," and other like terms, as used herein, denote the range of total carbon atoms (for example 2 to 6) that a substituted or unsubstituted arylene group may contain. Note, other divalent chemical groups with a noted carbon range are defined in like manner.

The term "bridging group," as used herein, in reference to a metal complex, refers to a divalent organic group that is bonded to two atoms, located at different points in the remaining structure of the metal complex. For example, see the bridging groups of each of Formulas S1 ($J^1$), S2 ($J^2$), S3 ($J^3$), S4 ($J^4$), S5 ($J^5$), H2 ($J^5$).

The phrase "bridging group comprising from 2 to 40 atoms other than hydrogen," and similar phrases, as used herein, in reference to a metal complex, denote the range of total atoms other than hydrogen (for example 2 to 40) that an bridging group may contain. Note, other bridging groups with a noted carbon range are defined in like manner.

The term "Lewis base," as used herein, in reference to a metal complex, refers to a chemical compound or chemical group that can donate a pair of electrons to form a bond with a metal or another chemical group Examples of Lewis bases include, but are not limited to, tetrahydrofuran (THF), diethylether, dimethylaniline, or trimethylphosphine.

The terms "syndiotacticity." "syndiotactic," and similar terms, as used herein, in reference to polymerized vinylarene units. refer to an alternating stereochemical configuration of two or more pendant aryl (for example, phenyl) groups. See for example, subsegment sbb.

The term "polymer structure," in reference to Structures 1, 2 and 3, refers to the entire molecule of the noted ethylene/vinylarene diblock interpolymer or ethylene/vinylarene triblock interpolymer.

The notation "AR," in reference to a diblock or triblock interpolymer, refer to a polymer segment of the respective interpolymer that comprises, in polymerize form, > 10 mol% of a vinylarene This notation refers to a "vinylarene-rich" segment.

The notation "AP," in reference to a diblock or triblock interpolymer, refer to a polymer segment of the respective interpolymer that comprises, in polymerize form, ≤ 10 mol% of a vinylarene. This notation refers to a "vinylarene-poor" segment.

The phrase "each segment," in reference to an AR segment (or block) or an AP segment (or block), refers to an AR segment or an AP segment located at the end of the polymer molecule or within the polymer molecule. In reference to a diblock interpolymer. an AR segment is located at one end of a polymer molecule, and an AP segment is located at the other end of the polymer molecule. In reference to a triblock interpolymer, two AR segments are located at each end of a polymer molecule and an AP segment is located between these two AR segments, or two AP segments are located at each end of a polymer molecule and an AR segment is located between these two AP segments.

The term "solution polymerization," as used herein, refers to a polymerization process in which the monomer(s), catalyst(s) and formed polymer are all soluble in the polymerization solvent or solvent blend of two or more solvents. The term "continuous solution polymerization," as used herein, refers to a solution polymerization in which monomer(s) are continually fed to a reactor, and polymer is continually removed from the reactor.

The term "metal complex." as used herein, refers to a chemical structure comprising a metal or metal ion that is bonded and/or coordinated to one or more ligands (ions or molecules that contain one or more pairs of electrons that can be shared with the metal). See for example, the metal complexes of Formulas S1, S2, S3. S4, S5, H1 and H2 The metal complex is typically rendered catalytically active by the use of one or more cocatalysts.

The term "scavenger," as used herein, refers to a chemical compound added to a polymerization reaction to remove or deactivate impurities or unwanted reaction products (for example, oxygen). Examples of some scavenger include aluminum alkyl compounds, such as MMAO and MMAO-3A.

The term "reactor product," as used herein, refers to the final polymerization mixture in a reactor, and which comprises one or more polymer(s), and typically solvent,

The terms "comprising," "including," "having," and their derivatives, are not intended to exclude the presence of any additional component, step or procedure, whether the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of" excludes any component, step or procedure, not specifically delineated or listed.

**Listing of Some Processes and Compositions**

A] A process to form a composition comprising an ethylene/vinylarene diblock interpolymer and/or an ethylene/vinylarene triblock interpolymer, and further ethylene/vinylarene diblock interpolymer or an ethylene/vinylarene triblock interpolymer, said process comprising at least the following steps:

A) polymerizing in a reactor A, a mixture A comprising ethylene, and optionally an alpha-olefin, and optionally a vinylarene, in the presence of at least the following: a) a metal complex S selected from the following: Formula S1, Formula S2, Formula S3. Formula S4, or Formula S5:

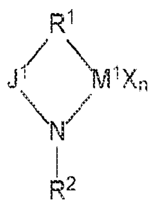

(Formula S1),

as described above (see Summary of the Invention (SOI)):

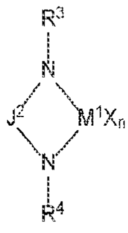

(Formula S2),

as described above (see SOI); and with respect to each of $R^3$ and $R^4$ is independently selected from a substituted or an unsubstituted $(C_6\text{-}C_{20})$aryl group, or a substituted or an unsubstituted $(C_5\text{-}C_{20})$heteroaryl group; further each of $R^3$ and $R^4$ is independently selected from a substituted or an unsubstituted $(C_6\text{-}C_{12})$aryl group, or a substituted or an unsubstituted $(C_5\text{-}C_{11})$heteroaryl group;

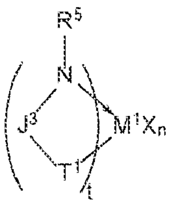

(Formula S3),

as described above (see SOI);

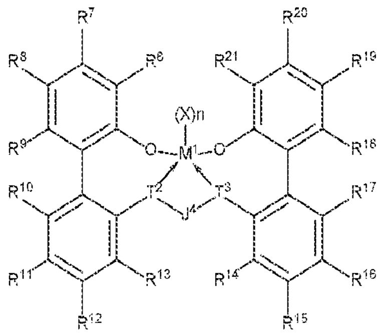

(Formula S4),

as described above (see SOI);

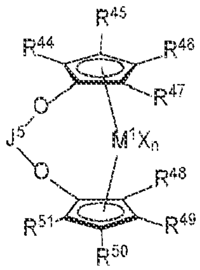

(Formula S5),

as described above (see SOI);

B) polymerizing in a reactor B. a mixture B comprising ethylene, a vinylarene, and optionally an alpha-olefin, in the presence of at least the following:

wherein the metal complex is overall charge-neutral: or

b) a metal complex H selected from the following Formula H1 or Formula H2:

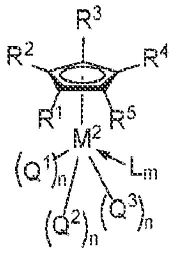

(Formula H1),

as described above (see SOI);

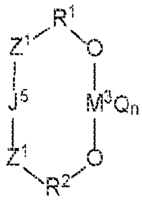

(Formula H2),

as described above (see SOI); and with respect to $R^1$ and $R^2$ are each independently a bridging group comprising from 2 to 41 atoms other than hydrogen, and wherein, optionally, $R^1$ and $R^2$ each independently may be a substituted or unsubstituted arylene group; further $R^1$ and $R^2$ each independently may be an arylene group (unsubstituted);

wherein step A occurs before step B. and at least a portion, and further ≥ 50 wt%, or ≥ 80 wt%, or ≥ 90 wt%, or ≥ 98 wt%, of the reactor product in reactor A is transferred to reactor B; or step B occurs before step A, and at least a portion, and further ≥ 50 wt%, or ≥ 80 wt%, or ≥ 90 wt%, or ≥ 98 wt%, of the reactor product in reactor B is transferred to reactor A: and wherein each wt% is based on the total weight of the respective reactor product; and

wherein if step A occurs before step B, then at least one chain shuttling agent is fed into the reactor A; and wherein if step B occurs before step A. then at least one chain shuttling agent is fed into the reactor B; and wherein the vinylarene in step A = the vinylarene in step B: and the alpha-olefin in step A = the alpha-olefin in step B.

B] The process of A] above, wherein, the metal complex S is selected from the following: Formula S1a or Formula S2a:

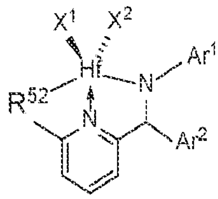

(Formula S1a),

wherein $X^1$ and $X^2$ are each independently selected from a substituted or unsubstituted $(C_1-C_{30})$hydrocarbyl, a substituted or unsubstituted $(C_1-C_{30})$heterohydrocarbyl, or -H, and further a substituted or unsubstituted benzyl, or -H; and wherein $X^1$ and $X^2$ may optionally be linked:

$Ar^1$ and $Ar^2$ are each, independently, a substituted or unsubstituted aryl or a substituted or unsubstituted heteroaryl group,

$R^{52}$ is a substituted or unsubstituted arylene group;

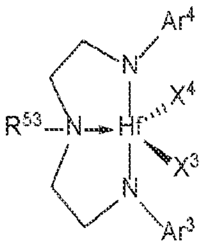

(Formula S2a),

wherein $X^3$ and $X^4$ are each independently selected from a substituted or unsubstituted $(C_1-C_{30})$hydrocarbyl, a substituted or unsubstituted $(C_1-C_{30})$heterohydrocarbyl, or -H, and further a substituted or unsubstituted benzyl, or -H; and wherein $X^3$ and $X^4$ may optionally be linked;

$R^{53}$ is selected from a substituted or unsubstituted $(C_1-C_{30})$hydrocarbyl, a substituted or unsubstituted $(C_1-C_{30})$ heterohydrocarbyl, or -H. and further a substituted or unsubstituted benzyl, or -H;

$Ar^3$ and $Ar^4$ are each, independently, a substituted or unsubstituted aryl or a substituted or unsubstituted heteroaryl group.

C] The process of A] or B] above, wherein, metal complex S selected from the following structures: s1a1, s1a2, s1a3, s1a4, s1a5, s2a1, s3a1, s3a2, s3a3, s4al or s5al, and further any combination of two or more of these structures:

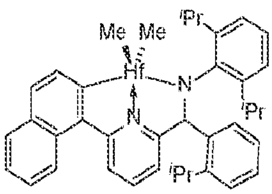 (s1a1), 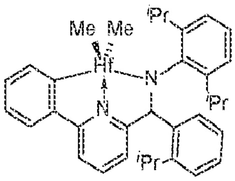 (s1a2). 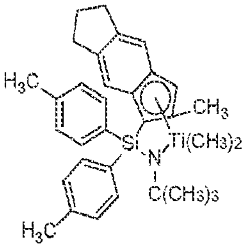 (s1a3),

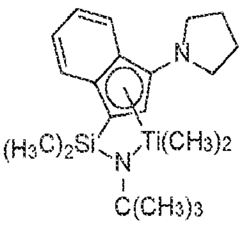 (s1a4), 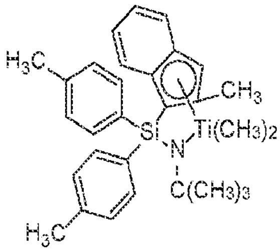 (s1a5), 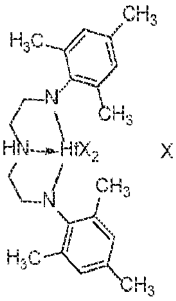 X = $CH_2C_6H_5$ (s2a1),

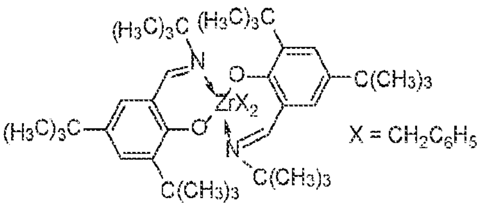

(s3a1), 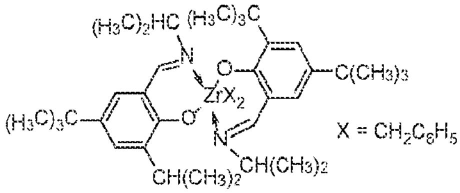

(s3a2)

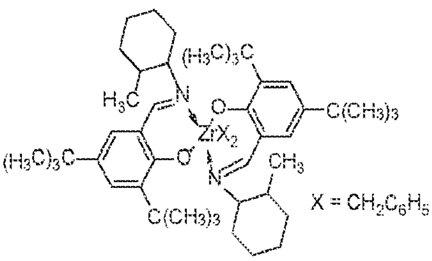

(s3a3), 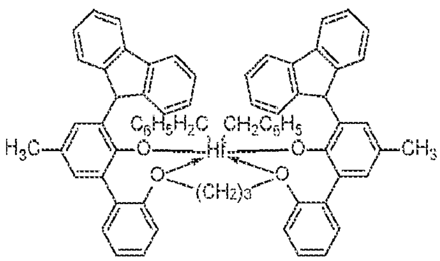 (s4a1),

or

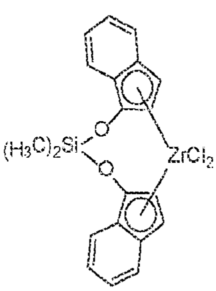 (s5a1).

D] The process of any one of A]-C] (A] through C]) above, wherein, the metal complex S is selected from structure s1a1 or structure s1a2:

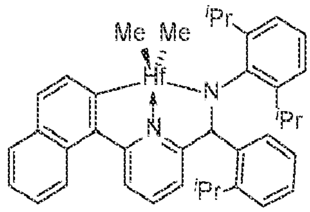 (s1a1) or 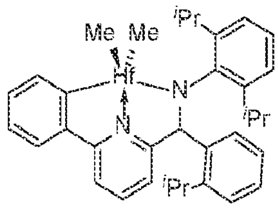 (s1a2).

E] The process of A]-D] above, wherein, the metal complex H is selected from the following: Formula H1a, Formula H1b, or Formula H2a:

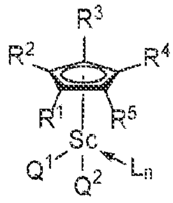 (Formula H1a),

wherein $R^1$, $R^2$, $R^3$, $R^4$, and $R^5$ are each independently H, a substituted or unsubstituted hydrocarbyl group, a substituted or unsubstituted heterohydrocarbyl group; and further H, an alkyl group or an alkylsilyl group; and further an alkyl group or an alkylsilyl group;

$Q^1$ and $Q^2$ are each independently a substituted or unsubstituted hydrocarbyl group; a substituted or unsubstituted heterohydrocarbyl group; or a halogen; and further an aryl group; an alkylsilyl group, an alkoxy group, a halogen, or -NRR', wherein R and R' are each independently a hydrocarbyl or an SiR", where R" is an hydrocarbyl; and further an aryl group, an alkylsilyl group or an alkoxy group; and
L is a Lewis base, each n is independently 0 or 1; and
wherein optionally at least one L group and at least one Q group are connected, and optionally at least one R group and at least one Q group are connected;

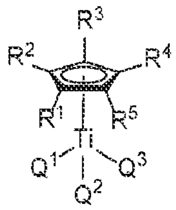 (Formula H1b),

wherein $R^1$, $R^2$, $R^3$, $R^4$, and $R^5$ are each independently H, a substituted or unsubstituted hydrocarbyl group, or a substituted or unsubstituted heterohydrocarbyl group; and further H an alkyl group or an alkylsilyl group, and further an alkyl group or an alkylsilyl group;
$Q^1$, $Q^2$ and $Q^3$ are each independently a substituted or unsubstituted hydrocarbyl group; a substituted or unsubstituted heterohydrocarbyl group: or a halogen: and further an aryl group: an alkylsilyl group, an alkoxy group, a halogen, or -NRR', wherein R and R' are each independently a hydrocarbyl or an SiR", where R" is an hydrocarbyl; and further an aryl group, an alkoxy group or a halogen; and
wherein optionally at least one R group and at least one Q group are connected;

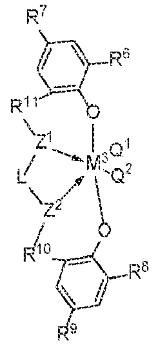

(Formula H2a),

wherein $M^2$ is Ti, Hf, or Zr, and further Zr or Hf, and further Zr; and wherein:

$R^6$ and $R^8$ are each independently selected from the group consisting of -H, a substituted or unsubstituted $(C_1\text{-}C_{40})$hydrocarbyl, a substituted or unsubstituted $(C_1\text{-}C_{40})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)$-, $R^CS(O)_2$-, $(R^C)_2C$=N-, $R^CC(O)O$-, $R^COC(O)$-, $R^CC(O)N(R)$-, $(R^C)_2NC(O)$-, halogen, radicals having formula (I), radicals having formula (II), and radicals having formula (III):

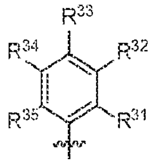

(I),

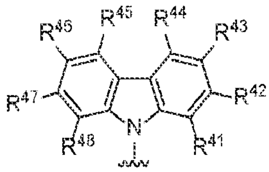

(II),

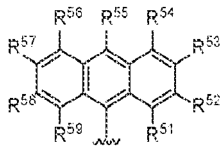

(III),

where each of $R^{31\text{-}35}$, $R^{41\text{-}48}$, and $R^{51\text{-}59}$ is independently selected from a substituted or unsubstituted $(C_1\text{-}C_{40})$ hydrocarbyl, a substituted or unsubstituted $(C_1\text{-}C_{40})$heterohydrocarbyl, $-Si(R^C)_3$, $-Ge(R^C)_3$, $-P(R^P)_2$, $-N(R^N)_2$, $-N=CHR^C$, $-OR^C$, $-SR^C$, $-NO_2$, -CN, $-CF_3$, $R^CS(O)$-, $R^CS(O)_2$-, $(R^C)_2C$=N-, $R^CC(O)O$-, $R^COC(O)$-, $R^CC(O)N(R^N)$-, $(R^C)_2NC(O)$-, halogen, or -H;

each of $R^7$ and $R^9$ is independently selected from a substituted or unsubstituted $(C_1\text{-}C_{40})$hydrocarbyl, a substituted or unsubstituted $(C_1\text{-}C_{40})$heterohydrocarbyl, $-Si(R^C)_3$, $-Ge(R^C)_3$, $-P(R^P)_2$, $-N(R^N)_2$, $-N=CHR^C$, $-OR^C$, $-SR^C$, $-NO_2$, -CN, $-CF_3$, $R^CS(O)$-, $R^CS(O)_2$-, $(R^C)_2C$=N-, $R^CC(O)O$-, $R^COC(O)$-, $R^CC(O)N(R^N)$-, $(R^C)_2NC(O)$-, halogen, or -H;

$R^{10}$ is optional, and if present is a substituted or unsubstituted $(C_1\text{- }C_{40})$hydrocarbylene or a substituted or unsubstituted $(C_1\text{-}C_{40})$heterohydrocarbylene;

$R^{11}$ is optional, and if present is a substituted or unsubstituted $(C_1\text{-}C_{40})$hydrocarbylene or a substituted or unsubstituted $(C_1\text{-}C_{40})$heterohydrocarbylene;

Q1 and Q2 are each independently a substituted or unsubstituted hydrocarbyl group or a halogen, and further an aryl group, an alkoxy group or a halogen;

L is a substituted or unsubstituted $(C_1\text{-}C_{40})$hydrocarbylene or a substituted or unsubstituted $(C_1\text{-}C_{40})$hetero-hydrocarbylene, wherein the substituted or unsubstituted $(C_1\text{-}C_{40})$hydrocarbylene has a portion that comprises a 1-carbon atom to 10-carbon atom linker backbone, linking the two Z groups in Structure H2a (to which L is bonded); or the substituted or unsubstituted $(C_1\text{-}C_{40})$heterohydrocarbylene has a portion that comprises a 1 -atom to 10-atom linker backbone, linking the two Z groups in Structure H2a. wherein each of the 1 to 10 atoms of the 1-atom to 10-atom linker backbone of the substituted or unsubstituted $(C_1\text{-}C_{40})$heterohydrocarbylene, independently, is a carbon atom or heteroatom of a heteroatom group, wherein each heteroatom group is independently O, S. S(O), $S(O)_2$, $Si(R^C)_2$, $Ge(R^C)_2$, $P(R^C)$, or $N(R^C)$, wherein, independently, each $R^C$ is a substituted or unsubstituted $(C_1\text{-}C_{30})$hydro-carbyl or a substituted or unsubstituted $(C_1\text{-}C_{30})$heterohydrocarbyl; and wherein each $R^P$, $R^N$, and remaining $R^C$ in Formula H2a is independently a substituted or unsubstituted $(C_1\text{-}C_{30})$hydrocarbyl, a substituted or unsubstituted $(C_1\text{-}C_{30})$heterohydrocarbyl, or -H; and

and each of $Z^1$ and $Z^2$ is independently selected from -S, $-N(R^N)$, or $-P(R^P)$, wherein $R^N$ and $R^P$ are defined above.

F] The process of A]-E] above, wherein, the metal complex H is selected from the following formulas h1a1, h1a2. h1a3, h1b1, h lb2, h1b3, h2al or h2a2 (note: Bn ::: benzyl group ($Ph\text{-}CH_2$-)):

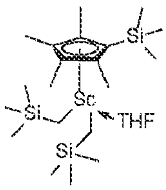 (h1a1), 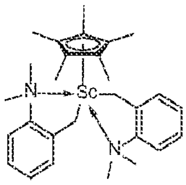 (h1a2), 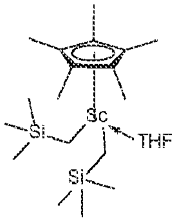 (h1a3), 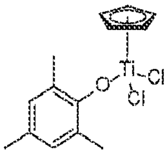 (h1b1),

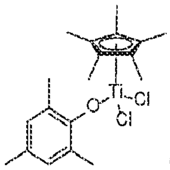 (h1b2), 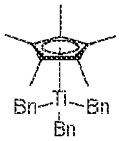 (h1b3), 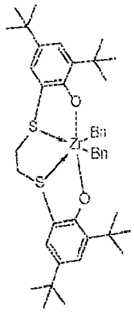 (h2a1), or 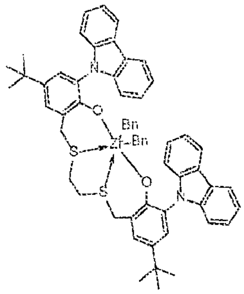 (h2a2).

G] The process of any one of A]-F] above, wherein the metal complex S is selected from Formula S1, and further Formula S1a.

H] The process of any one of A]-F] above, wherein the metal complex S is selected from Formula S2, and further Formula S2a.

I] The process of any one of A]-F] above, wherein the metal complex S is selected from Formula S3.

J] The process of any one of A]-F] above, wherein the metal complex S is selected from Formula S4.

K] The process of any one of A]-F] above, wherein the metal complex S is selected from Formula S5.

L] The process of any one of A]-K] above, wherein the metal complex H is selected from Formula H1, and further Formula H1a or Formula H1b.

M] The process of any one of A]-K] above, wherein the metal complex H is selected from Formula H2. and further Formula H2a.

N] The process of any one of A]-M] above, wherein the at least one chain shuttling agent is selected from the following: an alkyl zinc compound, an alkyl aluminum compound, a dual headed chain shuttling agent, or a combination thereof.

O] The process of any one of A]-N] above, wherein the at least one chain shuttling agent is selected from the following: $Zn(CH_2CH_3)_2$, $Al(CH_2CH_3)_3$, an Al-DHCSA, a ZnAl-DHCSA or a combination thereof, and further an Al-DHCSA, a ZnAl-DHCSA or a combination thereof.

P] The process of any one of A]-O] above, wherein the at least one chain shuttling agent is added to reactor A.

Q] The process of any one of A]-O] above, wherein the at least one chain shuttling agent is added to reactor B.

R] The process of any one of A]-O] above, wherein the at least one chain shuttling agent is added to both reactor A and reactor B.

S] The process of any one of A]-R] above, wherein step A occurs before step B.

T] The process of S] above, wherein unreacted monomer in reactor B is recycled back to reactor A.

U] The process of any one of A]-R] above, wherein step B occurs before step A.

V] The process of U] above, wherein unreacted monomer in reactor A is recycled back to reactor B.

W] The process of any one of A]-V] above, wherein, the polymerization is a solution polymerization, and further a continuous solution polymerization.

X] The process of any one of A]-W] above, wherein, in reactor A, the polymerization takes place at a temperature ≥ 90°C, or ≥ 95°C, or ≥ 100°C, or ≥ 105°C, or ≥ 110°C, or ≥ 115°C.

Y] The process of any one of A]-X] above, wherein, in reactor A, the polymerization takes place at a temperature ≤ 200°C, or ≤ 190°C, or ≤ 180°C, or ≤ 170°C, or ≤ 160°C, or ≤ 150°C, or ≤ 145°C, or ≤ 140°C, or ≤ 135°C, or ≤ 130°C. or ≤ 125°C,

Z] The process of any one of A]-Y] above, wherein, in reactor B, the polymerization takes place at a temperature ≥ 90°C, or ≥ 95°C, or ≥ 100°C, or ≥ 105°C, or ≥ 110°C, or ≥ 115°C.

A2] The process of any one of A]-Z] above, wherein, in reactor B. the polymerization takes place at a temperature ≤ 200°C, or ≤ 190°C, or ≤ 180°C, or ≤ 170°C, or ≤ 160°C, or ≤ 150°C, or ≤ 145°C, or ≤ 140°C, or ≤ 135°C, or ≤ 130°C, or ≤ 125°C.

B2] The process of any one of A]-A2] above, wherein the polymerization in reactor A takes place at a pressure ≥ 90 psig, or ≥ 100 psig, or ≥ 110 psig, or ≥ 120 psig, or ≥ 130 psig, or ≥ 140 psig, or ≥ 150 psig, or ≥ 160 psig, or ≥ 170 psig, or ≥

180 psig.

C2] The process of any one of A]-B2] above, wherein the polymerization in reactor A takes place at a pressure ≤ 250 psig, or ≤ 240 psig, or ≤ 230 psig, or ≤ 220 psig, or ≤ 210 psig, or ≤ 200 psig.

D2] The process of any one of A]-C2] above, wherein the polymerization in reactor B takes place at a pressure ≥ 90 psig, or ≥ 100 psig, or ≥ 110 psig, or ≥ 120 psig, or ≥ 130 psig, or ≥ 140 psig, or ≥ 150 psig, or ≥ 160 psig, or ≥ 170 psig, or ≥ 180 psig.

E2] The process of any one of A]-D2] above, wherein the polymerization in reactor B takes place at a pressure ≤ 250 psi, or ≤ 240 psi, or ≤ 230 psi, or ≤ 220 psi, or ≤ 210 psi, or ≤ 200 psi.

F2] The process of any one of A]-E2] above, wherein, for the ethylene/vinylarene diblock interpolymer or the ethylene/vinylarene triblock interpolymer, the vinylarene is styrene.

G2] The process of any one of A]-F2] above, wherein the mixture A comprises the alpha-olefin.

H2] The process of G2] above, wherein the alpha-olefin is a C3-C20 alpha-olefin, further a C3-C10 alpha-olefin, further a C3-C8 alpha-olefin, further propylene, 1-butene, 1-hexene or l-octene, further propylene. 1-butene or 1-octene, further 1-butene or 1-octene, further 1-octene.

12] The process of any one of A]-H2] above, wherein the mixture B comprises the alpha-olefin.

J2] The process of I2] above, wherein the alpha-olefin is a C3-C20 alpha-olefin, further a C3-C10 alpha-olefin, further a C3-C8 alpha-olefin, further propylene, 1-butene, l-hexene or 1-octene, further propylene, 1-butene or 1-octene, further 1-butene or 1-octene, further 1-octene.

K2] The process of any one of A]-J2] above, wherein the molar ratio of "the metal of complex S" to "the metal of complex H" is ≥ 0.03, or ≥ 0. 1, or ≥ 0.5.

L2] The process of any one of A]-K2] above, wherein the molar ratio of "the metal of complex S’’ to "the metal of complex H" is ≤ 1000, or ≤ 500, or ≤ 100.

M2] The process of any one of A]-L2] above, wherein the molar ratio of "the metal of the chain shuttling agent" to "the sum of the metal of complex S and the metal of complex H’’ is ≥ 2.0, or ≥ 5.0, or ≥ 10, or ≥ 20, or ≥ 40, or ≥ 100.

N2] The process of any one of A]-M2] above, wherein the molar ratio of "the metal of the chain shuttling agent" to "the sum of the metal of complex S and the metal of complex H’’ is ≤ 1(XX), or ≤ 800, or ≤ 500.

O2] The process of any one of A]-M2| above, wherein metal complex S has a reactivity ratio, $r_{(ethylene)(vinylarene)} = k_{(ethylcne)(cthylcne)}/k_{(ethylene)(vinylarene)}$, from 50 to 1000, further from 100 to 500.

P2] The process of any one of A]-O2] above, wherein metal complex H has a reactivity ratio, $r_{(ethylene)(vinylarene)} = k_{(ethylene)(ethylene)}/k_{(ethylene)(vinylarene)}$, from 1 to 10.

Q2] The process of any one of A]-P2] above, wherein composition further comprises a polyethylene homopolymer, an ethylene/vinylarene copolymer, an ethylene/alpha-olefin copolymer, or a combination thereof.

R2] A composition formed from the process of any one of A]-Q2] above.

A3] A composition comprising an ethylene/vinylarene diblock interpolymer or an ethylene/vinylarene triblock interpolymer, said diblock interpolymer comprising at least one polymer structure selected from Structure 1, as shown below, and said triblock interpolymer comprising at least one polymer structure selected from Structure 2 or Structure 3. each as shown below, where AR refers to vinylarene-rich and AP refers to vinylarene-poor:

(AR)-(AP) (Structure 1).

(AR)-(AP)-(AR) (Structure 2).

(AP)-(AR)-(AP) (Structure 3):

and

wherein each (AR) segment independently comprises, in polymerized form, ethylene, the vinylarene and optionally an alpha-olefin; and

wherein each (AP) segment independently comprises, in polymerized form, ethylene, optionally the vinylarene and optionally the alpha-olefin; and

wherein each (AR) segment independently comprises, in polymerized form, > 10 mol% of the vinylarene, based on the total moles of polymerized monomers in the (AR) segment; and

wherein each (AP) segment independently comprises, in polymerized form. ≤ 10 mol% of the vinylarene, based on the total moles of polymerized monomers in the (AP) segment.

B3] The composition of A3] above, wherein, for the ethylene/vinylarene diblock interpolymer or the ethylene/vinylarene triblock interpolymer, each (AR) segment independently comprises, in polymerized form, ≥ 15 mol%, or ≥ 20 mol%, or ≥ 25 mol%, or ≥ 30 mol%, or ≥ 35 mol%, or ≥ 40 mol%, or ≥ 45 mol%, or ≥ 50 mol%, or ≥ 55 mol%, or ≥ 60 mol%,

of the vinylarene, based on the total moles of polymerized monomers in the (AR) segment.

C3] The composition of A3] or B3] above, wherein for the ethylene/vinylarene diblock interpolymer or the ethylene/vinylarene triblock interpolymer, each (AR) segment independently comprises, in polymerized form, < 100 mol%, or ≤ 98 mol%, or ≤ 96 mol%, or ≤ 94 mol%, or ≤ 92 mol%, or ≤ 91 mol% of the vinylarene, based on the total moles of polymerized monomers in the (AR) segment

D3] The composition of any one of A3]-C3] above, wherein, for the ethylene/vinylarene diblock interpolymer or the ethylene/vinylarene triblock interpolymer, each (AP) segment independently comprises, in polymerized form, ≥ 0 mol%, or ≥ 0.2 mol%, or ≥ 0.4 mol%, or ≥ 0.6 mol%, or ≥ 0.8 mol%, or ≥ 1.0 mol% of the vinylarene, based on the total moles of polymerized monomers in the (AP) segment.

E3] The composition of any one of A3]-D3] above, for the ethylene/vinylarene diblock interpolymer or the ethylene/vinylarene triblock interpolymer, each (AP) segment independently comprises, in polymerized form, ≤ 10 mol%, or ≤ 9.0 mol%, or ≤ 8.0 mol%, or ≤ 7.0 mol%, or ≤ 6.0 mol%, or ≤ 5.0 mol% of the vinylarene, based on the total moles of polymerized monomers in the (AP) segment.

F3] The composition of any one of A3]-E3] above, wherein, for the ethylene/vinylarene diblock interpolymer or the ethylene/vinylarene triblock interpolymer, each (AR) segment independently comprises, in polymerized form, ≥ 2.0 mol%, or ≥ 4.0 mol%, or ≥ 6.0 mol%, or ≥ 8.0 mol%, or ≥ 9.0 mol%, or ≥ 10 mol%, or ≥ 11 mol%, or ≥ 12 mol%, or ≥ 13 mol%, or ≥ 14 mol% of ethylene, based on the total moles of polymerized monomers in the (AR) segment.

G3] The composition of any one of A3]-F3] above, wherein, for the ethylene/vinylarene diblock interpolymer or the ethylene/vinylarene triblock interpolymer, each (AR) segment independently comprises, in polymerized form. ≤ 80 mol%, or ≤ 77 mol%, or ≤ 75 mol%, or ≤ 73 mol%, or ≤ 70 mol%, or ≤ 65 mol%, or ≤ 60 mol%, or ≤ 55 mol%, or ≤ 50 mol%, or ≤ 45 mol%, or ≤ 40 mol% of ethylene, based on the total moles of polymerized monomers in the (AR) segment.

H3] The composition of any one of A3]-G3] above, wherein, for the ethylene/vinylarene diblock interpolymer or the ethylene/vinylarene triblock interpolymer, each (AP) segment independently comprises, in polymerized form, ≥ 50 mol%, ≥ 52 mol%, or ≥ 54 mol%, or ≥ 56 mol%, or ≥ 58 mol%, or ≥ 60 mol%, or ≥ 62 mol%, or ≥ 64 mol%, or ≥ 66 mol%, or ≥ 68 mol%, or ≥ 70 mol% of ethylene, based on the total moles of polymerized monomers in the (AP) segment

13] The composition of any one of A3]-H3] above, wherein, for the ethylene/vinylarene diblock interpolymer or the ethylene/vinylarene triblock interpolymer, each (AP) segment independently comprises, in polymerized form, ≤ 100 mol%, or ≤ 98 mol%, or ≤ 96 mol%, or ≤ 94 mol%, or ≤ 92 mol%, or ≤ 90 mol% of ethylene, based on the total moles of polymerized monomers in the (AP) segment.

J3] The composition of any one of A3]-I3] above, wherein, for the ethylene/vinylarene diblock interpolymer or the ethylene/vinylarene triblock interpolymer, each (AR) segment independently comprises, in polymerized form, ≥ 0 mol%, ≥ 1.0 mol%, or ≥ 2.0 mol%, or ≥ 3.0 mol%, or ≥ 4.0 mol%, of the alpha-olefin, based on the total moles of polymerized monomers in the (AR) segment.

K3] The composition of any one of A3]-J3] above, wherein, for the ethylene/vinylarene diblock interpolymer or the ethylene/vinylarene triblock interpolymer, each (AR) segment independently comprises, in polymerized form. ≤ 10 mol%, ≤ 9.0 mol%, or ≤ 8.0 mol%, or ≤ 7.0 mol%, or ≤ 6.0 mol%, of the alpha-olefin, based on the total moles of polymerized monomers in the (AR) segment.

L3] The composition of J3] or K3] above, wherein, the alpha-olefin is a C3-C20 alpha-olefin, further a C3-C10 alpha-olefin, further a C3-C8 alpha-olefin, further propylene, 1-butene, 1-hexene or 1-octene, further propylene, 1-butene or 1-octene, further 1-butene or 1-octene, further 1-octene.

M3] The composition of any one of A3]-L3] above, wherein, for the ethylene/vinylarene diblock interpolymer or the ethylene/vinylarene triblock interpolymer, each (AR) segment does not comprises, in polymerized form, the alpha-olefin.

N3] The composition of any one of A3]-M3] above, wherein, for the ethylene/vinylarene diblock interpolymer or the ethylene/vinylarene triblock interpolymer, each (AP) segment independently comprises, in polymerized form, ≥ 0 mol%, ≥ 1.0 mol%, or ≥ 2.0 mol%, or ≥ 3.0 mol%, or ≥ 4.0 mol%, or ≥ 6.0 mol%, or ≥ 8.0 mol%, or ≥ 10 mol% of the alpha-olefin, based on the total moles of polymerized monomers in the (AP) segment.

03] The composition of any one of A3]-N3] above, wherein, for the ethylene/vinylarene diblock interpolymer or the ethylene/vinylarene triblock interpolymer, each (AP) segment independently comprises, in polymerized form, ≤ 40 mol%, or ≤ 35 mol%, or ≤ 30 mol%, or ≤ 28 mol%, or ≤ 26 mol%, or ≤ 24 mol%, or ≤ 22 mol%, or ≤ 20 mol% of the alpha-olefin, based on the total moles of polymerized monomers in the (AP) segment.

P3] The composition of N3] or O3] above, wherein, the alpha-olefin is a C3-C20 alpha-olefin, further a C3-C10 alpha-olefin, further a C3-C8 alpha-olefin, further propylene. 1-butene, 1-hexene or 1-octene, further propylene, 1-butene or 1-octene, further 1-butene or 1-octene, further 1-octene.

Q3] The composition of any one of A3]-P3] above, wherein, for the ethylene/vinylarene diblock interpolymer or the ethylene/vinylarene triblock interpolymer. ≥ 20 mol%, or ≥ 40 mol%, or ≥ 60 mol%, or ≥ 80 mol%, or ≥ 85 mol%, or ≥ 90 mol%, or ≥ 92 mol%, or ≥ 94 mol%, or ≥ 96 mol%, or ≥ 98 mol%, or ≥ 99 mol% of the polymerized vinylarene in each (AR) segment is present in a "back to back" configuration as shown below in subsegment bb:

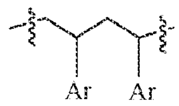

(subsegment bb); and wherein the mol% is based on the total moles of polymerized vinylarene in the (AR) segment.

R3] The composition of any one of A3]-Q3] above, wherein, for the ethylene/vinylarene diblock interpolymer or the ethylene/vinylarene triblock interpolymer, ≤ 100 mol% of the polymerized vinylarene in each (AR) segment is present in a "back to back" configuration as shown below in subsegment bb above.

S3] The composition of any one of A3]-R3] above, wherein, for the ethylene/vinylarene diblock interpolymer or the ethylene/vinylarene triblock interpolymer, ≥ 20 mol%, or 2: 40 mol%, or ≥ 60 mol%, or ≥ 80 mol%, or ≥ 85 mol%, or ≥ 90 mol%, or ≥ 92 mol%, or ≥ 94 mol%, or ≥ 96 mol%, or ≥ 98 mol%, or ≥ 99 mol% of the polymerized vinylarene in each (AR) segment is present in a syndiotactic "back to back" configuration as shown below in subsegment sbb:

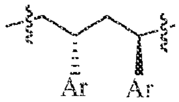

(subsegment sbb); and wherein the mol% is based on the total moles of polymerized vinylarene in the (AR) segment.

T3] The composition of any one of A3]-S3] above, wherein, for the ethylene/vinylarene diblock interpolymer or the ethylene/vinylarene triblock interpolymer. 5 100 mol% of the polymerized vinylarene in each (AR) segment is present in a syndiotactic "back to back'' configuration as shown in subsegment sbb above.

U3] The composition of any one of A3]-T3] above, wherein, for the ethylene/vinylarene diblock interpolymer or the ethylene/vinylarene triblock interpolymer, ≥ 0 and ≤ 5.0 mol%, or ≤ 2.0 mol%, or ≤ 1.0 mol%, or ≤ 0.5 mol%, or ≤ 0.2 mol%, or ≤ 0.1 mol% of the polymerized vinylarene in each (AP) segment is present in a "back to back" configuration as shown below in subsegment bb:

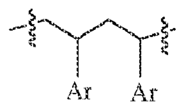

(subsegment bb): and wherein the mol% is based on the total moles of polymerized vinylarene in the (AP) segment.

V3] The composition of any one of A3]-U3] above, wherein, for the ethylene/vinylarene diblock interpolymer or the ethylene/vinylarene triblock interpolymer, none of the polymerized vinylarene in each (AP) segment is present in a "back to back" configuration as shown in subsegment bb above

W3] The composition of any one of A3]-V3] above, wherein, for the ethylene/vinylarene diblock interpolymer or the ethylene/vinylarene triblock interpolymer, the vinylarene is styrene.

X3] The composition of any one of A3]-W3] above, wherein the ethylene/vinylarene diblock interpolymer is an ethylene/alpha-olefin/vinylarene diblock interpolymer and further a terpolymer, or the ethylene/vinylarene triblock interpolymer is an ethylene/alpha-olefin/vinylarene triblock interpolymer and further a terpolymer.

Y3] The composition of any one of A3]-X3] above, wherein the ethylene/vinylarene diblock interpolymer, or the ethylene/vinylarene triblock interpolymer has a Tml ≥ 50°C, or ≥ 55°C, or ≥ 60°C, or :_> 70°C, and a Tm2 ≥ 120°C. or ≥ 124°C, or> 150°C, or ≥ 170°C, or> 200°C, or ≥ 210°C, or ≥ 220°C, or ≥ 230°C.

Z3] The composition of any one of A3]-Y3] above, wherein the ethylene/vinylarene diblock interpolymer, or the ethylene/vinylarene triblock interpolymer has a Tml ≤ 120°C, or ≤ 115°C, or ≤ 110°C, or ≤ 105°C, and a Tm2 ≤ 270°C, or ≤ 265°C, or ≤ 260°C, or ≤ 255°C. or ≤ 250°C, or ≤ 245°C.

A4] The composition of any one of A3]-Z3] above, wherein the ethylene/vinylarene diblock interpolymer, or the ethylene/vinylarene triblock interpolymer has a Tg1 ≥ -70°C, or ≥ -68°C, or ≥ -66°C, or ≥ -64°C, or ≥ -62°C, and a Tg2 ≥ 2.0°C, or ≥ 5.0°C, or ≥ 10°C, or ≥ 15°C, or ≥ 20°C, or ≥ 30°C.

B4] The composition of any one of A3]-A4] above, wherein the ethylene/vinylarene diblock interpolymer or the ethylene/vinylarene triblock interpolymer has a Tg1 ≤ -30°C, or ≤ -32°C, or ≤ -34°C, or ≤ -36°C, or -38°C. or ≤ -40°C, or ≤ -42°C, or ≤ -44°C, or ≤ -46°C, and a Tg2 ≤ 125°C, or ≤ 120°C, or ≤ 115°C, or ≤ 110°C, or ≤ 105°C.

C4] The composition of any one of A3]-B4] above, wherein the composition has a molecular weight distribution (MWD = Mw/Mn) ≥ 3.0, or ≥ 3.1. or ≥ 3.2, or ≥ 3.3, or 3.4, or ≥ 3.6, or ≥ 3.8, or ≥ 4.0.

D4] The composition of any one of A3]-C4] above, wherein the composition has a molecular weight distribution MWD ≤ 50, or ≤ 45. or ≤ 40. or ≤ 38, or ≤ 36. or ≤ 34, or ≤ 32, or ≤ 30, or ≤ 28, or ≤ 26.

E4] The composition of any one of A3]-D4] above, wherein the composition has a number average molecular weight distribution (Mn) ≥ 4,000 g/mol, or ≥ 6.000 g/mol, or ≥ 8,000 g/mol, or ≥ 10,000 g/mol, or ≥ 12,000 g/mol.

F4] The composition of any one of A3]-E4] above, wherein the composition has a Mn ≤ 100,000 g/mol or ≤ 90,000 g/mol, or ≤ 80,000 g/mol, or ≤ 75,000 g/mol. or ≤ 70.000 g/mol, or 65,000 g/mol or ≤ 60.000 g/mol, or ≤ 55,000 g/mol, or ≤ 50.000 g/mol, or ≤ 45,000 g/mol. G4] The composition of any one of A3]-F4] above, wherein the composition has a weight average molecular weight distribution (Mw) ≥ 50,000 g/mol, ≥ 55,000 g/mol, ≥ 60,000 g/mol, ≥ 65,000 g/mol, or ≥ 70.000 g/mol, or ≥ 75,000 g/mol, or ≥ 80,000 g/mol.

H4] The composition of any one of A3]-G4] above, wherein the composition has a Mw ≤ 500,000 g/mol or ≤ 450,000 g/mol, or ≤ 400,000 g/mol, or ≤ 390,000 g/mol, or ≤ 380,000 g/mol, or ≤ 370,000 g/mol, or ≤ 360,000 g/mol.

14] The composition of any one of A3]-H4] above, wherein the composition has a melt index (I2) ≥ 0.5 dg/min, or ≥ 1.0 dg/min. or ≥ 2.0 dg/min, or ≥ 5.0 dg/min. or ≥ 10 dg/min. J4) The composition of any one of A3]-I4] above, wherein the composition has a melt index (I2) ≤ 1,000 dg/min, or ≤ 500 dg/min, or ≤ 250 dg/min. or ≤ 100 dg/min. or ≤ 50 dg/min, or ≤ 20 dg/min.

K4] The composition of any one of A31-J41 above, wherein the composition has a Tm ≥ 200°C, or ≥ 205°C, or ≥ 210°C, or ≥ 215°C, or ≥ 220°C. or ≥ 225°C, or ≥ 230°C, or ≥ 235°C. L4] The composition of any one of A3]-K4] above, wherein the composition has a Tm ≤ 300°C, or ≤ 290°C, or ≤ 285°C. or ≤ 280°C, or ≤ 275°C, or ≤ 270°C, or ≤ 265°C.

M4] The composition of any one of A3]-L4] above, wherein the composition has a Tg ≥ -80°C. or ≥ -75°C, or ≥ -70°C, or ≥ -69°C, or ≥ -68°C, or ≥ -67°C.

N4] The composition of any one of A3]-M4] above, wherein the composition has a Tg ≤ -30°C. or ≤ -35°C, or ≤ -40°C, or ≤ -45°C, or -50°C, or ≤ -55°C, or ≤ -60°C.

O4] The composition of any one of A3]-N4] above, wherein the composition comprises, in polymerized form, ≥ 5.0 mol%, or ≥ 10 mol%, or ≥ 12 mol%, or ≥ 14 mol%, or ≥ 16 mol% of the vinylarene. based on the total moles of polymerized monomers in the composition.

P4) The composition of any one of A3]-O4] above, wherein the composition comprises, in polymerized form, < 50 mol%, or ≤ 45 mol%, or ≤ 40 mol%, or ≤ 35 mol%, or ≤ 30 mol% of the vinylarene, based on the total moles of polymerized monomers in the composition.

Q4] The composition of any one of A3]-P4] above, wherein the composition comprises, in polymerized form, ≥ 30 mol%, or ≥ 35 mol%, or ≥ 40 mol%, or ≥ 42 mol%, or ≥ 44 mol%, or ≥ 46 mol%, or ≥ 48 mol%, or ≥ 50 mol% of ethylene, based on the total moles of polymerized monomers in composition.

R4] The composition of any one of A3]-Q4] above, wherein the composition comprises, in polymerized form, < 90 mol%, or ≤ 85 mol%, or ≤ 80 mol%, or ≤ 78 mol%, or ≤ 76 mol%. or ≤ 74 mol%, or ≤ 72 mol%, or ≤ 70 mol%, or ≤ 68 mol% of ethylene, based on the total moles of polymerized monomers in the composition.

S4] The composition of any one of A3]-R4] above, wherein the composition comprises, in polymerized form, ≥ 2.0 mol%, ≥ 5.0 mol%, or ≥ 10 mol%, or ≥ 12 mol%, or ≥ 14 mol%, or ≥ 16 mol%, or ≥ 18 mol%, or ≥ 20 mol% of the alpha-olefin, based on the total moles of polymerized monomers in the composition.

T4] The composition of any one of A3]-S4] above, wherein the composition comprises, in polymerized form, ≤ 50 mol%, or ≤ 45 mol%, or ≤ 40 mol%, or ≤ 35 mol%, or ≤ 30 mol%, or ≤ 28 mol% of the alpha-olefin, based on the total moles of polymerized monomers in the composition.

U4] The composition of S4] or T4] above, wherein, the alpha-olefin is a C3-C20 alpha-olefin, further a C3-C10 alpha-olefin, further a C3-C8 alpha-olefin, further propylene, 1-butene, 1-hexene or 1-octene, further propylene, 1-butene or 1-octene, further 1-butene or 1-octene, further 1-octene.

V4] The composition of any one of A3]-U4] above, wherein for the composition, the molar ratio of block styrene (b-b in AR) to isolated styrene is ≥ 2.0 mol%, ≥ 4.0 mol%, or ≥ 6.0 mol%, or ≥ 8.0 mol%, or ≥ 10 mol.

W4] The composition of any one of A3]-V4] above, wherein, for the composition, the molar ratio of block styrene (b-b in AR) to isolated styrene is ≤ 30 mol%, or ≤ 25 mol%, or ≤ 20 mol%, or ≤ 18 mol%, or ≤ 16 mol%, or ≤ 14 mol%, or ≤ 12 mol%.

X4] The composition of any one of A3]-W4] above, wherein the vinylarene is styrene. Y4] The composition of any one of A3]-X4] above, wherein the composition comprises an ethylene/vinylarene diblock interpolymer, and further an ethylene/vinylarene diblock terpolymer.

Z4] The composition of any one of A3]-Y4] above, wherein the composition comprises an ethylene/vinylarene triblock interpolymer. and further an ethylene/vinylarene triblock terpolymer.

A5] The composition of any one of A3]-Z4] above, wherein composition further comprises a polyethylene homopolymer, an ethylene/vinylarene copolymer, an ethylene/alpha-olefin copolymer, or a combination thereof

B5] The composition of any one of A3]-A5] above, wherein the composition further comprises a thermoplastic polymer, different from the ethylene/vinylarene diblock interpolymer or the ethylene/vinylarene triblock interpolymer in one or more features, such as monomer(s) types and/or amounts, Tm. Tg. Mn, Mw, MWD. or any combination thereof. and further, in one or more features, such as monomer(s) types and/or amounts, Tm, Tg, or any combination thereof.

C5] An article comprising at least one component formed from the composition of any one of R2] or A3]-B5] above.

D5] A process to form the composition of any one of A3]-A5] above, said process comprising the following:

A) polymerizing in a reactor A, a mixture A comprising ethylene, and optionally an alpha-olefin, and optionally a vinylarene, in the presence of at least the following:

a) a metal complex S selected from the following: Formula S1, Formula S2. Formula S3, Formula S4, or Formula S5, each as described above;
B) polymerizing in a reactor B. a mixture B comprising ethylene, a vinylarene, and optionally an alpha-olefin, in the presence of at least the following:

b) a metal complex H selected from the following Formula H1 or Formula H2, each as described above:

wherein step A occurs before step B, and at least a portion, and further ≥ 50 wt%, or ≥ 80 wt%, or ≥ 90 wt%, or ≥ 98 wt%, of the reactor product in reactor A is transferred to reactor B; or step B occurs before step A. and at least a portion, and further ≥ 50 wt%, or ≥ 80 wt%, or ≥ 90 wt%, or ≥ 98 wt%, of the reactor product in reactor B is transferred to reactor A; and wherein each wt% is based on the total weight of the respective reactor product; and

wherein if step A occurs before step B, then at least one chain shuttling agent is fed into the reactor A: and wherein if step B occurs before step A, then at least one chain shuttling agent is fed into the reactor β: and

wherein the vinylarene in step A = the vinylarene in step B; and the alpha-olefin in step A = the alpha-olefin in step B.

TEST METHODS

**Gel Permeation Chromatography (Conventional)**

The chromatographic system consisted of a PolymerChar GPC-IR (Valencia, Spain) high temperature GPC chromatograph, equipped with an internal IR5 infra-red detector (IR5). The autosampler oven compartment was set at 160° Celsius, and the column compartment was set at 150° Celsius. The columns were four AGILENT "Mixed A'' 30 cm, 20-micron linear mixed-bed columns. The chromatographic solvent was 1,2,4-trichlorobenzene, which contained "200 ppm" of butylated hydroxy toluene (BHT) The solvent source was nitrogen sparged. The injection volume used was 200 microliters, and the flow rate was 1.0 milliliters/minute.

Calibration of the GPC column set was performed with 21 narrow molecular weight distribution polystyrene standards, with molecular weights ranging from 580 to 8,400,000, and which were arranged in six "cocktail" mixtures, with at least a decade of separation between individual molecular weights The standards were purchased from Agilent Technologies. The polystyrene standards were prepared at "0.025 grams in 50 milliliters" of solvent, for molecular weights equal to, or greater than, 1,000,000, and at "0.05 grams in 50 milliliters" of solvent, for molecular weights less than 1,000,000. The polystyrene standards were dissolved at 80° Celsius, with gentle agitation, for 30 minutes. The polystyrene standard peak molecular weights were converted to polyethylene molecular weights using Equation 1 (as described in Williams and Ward, J. Polym. Sci., Polym. Let.. 6, 621 (1968)):

$$M_{polyethylene} = A \times \left(M_{polystyrene}\right)^{B} \qquad \text{(EQ1)},$$

where M is the molecular weight, A has a value of 0.4315 and B is equal to 1.0.

A fifth order polynomial was used to fit the respective polyethylene-equivalent calibration points. A small adjustment to A (from approximately 0.375 to 0.445) was made to correct for column resolution and band-broadening effects, such that linear homopolymer polyethylene standard is obtained at 120.000 Mw. The total plate count of the GPC column set was performed with decane (prepared at "0.04 g in 50 milliliters'' of TCB, and dissolved for 20 minutes with gentle agitation). The plate count (Equation 2) and symmetry (Equation 3) were measured on a "200 microliter injection," according to the following equations:

$$Plate\ Count = 5.54 * \left(\frac{(RV_{Peak\ Max}}{Peak\ Width\ at\ \frac{1}{2}height}\right)^{2} \qquad \text{(EQ2)},$$

where RV is the retention volume in milliliters, the peak width is in milliliters, the peak max is the maximum height of the peak, and ½ height is ½ height of the peak maximum, and

$$Symmetry = \frac{(Rear\ Peak\ RV_{one\ tenth\ height} - RV_{Peak\ max})}{(RV_{Peak\ max} - Front\ Peak\ RV_{one\ tenth\ height})} \quad \text{(EQ3)},$$

where RV is the retention volume in milliliters, and the peak width is in milliliters, Peak max is the maximum position of the peak, one tenth height is 1/10 height of the peak maximum, and where rear peak refers to the peak tail at later retention volumes than the peak max, and where front peak refers to the peak front at earlier retention volumes than the peak max. The plate count for the chromatographic system should be greater than 18,000, and symmetry should be between 0.98 and 1.22.

Samples were prepared in a semi-automatic manner with the PolymerChar "Instrument Control" Software, wherein the samples (weight-targeted at "2 mg/ml") and the solvent (contained 200 ppm BHT) were added to a pre nitrogen-sparged, septa-capped vial, via the PolymerChar high temperature autosampler. The samples were dissolved for two hours at 160° Celsius under "low speed" shaking.

The calculations of $Mn_{(GPC)}$, $Mw_{(GPC)}$, and $Mz_{(GPC)}$ were based on GPC results using the internal IR5 detector (measurement channel) of the PolymerChar GPC-IR chromatograph according to Equations 4-6, using the PolymerChar GPCOne™ Software, the baseline-subtracted IR chromatogram at each equally-spaced data collection point (i), and the polyethylene equivalent molecular weight obtained from the narrow standard calibration curve for the point (i) from Equation 1. Equations 4-6 are as follows:

$$Mn_{(GPC)} = \frac{\sum^{i} IR_i}{\sum^{i}\left( IR_i / M_{polyethylene_i} \right)} \quad \text{(EQ 4)},$$

$$Mw_{(GPC)} = \frac{\sum^{i}\left( IR_i * M_{polyethylene_i} \right)}{\sum^{i} IR_i} \quad \text{(EQ 5)},$$

and

$$Mz_{(GPC)} = \frac{\sum^{i}\left( IR_i * M_{polyethylene_i}^{2} \right)}{\sum^{i}\left( IR_i * M_{polyethylene_i} \right)} \quad \text{(EQ 6)}.$$

In order to monitor the deviations over time, a flowrate marker (decane) was introduced into each sample, via a micropump controlled with the PolymerChar GPC-IR system. This flowrate marker (FM) was used to linearly correct the pump flowrate (Flowrate(nominal)) for each sample, by RV alignment of the respective decane peak within the sample (RV(FM Sample)), to that of the decane peak within the narrow standards calibration (RV(FM Calibrated)). Any changes in the time of the decane marker peak were then assumed to be related to a linear-shift in flowrate (Flowrate(effective)) for the entire run. To facilitate the highest accuracy of a RV measurement of the flow marker peak, a least-squares fitting routine was used to fit the peak of the flow marker concentration chromatogram to a quadratic equation. The first derivative of the quadratic equation was then used to solve for the true peak position. After calibrating the system, based on a flow marker peak, the effective flow rate (with respect to the narrow standards calibration) was calculated as Equation 7: Flowate(effective) = Flowrate(nominal) * (RV(FM Calibrated) / RV(FM Sample)) (EQ7). Processing of the flow marker peak was done via the PolymerChar GPCOne™ Software. Acceptable flowrate correction is such that the effective flowrate should be within +/-0.7% of the nominal flowrate.

**Melt Index**

The melt index (I2) of an ethylene-based polymer is measured in accordance with ASTM D-1238, condition 190°C/2.16 kg. The melt flow rate (MFR) of a propylene-based polymer is measured in accordance with ASTM D-1238, condition 230°C/2.16 kg.

**Density**

ASTM D4703 is used to make a polymer plaque for density analysis. ASTM D792, Method B, is used to measure the density of the polymer.

**Differential Scanning Calorimetry (DSC)**

Differential Scanning Calorimetry (DSC) is used to measure Tm, Tc, Tg and crystallinity in ethylene-based (PE) polymer samples and styrene-based (PS) polymer samples. About 5 to 8 mg of polymer sample was weighed and placed in a DSC pan. The lid was crimped on the pan to ensure a closed atmosphere. Unless otherwise stated, the sample pan was placed in a DSC cell, and then heated, at a rate of 10°C/min, to a temperature of 180°C for PE (300°C for PS). The sample was kept at this temperature for three minutes. Then the sample was cooled at a rate of 10°C/min to -90°C for PE (-90°C for PS), and kept isothermally at that temperature for three minutes. The sample was next heated at a rate of 10°C/min, until complete melting (second heat). Unless otherwise stated, melting point ($T_m$) and the glass transition temperature ($T_g$) of each polymer were determined from the second heat curve, and the crystallization temperature ($T_c$) was determined from the first cooling curve. The $T_m$ (peak temperature) and the $T_g$ were recorded. The percent crystallinity can be calculated by dividing the heat of fusion ($H_f$), determined from the second heat curve, by a theoretical heat of fusion of 292 J/g for PE (53 J/g for syndiotactic PS), and multiplying this quantity by 100 (for example, % cryst. = (Hf / 292 J/g) x 100 (for PE)).

**$^{13}$C NMR**

Each sample was prepared by adding approximately 2.7 g of stock solvent to 0.2 g of sample (polymer or polymer composition or metal complex) in a 10 mm NMR tube. The stock solvent was tetrachlorethane-*$d_2$* containing 0.025 M chromium acetylacetonate (relaxation agent). The sample was capped and sealed with TEFLON tape. The sample was dissolved and homogenized, by heating the tube and its contents at 130-135°C. The data were collected using a Bruker 600 MHz spectrometer equipped with a Bruker high-temperature CryoProbe. The data were acquired using a 7.3 sec pulse repetition delay (6 sec delay + 1.3 sec acq. time), 90 degree flip angles, and an inverse gated decoupling, with a sample temperature of 120°C. All measurements were made on non-spinning samples in locked mode. Samples were homogenized immediately prior to insertion into a heated (125°C) NMR sample changer, and were allowed to thermally equilibrate in the probe for seven minutes prior to data acquisition.

For each sample (polymer or polymer composition) analysis, B1 carbon (quaternary carbon on the aromatic ring) signals from 145.0 to 147.7 ppm were used as styrene contribution, and the molar amounts of polymerized monomers were calculated as follows (S = styrene, E = ethylene);
Smol = Integral (145.0 -147.7 ppm)

$$Emol = (Integral\ (20.0 - 48.0\ ppm) - 2^*\ Smol)/2$$

$$S\ mol\% = 100\ ^*\ Smol/(Smol+Emol)$$

$$E\ mol\% = 100 - S\ mol\%$$

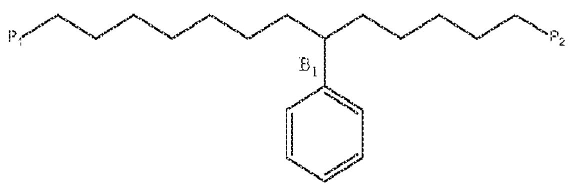

For each sample (polymer or composition) analysis. B1-4 ring carbon signals from 124.0 to 148.0 ppm were used as styrene contribution, 2B6 (22.0 - 23.5 ppm). and 3B6 (31.5 - 32.7 ppm) signals were used as octene contribution, and the molar amounts of polymerized monomers were calculated as follows (S = styrene. E = ethylene, O = octene):

$$Smol = Integral\ (124.0 - 148.0\ ppm)/6$$

$$Omol = (Integral\ (22.0 - 23.5\ ppm) + Integral\ (31.5 - 32.7\ ppm\ ))/2$$

$$Emol = (Integral\ (11.8 - 48.0\ ppm) - 2*Smol - 8*Omol)/2$$

$$Smol\% = 100*Smol/(Smol+Omol+Emol)$$

$$Omol\% = 100*Omol/(Smol+Omol+Emol)$$

$$Emol\% = 100 - Smol\% - Omol\%$$

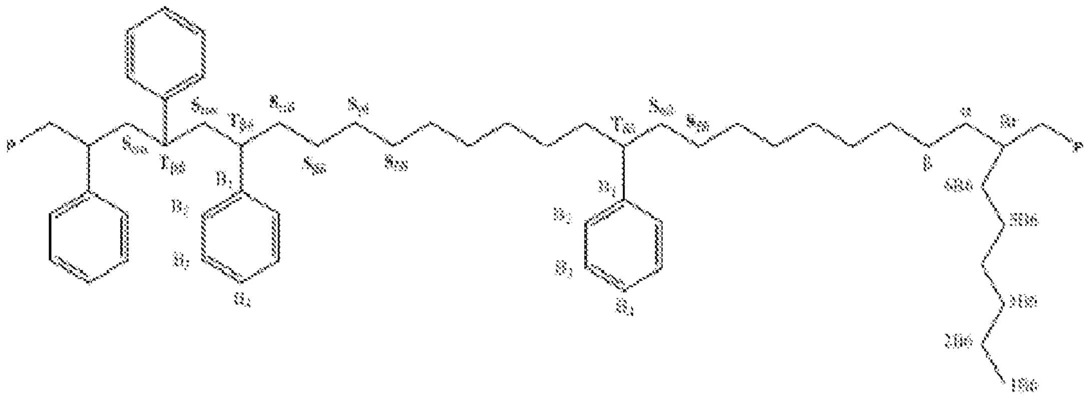

$$\text{Average styrene block length} = 2*\ (\text{Integrals}\ T_{\beta\beta} + T_{\beta\delta})/\ \text{Integral}\ T_{\beta\delta}$$

The ratio of block styrene to isolated styrene = (Integrals $T_{\beta\beta}$ + $T_{\beta\delta}$)/ Integral $T_{\delta\delta}$

$T_{\beta\beta}$ signals are methine signals centered around 41.6 ppm, $T_{\beta\delta}$ signals are methine signals centered around 43.9 ppm, and $T_{\delta\delta}$ signals are methine signals centered around 46.4 ppm. $T_{\beta\beta}$%=100*Integral $T_{\beta\beta}$/Integral B1

**1H NMR**

Each sample was prepared by adding 130 mg of sample (polymer or polymer composition or metal complex) to 3.25 g of tetrachlorethane-d2 with 0.001 M Cr(AcAc)3 in a 10 mm NMR tube. The sample weas purged by bubbling N2 through the solvent, via a pipette inserted into the tube, for approximately 5 minutes, to prevent oxidation. The sample container was capped, and sealed with TEFLON tape. The samples was heated and vortexed at 115°C to ensure homogeneity. 1H NMR was performed on a Bruker AVANCE 600 MHz spectrometer equipped with a Bruker high-temperature CryoProbe, and at a sample temperature of 120°C. 1H NMR was run with ZG pulse, 4 scans, SWH 10,000 Hz, AQ 1.64s, D1 14s

**Compression Molding**

Each polymer composition was compression molded, using a Carver press, into a plaque for physical testing. Each compositions was compression molded according to ASTM D4703 at 190°C with controlled cooling at 15°C/min.

**Microtensile Test - Mechanical Properties**

Samples were punched from compression molded plaques using the ASTM die D1708. Specimens were tested according to ASTM D1708 at a test speed of 5 in/min.

EXPERIMENTAL

**I. Catalysts and Chain Shuttling Agents**

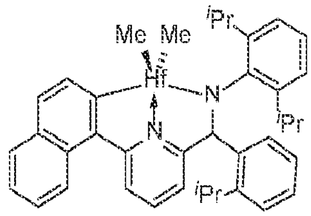

CAT A (See WO03/40195, WO04/24740 and US 8,501.885)

*Synthesis of $(C_5Me_5)Sc(CH_2C_6H_4NMe_2\text{-}o)_2$, CAT B*

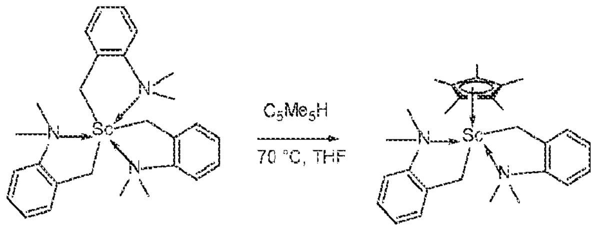


CAT B

In a nitrogen-filled glovebox, a THF solution (1 mL) of $Sc(CH_2CH_6H_4NMe_2\text{-}o)3$ (0.300 g, 0.67 mmol) was added to a THF solution (1 mL) of $C_5Me_5H$ (0.105 mL, 0.67 mmol) in a 20 mL vial. The solution was heated at 70°C for 12 hours. The solvent was removed under reduced pressure, the residue was extracted with hexane, and then filtered. A concentrated hexane solution was equilibrated at -30°C to give yellow crystals (0.203 g, 65.5% yield). The 1H NMR and the 13C NMR spectra are consistent with literature reports (Chem. Commun. 2007. 40. 4137-4139). See Figure 2 (1H NMR) and Figure 3 (13C NMR) of the Sc complex (CAT B).

*Synthesis of Sc(CH2C6H4NMe2-o)3, CAT C, Catalyst for Atactic Polystyrene and Chain Shuttling with Zinc*

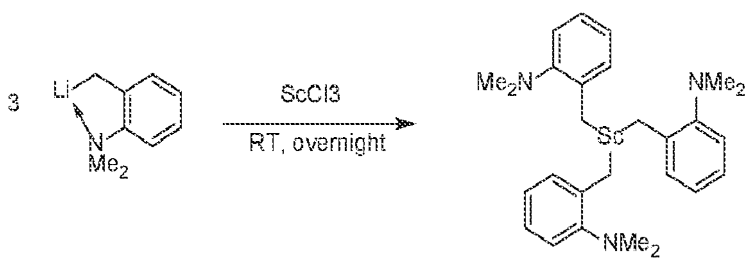


(CAT C)

Synthesis of $Sc(CH_2C_6H_4NMe_2\text{-}o)_3$: Anhydrous $ScCl_3$ (1.938 g, 12.81 mmol) was suspended in 10 mL THF. A THF solution (20 mL) of $LiCH_2C_6H_4NMe_2$-o (5.423 g, 28.43 mmol, 3 equiv.) was slowly added at room temperature. After stirring this mixture for 30 minutes, the solvent was removed under reduced pressure. The residue was dissolved in 40 mL of toluene, and then filtered to remove lithium salts. Solvent was removed from the filtrate under reduced pressure, and the residue was washed thoroughly with ether, filtered, and dried, to yield the product as a fine yellow solid. Yield = 2.17 g (38%). 1H NMR (400 MHz, Benzene-d6) $\delta$ 7.05 - 6.94 (m, 6H), 6.85 - 6.76 (m. 6H). 2.28 (s. 18H), 1.67 (s. 6H). 13C NMR (101 MHz, Benzene-d6) $\delta$ 143.43, 143.15, 129.41, 126.67, 119.95. 117.89. 52.30 - 46.32 (m), 45.04.

*Synthesis of Ti Complexes:*

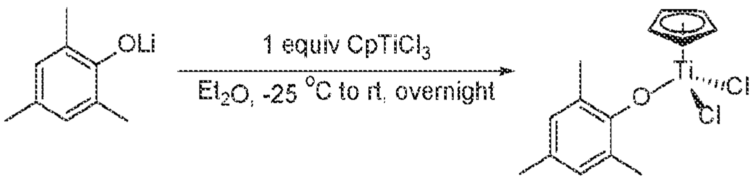


(CAT D)

CAT D: The following procedure was performed in a glove box under a nitrogen atmosphere. In an oven-dried, 40 mL vial, equipped with a stir bar, $Cp^*TiCl_3$ (300 mg, 1.37 mmol) was dissolved in 5.2 mL of anhydrous diethyl ether. This solution was cooled in the glove box freezer for 30 minutes. Lithium 2,4,6-trimethoxy-phenoxide (184 mg. 1.37 mmol) was added to the $CpTiCl_3$ solution with vigorous stirring. The reaction was allowed to warm to room temperature, and the reaction was stirred overnight at room temperature. The reaction was then filtered, and the solids were washed with 2 mL of anhydrous diethyl ether. The filtrate and washes were combined. The volatiles were removed under vacuum, and a red solid was isolated. This material was analyzed by 1H NMR spectroscopy, the crude material appeared to contain unreacted CpTiCh. The crude product was dissolved in a minimal amount of methylene chloride, and this solution was then layered with ether. This solution was placed in the freezer overnight. The desired complex was isolated as red crystals (250 mg, 57%). The produce was analyzed by 1H NMR spectroscopy [(400 MHz. C6D6) $\delta$ 6.57 (s, 2H), 6.01 (s, 5H), 2.16 (s, 6H), 2.08 (s, 3H)].

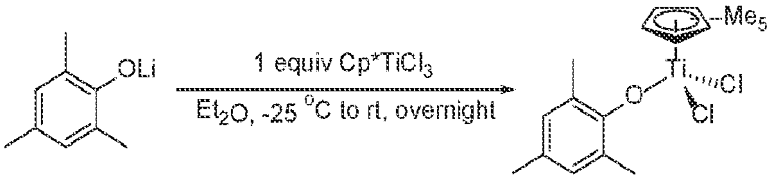


(CAT E)

CAT E: The following procedure was performed in a glove box under a nitrogen atmosphere. In an oven-dried, 40 mL vial, equipped with a stir bar, $Cp^*TiCl_3$ (400 mg, 1.38 mmol) was dissolved in 19 mL of anhydrous diethyl ether. This solution was cooled in the glove box freezer for 30 minutes. Lithium 2,4,6-trimethoxy-phenoxide (196 mg, 1.38 mmol) was added to the $Cp^*TiCl_3$ solution with vigorous stirring. The reaction was allowed to warm to room temperature, and the reaction was stirred overnight at room temperature. The reaction was then filtered, and the solids were washed with 5 mL of anhydrous diethyl ether. The filtrate and washes were combined. The volatiles were removed under vacuum, and a red solid was isolated. This material was analyzed by 1H NMR spectroscopy. The crude product was dissolved in a minimal amount of methylene chloride, and this solution was then layered with ether This solution was placed in the freezer overnight. The desired complex was isolated as red crystals (301 mg, 56%). The produce was analyzed by 1H NMR spectroscopy [(400 MHz, C6D6) $\delta$ 6.61 (s, 2H), 2.29 (s, 6H), 2.10 (s, 3H), 1.90 (s, 15H)]. Note: This material contained some unreacted $Cp^*TiCl_3$ that appeared to co-crystallize with the desired compound.

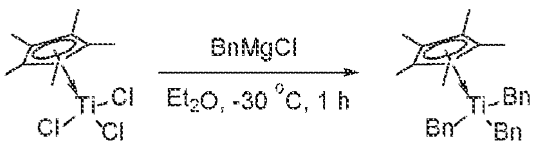


(CATF)

CAT F: In an oven-dried vial, equipped with a stir bar. $Cp^*TiCl_3$ (200 mg, 0.69 mmol) was dissolved in 7.5 mL of anhydrous ether. The solution was placed in the glove box freezer for 20 minutes. The vial was then removed from the freezer. To the cooled, stirred solution, a 2.0 M solution of benzylmagnesium chloride (1.0 mL, 2.1 mmol) was added dropwise. The reaction mixture was slowly warmed to room temperature, and was stirred for one hour at room temperature. The reaction mixture was filtered to remove the solids, and the yellow solution was reduced under vacuum. A reddish, brown solid was isolated and analyzed by 1H NMR spectroscopy [1H NMR (400 MHz, Benzene-d6) $\delta$ 6.93 (t, J = 7.3 Hz. 3H), 6.83 - 6.78 (m, 5H), 2 74 (d, J = 2.7 Hz. 6H), 1.62 (d. J = 0.7 Hz. 13H).] Note: aromatic protons overlapped with benzene solvent peak.

*Synthesis of Al-DHCSA*

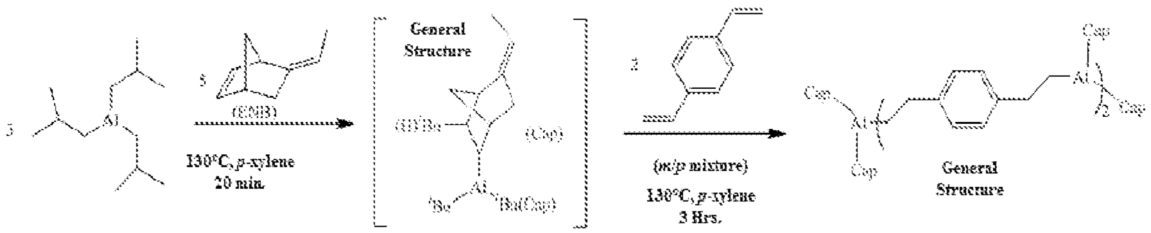


In a glass vial, Al(iBu)$_3$ (3.00 g, 15.13 mmol) and ENB (3.030 g, 25.21 mmol) were mixed with p-xylene (7 mL). This mixture was heated to 130°C for 20 minutes. Venting of the i-butene was permitted. The mixture of p,m-divinylbenzene (Alfa Aesar 80:20) (1.313 g, 10.08 mmol) was then added, and the mixture allowed to equilibrate at 130°C for an additional three hours, and then cooled to room temperature. Following the reaction period (3 hrs), the temperature of the mixture was cooled to room temperature, and the resulting homogeneous solution used as a DHCSA.

Other chain shuttling agents (CSAs) used in experiments herein, include diethyl zinc (DEZ) and triethyl aluminum (TEA).

ZnAl-DHCSA (see WO2018/064546)

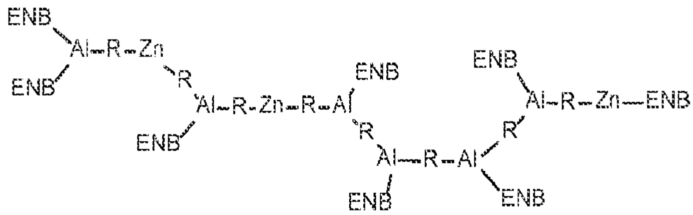

R =

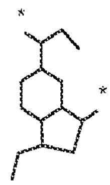

(* point of attachment to a metal; mixture of isomers)

### II. Screening Catalyst

*PPR Screening of Sc Complex (CAT S) for Hard Blocks*

A Parallel Pressure Reactor (PPR) system was employed, in order to demonstrate the viability of styrene polymerization activity and chain shuttling ability of the polymerization catalyst The activity and molecular weight of a given styrene polymerization catalyst relative to the chain shuttling agent (CSA) loading was investigated. The chain shuttling agents studied were diethylzinc (DEZ) and triethylaluminum (TEA), as models for polymeryl alkylzinc or polymeryl alkylaluminum species, respectively. Al-Zn DHCSA was also used PPR screening conditions were as follows: [ISOPAR-E+ MMAO-3A + T] + (Styrene + CSA + "amines, bis(hydrogenated tallow alkyl)methyl, tetrakis(pentafluoro-phenyl) borate(1-) + Catalyst); Catalyst Loading = 0.25 µmoles; MMAO-3A Loading = 5 µmoles; T = 105°C, t = 15 minutes. [Styrene] = 2.1 M (in toluene).

CAT B was screened in the PPR for its ability to polymerize styrene in the presence of various model chain shuttling agents. Figure 4 demonstrates that CAT B exhibits high efficiency for styrene polymerization (no CSA), and the catalyst activity is not affected by the addition of the TEA (3rd circle from top at CSA = 25 µmoles, and 3rd and 4th circles from top at CSA = 100 µmoles) or the Al-Zn DHCSA (upper two merged circles at CSA = 25 µmoles, and upper two circles at CSA = 100 µmoles). For this particular study, the catalyst activity was low in the presence of DEZ (two merged lower circles at CSA = 25 µmoles and two merged lower circles at CSA = 100 µmoles). The data in Figure 5 shows that the addition of CSA results in a decrease in the molecular weight, indicating the catalyst participates in effective chain shuttling. Note, the Al-Zn DHCSA is represented by two upper circles at CSA = 25 µmoles, and two upper circles at CSA = 100 µmoles. The TEA is represented by two merged lower circles at CSA = 25 µmoles and two merged lower circles at CSA = 100 µmoles.

Table 1 further depicts the effect of the addition of 100 µmoles of CSA on a styrene polymerization with CAT B at 105°C. In addition, the polymerization of styrene by CAT B was examined in the presence of 1-octene. PPR screening conditions were as follows: T = 105°C. Catalyst Loading = 0.25 µmoles, [Styrene] = 2.1 M (in toluene), t = 15 minutes. As shown in Table 1, the catalyst activity and molecular weight were unaffected by the addition of 1-octene, which indicates that CAT B is compatible with residual alpha-olefin monomer, transferred from the first reactor to the second reactor. This data demonstrates that catalyst CAT B meets the desired second reactor (R2) catalyst cnteria (a)-c)) described above (see

Detailed Description of the Invention).

Table 1: Effect of CSA and 1-Octene on the Polymerization of Styrene with CAT B.

| CSA (100 μmoles) or 1-Octene | ((g Polymer (PS) per g M)/hr) | Mw (g/mol) |
|---|---|---|
| none | 149,000 | 1,300,000 |
| $Et_3Al$ (CSA) | 100,000 | 7,900 |
| 1-Octene | 151,000 | 1,195,000 |
| M= metal of catalyst (Sc) | | |

*Chain Shuttling Experiments for Sc Catalyst: CAT B*

A glass vial was charged with toluene (final volume 8 mL), styrene (1 mL), and a magnetic stir bar. CAT B (5 μmol), "amines, bis(hydrogenated tallow alkyl)methyl, tetrakis(pentafluorophenyl)borate(1-) (1.2 equiv (equiv. to CAT B)), and either TEA or DEZ (0, 25 μmol, or 100 μmol) were sequentially added to the solution. This mixture was heated at 100°C for one hour, then allowed to cool, before being quenched in methanol. Polymer was collected by filtration and dried under vacuum. GPC results are shown in Figure 6. Results are also shown in Table 2. A chain shuttling process takes place, as indicated by the decrease in molecular weight and decrease in MWD (Mw/Mn) in the presence of DEZ or TEA, as compared to sPS-1.

Table 2: Syndiotactic Polystyrene (sPS) Prepared with and without Zinc and Aluminum Chain Shuttling Agents

| | CSA, umol | Mn (g/mol) | Mw (g/mol) | Mw/Mn | Tg (°C) | Tm (°C) | ΔHm (°C) | Activity ((g sPS/mol Sc)/hr) | Yield sPS (%) |
|---|---|---|---|---|---|---|---|---|---|
| sPS-1 | None | 123,761 | 411,704 | 3.33 | 99 | 271 | 20.8 | 152,222 | 90 |
| sPS-2 | DEZ, 25 | 13,331 | 27,143 | 2.04 | 95 | 271 | 29.8 | 191,296 | 100 |
| sPS-3 | DEZ, 100 | 5,029 | 7,903 | 1.57 | 97 | 257 | 24.5 | 166,296 | 99 |
| sPS-4 | TEA, 25 | 22,299 | 64,039 | 2.87 | 96 | 272 | 28.1 | 157,407 | 94 |
| sPS-5 | TEA, 100 | 7,433 | 16,790 | 2.26 | 95 | 266 | 29.2 | 147,407 | 88 |

**III. Vinylarene-Rich (Hard Block) Analysis and Vinylarene-Poor (Soft Block) Analysis**

*Batch Reactor Polymerization Set-Up*

The batch reactor set-up consisted of a 600 mL Parr reactor controlled by a process control system. The reactor was equipped with an electric heating jacket, an internal cooling coil for temperature control, and electric heat traced transfer lines between the reactor and the reactor dump pot. Three feeds were available, with the option to load solvents or monomers from a detachable one liter cylinder (50 mL). This cylinder was loaded in an inert (N2) glove box, and its contents transferred to the reactor via a nitrogen injection. Catalyst components and chain shuttling agents were prepared in the inert glove box, and transferred from the 50 mL cylinder, via a nitrogen transfer, to the reactor. The "1-octene cylinders'' were filled from purified plant feeds. Ethylene was supplied from Airgas, as high purity grade. For further purification, the 1-octene and ethylene were passed through inline beds of activated alumina, 13X molecular sieves, and Q5 material. The high pressure nitrogen, for the catalyst injection and purging, was ultra-high purity grade. Styrene was degassed, and the inhibitor was removed by passing the styrene supply through a plug of neutral alumina, just prior to addition into the reactor.

*Ethylene. 1-Octene, Styrene Polymerization: Reactivity of CAT B (Vinylarene-Rich)*

Degassed, anhydrous toluene was added to the 600 mL Parr reactor from a solvent cylinder, pressurized with nitrogen, using a mass flow meter, and the reactor agitator was set to 450 rpm. Styrene was injected via a cylinder

pressurized with high pressure nitrogen. When used, a preset amount of 1-octene was added to the reactor from a cylinder pressurized with nitrogen, using a flow meter. Once the reactor reached the starting temperature set point of 120°C, a preset amount of ethylene was added to the reactor, using a flow meter, followed by the addition of the active catalyst solution. The catalyst solution was prepared by adding a pre-made toluene solution of $Cp^*ScR_2$ (CAT B) (typical loadings 22 μmol Sc), 0.006 M solution of "amines, bis(hydrogenated tallow alkyl)methyl, tetrakis(pentafluorophenyl)-borate(1-)'' activator in toluene (1.0-1.2 equiv), and a 0.05 M solution of MMAO-3A in toluene (10 equiv.). Each "equiv" is relative to one equiv. of CAT B.

The flow of ethylene, at 200 mg/min, was initiated, while the overall reactor pressure was controlled at the programmed set point, throughout the desired run time of ten minutes. Following the mixing time, the agitator was stopped, and the contents of reactor were emptied into the dump pot. The pot contents were poured into methanol, and the mixture stirred. The polymer precipitate was filtered and dried at 130°C, in a vacuum oven for six hours. Polymerization conditions and polymer properties are shown in Table 3 below. See also Table 4. The interpolymers AR1-AR12, in Tables 3 and 4, are each representative of an vinylarene-rich (hard block) (AR) segment of an ethylene/octene/-styrene diblock or triblock interpolymer, in, for example, monomer composition, tacticity of the polymerized vinylarene. Tm and Tg.

Table 3: [CAT B] Batch Reactor Conditions and GPC. DSC data

| Reactor | | | | | | | GPC | | | DSC | | |
|---|---|---|---|---|---|---|---|---|---|---|---|---|
| Sample | Initial C2, g | Sty, g | C8, g | Tol, g | Yield g | Efficiency (g poly/g metal) | Mw g/mol | Mn g/mol | PDI or MWD | Tg °C | ΔHm (J/g) | Tm °C |
| AR1 | 10.4 | 52 | 22 | 230 | 6.2 | 19987 | 174,258 | 21,626 | 8.06 | 30 | 1.85 | 124 |
| AR2 | 10.5 | 94 | 34 | 177 | 0.4 | 1290 | 81,351 | 7,971 | 10.21 | none | | |
| AR3 | 7 | 125 | 67 | 112 | 1 | 2418 | 91,609 | 5,322 | 17.21 | 96 | 1.16 | 233 |
| AR4 | 6 | 125 | 39 | 148 | 5.4 | 11662 | 119,811 | 11,461 | 10.45 | 103 | 4.91 | 241 |
| AR5 | 5.1 | 123 | 17 | 179 | 18 | 29014 | 390,569 | 15,255 | 25.60 | 92 | 9.5 | 241 |
| AR6 | 10.3 | 77 | 50 | 173 | 0.282 | 682 | 76,315 | 4,080 | 18.71 | 93 | 0.55 | 233 |
| AR7 | 10.4 | 62 | 11 | 234 | 3 | 7253 | 111,994 | 9,702 | 11.54 | 33 | 0.58 | 129 |
| AR8 | 10.4 | 109 | 17 | 184 | 1.4 | 3023 | 79,125 | 1 0,209 | 7.75 | 102 | 0.56 | 218 |
| AR9 | 5.9 | 88 | 76 | 138 | 0.335 | 723 | 73,127 | 7,757 | 9.43 | 92 | | |
| AR10 | 12.6 | 47 | 10 | 246 | 0.472 | 1522 | 73,583 | 9,894 | 7.44 | 3 | 2.25 | 128 |
| AR11 | 11.6 | 69 | 75 | 148 | 0.342 | 739 | 51,343 | 9,313 | 5.51 | 96 | | |
| AR12 | 10.3 | 31 | 17 | 257 | 2.5 | 6045 | 111,584 | 23,225 | 4.80 | 6 | 2.47 | 126 |
| General: Catalyst = 22 μmol [CAT B], 1.2 x "amines, bis(hydrogenated tallow alkyl)methyl, tetrakis(pentafluorophenyl)borate(1-)", 10x MMAO, T = 120°C, t = 10 min, V = 600 mL | | | | | | | | | | | | |

Table 4: Polymer Characterization (Cp*Sc Polymers, Syndiotactic PS (100 mol%)

| Sample | Styrene, mol%[a] | Octene, mol%[a] | Ethylene, mol%[a] |
|---|---|---|---|
| AR1 | 41.9 | 0 | 58.1 |
| AR2 | 78.8 | 0 | 21.2 |
| AR3 | 89.8 | 0 | 10.2 |
| AR4 | 90.7 | 0 | 9.3 |
| AR5 | 88.7 | 0 | 11.3 |
| AR6 | 82.3 | 0 | 17.7 |
| AR7 | 50.6 | 0 | 49.4 |
| AR8 | 77.4 | 0 | 22.6 |
| AR9 | 85.7 | 0 | 14.3 |
| AR10 | 33.3 | 0 | 66.7 |

(continued)

| Sample | Styrene, mol%[a] | Octene, mol%[a] | Ethylene, mol%[a] |
|---|---|---|---|
| AR11 | 60 | 0 | 40 |
| AR12 | 27.7 | 0 | 72.3 |
| " Determined by 13C NMR, each mol% based on the total moles of polymerized monomers in the interpolymer (represents a vinylarene-rich (Hard Block)). | | | |

*Ethylene, 1-Octene, Styrene Polymerization: Reactivity of CAT A (Vinylarene-Poor)*

Degassed, anhydrous toluene was added to the 600 mL Parr reactor from a solvent cylinder pressurized with nitrogen using a mass flow meter, and the reactor agitator was set to 450 rpm. Styrene was injected via a cylinder pressurized with high pressure nitrogen. A preset amount of 1-octene was added to the reactor from a cylinder pressurized with nitrogen, using a flow meter. Once the reactor reached the starting temperature set point of 120°C, a preset amount of ethylene was added to the reactor using a flow meter, followed by the addition of the active catalyst solution. The catalyst solution was prepared by adding a pre-made toluene solution of CAT A catalyst, 0.006 M solution of "amines, bis(hydrogenated tallow alkyl)methyl, tetrakis(pentafluorophenyl)-borate(1-)" activator in toluene (1.0-1.2 equiv), and a 0.05 M solution of MMAO-3A in toluene (10 equiv.). Each "equiv" is relative to one equiv. of CAT A.

The flow of ethylene, at 200 mg/min, was initiated, while the overall reactor pressure was controlled at the programmed setpoint throughout the desired run time of ten minutes. Following the mixing time, the agitator was stopped, and the contents of reactor were emptied into the dump pot. The pot contents were poured into methanol, and the mixture stirred. The polymer precipitate was filtered and dried at 130°C in a vacuum oven for six hours. Polymerization conditions and polymer properties are shown in Table 5 below. See also Table 6. The interpolymers AP1-AP11, in Table 6, are each representative of an vinylarene-poor (Soft Block) (AP) segment of an ethylene/octene/styrene diblock or triblock interpolymer, in, for example, monomer composition, tacticity of the polymerized vinylarene. Tm and Tg.

Table 5: CAT A Batch Reactor Conditions and GPC/DSC Characterization

| | Reactor | | | | | | GPC | | | DSC | | |
|---|---|---|---|---|---|---|---|---|---|---|---|---|
| Sample | Initial C2, g | Sty, g | C8, g | Tol, g | Yield g | Efficiency (g poly/g metal) | Mw | Mn | PDI or MWD | Tg | DHm (J/g) | Tm |
| AP1 | 10.4 | 52 | 22 | 230 | 12 | 5378 | 635,434 | 101,824 | 6.24 | -53 | 14.44 | 73 |
| AP2 | 10.5 | 94 | 34 | 177 | 1 | 448 | 174,013 | 60,691 | 2.87 | -48, 105 | | none |
| AP3 | 7 | 125 | 67 | 112 | 4 | 1793 | 229,859 | 79,968 | 2.87 | -56 | | none |
| AP4 | 5.1 | 123 | 17 | 179 | 4.3 | 1927 | 563,851 | 179,471 | 3.14 | none | | |
| AP5 | 10.3 | 77 | 50 | 173 | 6.8 | 3048 | 1,117,020 | 221,692 | 5.04 | none | | |
| AP6 | 10.4 | 62 | 11 | 234 | 1 | 448 | 235,551 | 71,309 | 3.30 | 96.3 | | |
| AP7 | 10.4 | 109 | 17 | 184 | 12.6 | 5647 | 401,300 | 28,850 | 13.91 | -47 | 5.79 | 78 |
| AP8 | 5.9 | 88 | 76 | 138 | 13 | 5827 | 508,680 | 124,594 | 4.08 | -61 | | none |
| AP9 | 12.6 | 47 | 10 | 246 | 12 | 5378 | 362,481 | 96,701 | 3.75 | -49 | 17.9 | 101 |
| AP10 | 11.6 | 69 | 75 | 148 | 19 | 8516 | 698,512 | 144,256 | 4.84 | -62 | | none |
| AP11 | 10.3 | 31 | 17 | 257 | 13 | 5827 | 369,706 | 84,713 | 4.36 | -57 | 11.26 | 86 |

General: Catalyst = 6-8 μmol CAT A, 1.2 x "amines, bis(hydrogenated tallow alkyl)methyl, tetrakis(pentafluorophenyl)borate(1-)", 10x MMAO, T = 120 °C, t = 10 min, V = 600 mL

Table 6: Polymer Characterization (13C NMR)

| Sample | Styrene, mol%[a] | Octene, mol%[a] | Ethylene, mol%[a] |
|---|---|---|---|
| AP1 | 3.0 | 11.8 | 85.3 |
| AP2 | 1.2 | 10.5 | 88.2 |
| AP3 | 2.7 | 18.8 | 78.5 |
| AP4 | 4.7 | 7.8 | 87.5 |
| AP5 | 2.7 | 14.3 | 83.1 |
| AP6 | 4.3 | 4.6 | 91.1 |
| AP7 | 5.3 | 8.8 | 85.9 |
| AP8 | 5.4 | 31.7 | 62.9 |
| AP9 | 3.1 | 6.9 | 90 |
| AP10 | 3.7 | 26.9 | 69.4 |
| AP11 | 2.2 | 13.3 | 84.5 |
| Note: Values of mol% styrene in the table were calculated to include only styrene present in a E/O/S terpolymer with the assumption that no back-to-back styrene was present. This is based on the observation that CAT A does not polymerize styrene under homopolymerization conditions. Any atactic polystyrene was assumed to arise from thermally -generated PS. [a]Each mol% based on the total moles of polymerized monomers in the interpolymer represents a vinylarene-poor (Soft Block). | | | |

**IV**. **Dual Catalysts Polymerizations with Chain Shuttling Agent**

*Batch Reactors Polymerization Set Up (Dual Parr Reactor) - Solution Polymerization*

The polymerization set-up consisted of two reactors, a 600 mL Parr reactor (Reactor 1, R1) and a 2.0 L Parr reactor (Reactor 2, R2), each controlled by a process control system. Both reactors were equipped with an electric heating jacket, an internal cooling coil for temperature control, and electric heat traced transfer lines between the reactors and from each reactor to the reactor dump pot. Three feeds were available for either reactor, with the option to load solvents or monomers from a detachable "1 L sample cylinder.'' The "1 L cylinder" was loaded in an inert (N2) glove box, and the contents transferred to either reactor via a nitrogen injection Catalyst components and chain shuttling agents were prepared in the inert glove box, and transferred from a "50 mL cylinder,'' via nitrogen transfer, to the respective reactor. ISOPAR-E and 1-octene cylinders were filled from purified plant feeds. Ethylene was supplied from Airgas, as high purity grade. For further purification, the 1-octene and ethylene were passed through inline beds of activated alumina, 13X mole sieves, and Q5 material. The high pressure nitrogen, for catalyst injection and purging, was ultra-high purity grade.

*Batch Reactors - Solution Polymerization Composition comprising Triblock 2*

The 600 mL Parr reactor (R1 (first reactor)) was charged with a solution of the Al-DHCSA (1.5 mL, 578 μmol) in 4 mL of ISOPAR-E via high pressure nitrogen injection. ISOPAR-E (121.4 g) was added to R1 from a solvent cylinder pressurized with nitrogen, using a mass flow meter, and the reactor agitator was set to 450 rpm. A preset amount of 1-octene (20.4 g) was added to R1 from a cylinder pressurized with nitrogen, using a flow meter. Once the reactor reached the starting temperature set point of 120°C, a preset amount of ethylene (7.1 g) was added to the reactor using a flow meter, followed by the addition of the active catalyst solution. The catalyst solution was prepared by adding 0.25 mL of a 0.005 M solution of CAT A in toluene, 0.25 mL of a 0.006 M solution of "amines. bis(hydrogenated tallow alkyl)methyl, tetrakis(pentafluoro-phenyl)borate(1-) in toluene, 0 25 mL of a 0.05 M solution of MMAO-3A in toluene, to a vial containing 4 mL of toluene.

The flow of ethylene, at 200 mg/min, was initiated, while controlling the overall reactor pressure at 192.7 psig throughout the desired run time of 10 minutes (for R1). During the R1 run time, the "2.0 L Parr'' reactor (R2. second reactor) was charged with 200 mL of toluene, via a small cylinder pressurized with nitrogen. The R2 agitator was set to 450 rpm, and the R2 starting temperature set point to 120°C. When the run time (10 min) in R1 was completed, the agitator was stopped in both reactors (R1 and R2) R1 was pressured with nitrogen, in order to transfer the contents of R1 to R2 via preheated lines. CAT A (lifetime less than 10 min) was spent, when this catalyst entered the second reactor.

Once the contents were transferred, the R2 agitator was resumed Styrene monomer (5 mL. 0.044 mol) was

injected into R2, via a small cylinder pressurized with nitrogen, immediately followed by the addition of the active catalyst solution in 200 mL of toluene The catalyst solution was prepared by adding 45 μmol Sc complex CAT A in toluene, 0.083 mL of a 0.006 M solution of "amines, bis(hydrogenated tallow alkyl)methyl, tetrakis(pentafluorophenyl)borate(1-) (0.5 μmol) in toluene, 0.100 mL of a 0.05 M solution of MMAO-3A (5 μmol) in toluene, to a vial containing 4 mL of toluene. After the addition of the catalyst, an exotherm was observed. The R2 contents were agitated for a run time of one hour (for R2) at 120°C. Following the reaction time, the R2 agitator was stopped, and the contents of R2 were emptied into the dump pot. The pot contents were poured into methanol and stirred overnight. The polymer precipitate (composition comprising an ethylene/octene/styrene triblock terpolymer (Triblock 2)) was filtered and dried at 130°C in a vacuum oven for six hours (Yield 11.6 g). NMR profiles are shown in Figure 7 (1H NMR) and Figure 8 (13C NMR). Based on peak integration in Figure 7, the composition contained 30 wt% polymerized styrene, based on the weight of the composition. Peaks denoting the phenyl C-1 (δ 145.50), Sαα (δ 43.35), and Tββ (δ 40.61) of the syndiotactic polystyrene block are shown in Figure 8.

*Additional Polymer Compositions*

Additional polymer compositions are described below. Polymerization conditions and polymer composition properties are listed in Tables 7 and 8.

Triblock 1 (composition containing an ethylene/octene/styrene triblock 1 terpolymer) was polymerized using the process above for Triblock 2, except for the following changes. The 600 mL Parr reactor (RI) was charged with a solution of the AI-DHCSA (1.5 mL, 690 μmol) in 4 mL of ISOPAR-E, via high pressure nitrogen injection. The flow of ethylene, at 200 mg/min, was initiated, while controlling the overall reactor pressure at 192.7 psig throughout the desired run time of 30 minutes (for R1). Styrene monomer (5 mL. 0.690 mmol) was injected into R2 via a small cylinder pressurized with nitrogen, immediately followed by the addition of the active catalyst solution in 200 mL of toluene. The catalyst solution was prepared by adding 0.240 mL of a 0.0021 M solution of Sc complex CAT B (0.5 μmol) in toluene, 0.083 mL of a 0.006 M solution of "amines, bis(hydrogenated tallow alkyl)methyl, tetrakis(pentafluorophenyl)-borate(1-) (0.5 μmol) in toluene, 0.100 mL of a 0.05 M solution of MMAO-3A (5 μmol) in toluene, to a vial containing 4 mL of toluene. The polymer precipitate (composition containing the triblock) was filtered and dried at 130°C in a vacuum oven for six hours (Yield 13.0 g). In order to detect AR-AP coupling (vinylarene-rich (hard block)-vinylarene-poor (soft block)S, a Malvern 305a HT GPC with triple detector (dRI, DV, LS) connected with DiscovIRTM (FT IR) and PDA (LV-Vis) was employed. GPC data is shown in Figure 9 [HT GPC dRI/UV Dual Detector responses for dual batch reactor run showing uncoupled PS. uncoupled EO, and coupled PS.] As seen in Figure 9, the formation of the block interpolymer appears as the "coupled PS" peak.

Triblock 3 (composition containing an ethylene/octene/styrene triblock terpolymer) was prepared according to the process for Triblock 2 as shown above, except for the changes noted in Table 7 below. Diblock 1 (composition containing an ethylene/octene/styrene diblock terpolymer) was prepared according to the process for Triblock 2 as shown above, except TEA (400 μmole) was used as the CSA, and except for the changes noted in Table 7 below. Diblock 2 (composition containing an ethylene/octene/styrene diblock terpolymer) was prepared according to the process for Triblock 2 as shown above, except DEZ (100 μmole) was used as the CSA, and except for the changes noted in Table 7 below.

Two in-reactor blends (IB-1 and IB-2), no CSA, each of an ethylene/octene random copolymer and a syndiotactic styrene-based polymer, were each prepared using the same process as used for Triblock 2 above, but without the AI-DHCSA pre-injection, and except for the changes noted in Table 7 below.

Table 7: Polymerization Conditions and Composition Properties

| | | Batch Reactor Run Conditions | | | GPC Data | | | DSC Data | |
|---|---|---|---|---|---|---|---|---|---|
| | CSA | C2 loading, g | Octene loading, g | Styrene loading, g | Mw (g/mol) | Mn (g/mol) | PDI (MWD) | Tg, °C | Tm, °C |
| Triblock 2 | AI DHCSA | 7.1 | 21.3 | 5 mL | 353,624 | 13,727 | 25.76 | | none |
| Triblock 3: | AI DHCSA | 8.1 | 40 | 40 | 81,620 | 23,687 | 3.45 | -67 | 264 |
| Diblock 1 | 400 μmol TEA | 8.1 | 40 | 40 | 99,948 | 26,617 | 3.75 | -65 | 252 |
| Diblock 2 | 100 μmol DEZ | 8.1 | 40 | 40 | 169,726 | 41,438 | 4.10 | -66 | 239 |
| IB-2 | none | 8.1 | 40 | 40 | 96,304 | 8,759 | 11.00 | 72 | 212 |

Table 8: 13C NMR Data on Polymer Compositions

| | Triblock 2 | Triblock 3 | Diblock 1 | Diblock 2 | IB-2 |
|---|---|---|---|---|---|
| Styrene (mol%)[a] | 15.2 | 14.4 | 27.7 | 26.7 | 19.3 |
| Octene (mol%)[a] | 13.2 | 28.1 | 27.9 | 21.8 | 12.4 |
| Ethylene (mol%)[a] | 71.7 | 57.4 | 44.4 | 51.5 | 68.3 |
| Styrene (wt%)[b] | 31.2 | 24.0 | 39.7 | 41.7 | 37.8 |
| Octene (wt%)[b] | 29.1 | 50.3 | 43.1 | 36.7 | 26.1 |
| Ethylene (wt%)[b] | 39.7 | 25.7 | 17.1 | 21.6 | 36.1 |
| Molar Ratio of block styrene (b-b in AR)to isolated styrene[c] | 11.8 | 53.2* | 170.0* | 93.1* | 32.2 |
| a) Each mol% polymerized monomer based on the total moles of all polymerized monomers in the composition.<br>b) Each wt% polymerized monomer based on the total weight of all polymerized monomers in the composition.<br>c) The ratio of block styrene to isolated styrene = (Integrals $T_{\beta\beta}$ + $T_{\beta\delta}$)/ Integral $T_{\delta\delta}$. *Almost no $T_{\delta\delta}$ detected. | | | | | |

*GPC Study*

See the above GPC procedure in the Test Methods section. A Polymer Char (Valencia, Spain) high temperature Gel Permeation Chromatography system consisting of an Infrared concentration/composition detector (IR-5) was used for MW and MWD determination. The carrier solvent was 1,2,4-trichlorobenzene (TCB). The auto-sampler and detector compartments were operated at 160°C, and the column compartment was operated at 150°C. Calibration of the GPC column set was performed with 21 narrow molecular weight distribution polystyrene standards. GPC profiles are shown in Figures 10a and 10b. GPC results are shown in Tables 7 and 9. For the molecular weight distributions of dual reactor polymers, values are polystyrene equivalent molecular weights,. As seem from Table 9, the composition containing the triblock polymer has a broader MWD as compared to the in-reactor blend (IB-1).

Table 9: GPC (conv.) Results

| Composition | Mn (g/mol) | Mp (g/mol) | Mw (g/mol) | Mz (g/mol) | Mw/Mn |
|---|---|---|---|---|---|
| Triblock 2 | 13,727 | 386,248 | 353,624 | 1,092,614 | 25.76 |
| IB-1 | 207,112 | 1,255,515 | 1,446,647 | 3,451,127 | 6.98 |

*Tensile Testing Study*

Mechanical properties of two polymer samples are shown in Table 10. See also Figure 11. The samples show elastic recovery behavior.

Table 10: Tensile Testing Data

| Composition | Permanent Set, % Strain | 1st Cycle Hysteresis | 2nd Cycle Hysteresis |
|---|---|---|---|
| Triblock 1 | 79 | 73% | 53% |
| Triblock 2 | 58 | 70% | 56% |

**V. Atactic Polystyrene (aPS): CAT C**

Polymerization Experiments: A glass vial was charged with toluene (final volume 8 mL), styrene (1 mL), and a magnetic stir bar. CAT C (5 umol), "amines, bis(hydrogenated tallow alkyl)methyl, tetrakis(pentafluorophenyl)borate(1-) (1.2 equiv.), and either TEA or DEZ (0, 25, or 100 umol) were sequentially added to the solution. This mixture was heated at 100°C for one hour, then allowed to cool, before being quenched in methanol. Polymer was collected by filtration and dried under vacuum. Results are shown in Table 11. GPC profiles are shown in Figure 12. These results indicate that a chain shuttling process takes place, as indicated by the decrease in molecular weight and decrease in MWD (Mw/Mn) in the presence of DEZ or TEA.

Table 11: Atactic polystyrene (aPS) Prepared with and without a Scandium Catalyst, and in the Presence of Either Zinc or Aluminum Chain Shuttling Agents

| | CAT | CSA. μmol | Mn (g/mol) | Mw (g/mol) | Mw/Mn | Tg (°C) | Tm (°C) | ΔHm (°C) | Activity (g PS/mol Sc) | Yield PS (%) |
|---|---|---|---|---|---|---|---|---|---|---|
| aPS-1 | CAT C | None | 38,851 | 100,584 | 2.59 | 100 | - | - | 32,989 | 31.6 |
| aPS-2 | None | None | 121,846 | 223,366 | 1.83 | 108 | - | - | - | 28.2 |
| aPS-3 | CAT C | DEZ, 25 | 4,681 | 6,622 | 1.41 | 82 | - | - | 23,519 | 14.0 |
| aPS-4 | CAT C | DEZ, 100 | 4,035 | 5,759 | 1.43 | 78 | - | - | 63,148 | 37.5 |
| aPS-5 | CAT C | TEA, 25 | 12,568 | 181,973 | 14.48 | 89 | 263 | 2.4 | 25,185 | 15.0 |
| aPS-6 | CAT C | TEA, 100 | - | - | - | 89 | 262 | 7.9 | 2,222 | 1.3 |

**VI. Ti Complexes**

*PPR Screening of Ti complexes (CAT I). CAT E, and CAT F)*

The Parallel Pressure Reactor (PPR) system was employed in order to demonstrate the viability of styrene polymerization activity and chain shuttling of each polymerization catalyst as noted below. The activity and molecular weight of a given styrene polymerization catalyst candidate relative to the CSA loading was investigated. The CSAs studied were diethylzinc (DEZ, 25 μmoles or 100 μmoles) and triethylaluminum (TEA, 25 μmoles or 100 μmoles) as models for polymeryl alkylzinc or polymeryl aluminum species, respectively. PPR screening conditions were as follows: [ISOPAR-E + MMAO-3A + T] + (Styrene + CSA + "amines, bis(hydrogenated tallow alkyl)methyl, tetrakis(pentafluorophenyl)borate(1-) + Catalyst); Catalyst Loading = 0.25 μmoles; MMAD-3A Loading = 50 μmoles; T = 75°C and 105°C, t = 15 minutes. [Styrene] = 2.1 M (in toluene).

CAT D was screened in the PPR for its ability to polymerize styrene in the presence of the noted chain shuttling agent. Figure 13 demonstrates that the addition of CSA results in a decrease in the molecular weight, indicating the catalyst participates in effective chain shuttling. CAT D exhibits a relatively low efficiency for styrene polymerization. CAT E was screened in the PPR for its ability to polymerize styrene in the presence of the noted chain shuttling agents. Figure 14 demonstrates that the addition of CSA results in a decrease in the molecular weight, indicating the catalyst participates in effective chain shuttling. CAT E exhibits a relatively low efficiency for styrene polymerization. CAT F was screened in the PPR for its ability to polymerize styrene in the presence of the noted chain shuttling agents. Figure 15 demonstrates that the addition of CSA results in a decrease in the molecular weight, indicating the catalyst participates in effective chain shuttling. CAT F exhibits a relatively low efficiency for styrene polymerization.

**Claims**

**1.** A process to form a composition comprising an ethylene/vinylarene diblock interpolymer and/or an ethylene/vinylarene triblock interpolymer, said process comprising at least the following steps:

A) polymerizing in a reactor A, a mixture A comprising ethylene, and optionally an alpha-olefin, and optionally a vinylarene, in the presence of at least the following: a) a metal complex S selected from the following: Formula S1, Formula S2, Formula S3, Formula S4, or Formula S5:

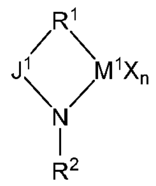

(Formula S1),

wherein $M^1$ is a metal selected from titanium (Ti), zirconium (Zr), or hafnium (Hf); and wherein the metal is in a formal oxidation state of +2, +3, or +4;
each X is independently selected from a substituted or unsubstituted $(C_1-C_{30})$hydrocarbyl, a substituted or unsubstituted $(C_1-C_{30})$heterohydrocarbyl, or -H; and wherein each X is independently a monodentate ligand or a bidentate ligand;
n is 0, 1, or 2, and optionally when n is 1, X may be a bidentate ligand;
$R^1$ is a bridging group comprising from 2 to 41 atoms other than hydrogen, and wherein, optionally, the bond between $R^1$ and M is a pi bond;
$R^2$ is selected from a substituted or an unsubstituted $(C_1-C_{30})$hydrocarbyl group, or a substituted or an unsubstituted $(C_1-C_{30})$heterohydrocarbyl group;
$J^1$ is a bridging group linking N and $R^1$, and comprising from 2 to 40 atoms other than hydrogen, and wherein, optionally, the bridging group comprises a N atom that can interact with the metal ($M^1$) via an electron donative bond; and
wherein the metal complex is overall charge-neutral;

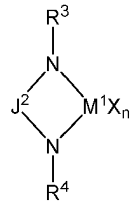

(Formula S2),

wherein $M^1$ is a metal selected from titanium (Ti), zirconium (Zr), or hafnium (Hf); and where the metal is in a formal oxidation state of +2, +3, or +4;
each X is independently selected from a substituted or unsubstituted $(C_1-C_{30})$hydrocarbyl, a substituted or unsubstituted $(C_1-C_{30})$heterohydrocarbyl or -H; and wherein each X is independently a monodentate or a bidentate ligand;
n is 0, 1, or 2, and optionally when n is 1, X may be a bidentate ligand;
each of $R^3$ and $R^4$ is independently selected from a substituted or an unsubstituted $(C_6-C_{20})$aryl group, or a substituted or an unsubstituted $(C_5-C_{20})$heteroaryl group;
N and N are linked by a bridging group, $J^2$, which comprises from 2 to 40 atoms other than hydrogen, and wherein, optionally, the bridging group comprises a N atom that can interact with the metal via an electron donative bond; and
wherein the metal complex is overall charge-neutral;

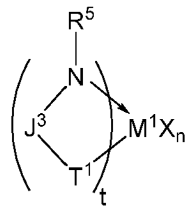

(Formula S3),

wherein $M^1$ is a metal selected from titanium (Ti), zirconium (Zr), or hafnium (Hf); and wherein the metal is in a formal oxidation state of +2, +3, or +4;
each X is independently selected from a substituted or unsubstituted $(C_1-C_{30})$hydrocarbyl, substituted, a unsubstituted $(C_1-C_{30})$heterohydrocarbyl, or -H; and wherein each X is independently a monodentate ligand or a bidentate ligand;
n is 0, 1, or 2, and optionally when n is 1, X may be a bidentate ligand;

$R^5$ is a substituted or unsubstituted $(C_1-C_{30})$hydrocarbyl group, or a substituted or unsubstituted $(C_1-C_{30})$heterohydrocarbyl group, $-Si(R^C)_3$, or -H;
$T^1$ is selected from -O-, -S-, $-N(R^N)-$, or $-P(R^P)-$;
t is 1 or 2;
and wherein $T^1$ and N are linked by a bridging group, denoted by $J^3$, which comprises from 4 to 50 atoms other than hydrogen;
wherein each $R^P$, $R^N$, and $R^C$ in Formula S3 is independently a substituted or unsubstituted $(C_1-C_{30})$hydrocarbyl, a substituted or unsubstituted $(C_1-C_{30})$heterohydrocarbyl, or -H; and
wherein the metal complex is overall charge-neutral;

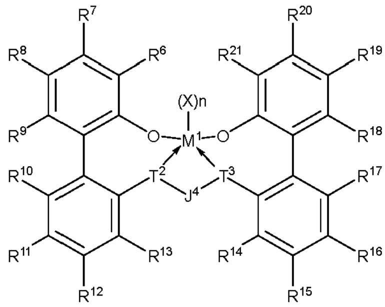
(Formula S4),

wherein $M^1$ is a metal selected from zirconium (Zr) or hafnium (Hf); and wherein the metal is in a formal oxidation state of +2, +3, or +4;
each X is independently selected from a substituted or unsubstituted $(C_1-C_{30})$hydrocarbyl, a substituted or unsubstituted $(C_1-C_{30})$heterohydrocarbyl, or -H; and wherein each X is independently a monodentate ligand or a bidentate ligand;
n is 0, 1, or 2, and optionally when n is 1, X may be a bidentate ligand;
each of $-T^2-$ and $-T^3-$ is independently selected from -O-, -S-, $-N(R^N)-$, or $-P(R^P)-$;
$R^6$ and $R^{21}$ are each independently selected from the group consisting of -H, a substituted or unsubstituted $(C_1-C_{40})$hydrocarbyl, a substituted or unsubstituted $(C_1-C_{40})$heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R)-$, $(R^C)_2NC(O)-$, halogen, radicals having formula (I), radicals having formula (II), and radicals having formula (III):

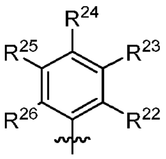
(I),
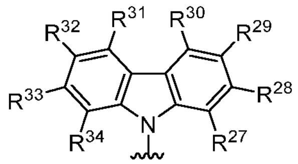
(II),
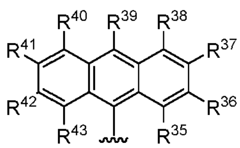
(III),

where each of $R^{22-26}$, $R^{27-34}$, and $R^{35-43}$ is independently selected from a substituted or unsubstituted $(C_1-C_{40})$hydrocarbyl, a substituted or unsubstituted $(C_1-C_{40})$heterohydrocarbyl, $-Si(R^C)_3$, $-Ge(R^C)_3$, $-P(R^P)_2$, $-N(R^N)_2$, $-N=CHR^C$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R^N)-$, $(R^C)_2NC(O)-$, halogen, or -H;
each of $R^{7-20}$ is independently selected from a substituted or unsubstituted $(C_1-C_{40})$hydrocarbyl, a substituted or unsubstituted $(C_1-C_4o)$heterohydro-carbyl, $-Si(R^C)_3$, $-Ge(R^C)_3$, $-P(R^P)_2$, $-N(R^N)_2$, $-N=CHR^C$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R^N)-$, $(R^C)_2NC(O)-$, halogen, or -H;
$J^4$ is a substituted or unsubstituted $(C_1-C_{40})$hydrocarbylene or a substituted or unsubstituted $(C_1-C_{40})$heterohydrocarbylene, wherein the substituted or unsubstituted $(C_1-C_{40})$hydrocarbylene has a portion that comprises a 1-carbon atom to 10-carbon atom linker backbone, linking the groups $T^2$ and $T^3$ in Formula S4 (to which $J^4$ is bonded); or the substituted or unsubstituted $(C_1-C_{40})$heterohydrocarbylene has a portion that comprises a 1-atom to 10-atom linker backbone, linking the groups $T^2$ and $T^3$ in Formula S4, wherein each of the 1 to 10 atoms of the 1-atom to 10-atom linker backbone, independently, is a carbon atom or a heteroatom of a heteroatom group, wherein each heteroatom group is independently O, S, S(O), $S(O)_2$, $Si(R^C)_2$, $Ge(R^C)_2$, $P(R^C)$, or $N(R^C)$, wherein each $R^C$ is independently a substituted or unsubstituted $(C_1-C_{30})$hydrocarbyl or a substituted or unsubstituted $(C_1-C_{30})$heterohydrocarbyl; and wherein each $R^P$, $R^N$, and

remaining $R^C$ in Formula S4 is independently a substituted or unsubstituted $(C_1-C_{30})$hydrocarbyl, a substituted or unsubstituted $(C_1-C_{30})$heterohydrocarbyl, or -H; and
wherein the metal complex is overall charge-neutral; or

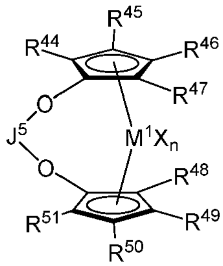

(Formula S5),

wherein $M^1$ is a metal selected from titanium (Ti), zirconium (Zr), or hafnium (Hf); and wherein the metal is in a formal oxidation state of +2, +3, or +4;
each X is independently selected from a substituted or unsubstituted $(C_1-C_{30})$hydrocarbyl, a substituted or unsubstituted $(C_1-C_{30})$heterohydrocarbyl, or -H; and wherein each X is independently a monodentate ligand or a bidentate ligand;
n is 0, 1, or 2, and optionally when n is 1, X may be a bidentate ligand;
$R^{44-51}$ are each independently selected from a substituted or unsubstituted $(C_1\text{-}_{40})$hydrocarbyl, a substituted or unsubstituted $(C_1-C_{40})$heterohydrocarbyl, $-Si(R^C)_3$, or -H; and optionally two or more groups from $R^{44-51}$ are linked, such that that cyclopentadienyl group is a substituted or unsubstituted indenyl group, or a substituted or unsubstituted fluorenyl group; and wherein $R^C$ is independently selected from a substituted or unsubstituted $(C_1-C_{30})$hydrocarbyl, a substituted or unsubstituted $(C_1-C_{30})$heterohydrocarbyl, or -H;
O and O are linked by a bridging group, denoted by $J^5$, which comprises from 1 to 30 atoms other than hydrogen; and
wherein the metal complex is overall charge-neutral;

B) polymerizing in a reactor B, a mixture B comprising ethylene, a vinylarene, and

optionally an alpha-olefin, in the presence of at least the following: b) a metal complex H selected from the following Formula H1 or Formula H2:

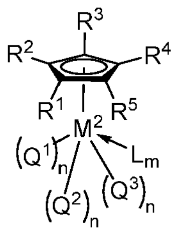

(Formula H1),

wherein $M^2$ is Ti, Sc, Y, or an element from the lanthanide series;
$R^1$, $R^2$, $R^3$, $R^4$, and $R^5$ are each independently H or a substituted or unsubstituted hydrocarbyl group, a substituted or unsubstituted heterohydrocarbyl group;
$Q^1$, $Q^2$, and $Q^3$ are each independently a substituted or unsubstituted hydrocarbyl group, a substituted or unsubstituted heterohydrocarbyl group, or a halogen;
L is a Lewis base; and each n is independently 0 or 1; and m is an integer from 0 to 3; and
wherein optionally at least one L group and at least one Q group are connected, and optionally at least one R group and at least one Q group are connected;
wherein the metal complex is overall charge-neutral;

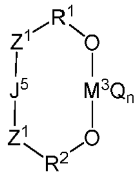 (Formula H2),

wherein $M^3$ is a metal selected from titanium (Ti), zirconium (Zr), or hafnium (Hf); and wherein the metal is in a formal oxidation state of +2, +3, or +4;

each Q is independently selected from a substituted or unsubstituted ($C_1$-$C_{30}$)hydrocarbyl, a substituted or unsubstituted ($C_1$-$C_{30}$)heterohydrocarbyl, or -H; and wherein each Q is independently a monodentate ligand or a bidentate ligand;

n is 0, 1, or 2, and optionally when n is 1, Q may be a bidentate ligand;

$R^1$ and $R^2$ are each independently a bridging group comprising from 2 to 41 atoms other than hydrogen, and wherein, optionally, $R^1$ and $R^2$ each independently may be a substituted or unsubstituted arylene group;

each of $-Z^1-$ and $-Z^2-$ is independently selected from -O-, -S-, -Se-, $-N(R^N)-$, or $-P(R^P)-$; and wherein each of $-Z^1-$ and $-Z^2-$ independently can optionally interact with the metal via an electron donative bond;

$Z^1$ and $Z^2$ are linked by a bridging group, denoted by $J^5$, which comprises from 1 to 50 atoms other than hydrogen;

wherein $R^P$ and $R^N$, are each independently a substituted or unsubstituted ($C_1$-$C_{30}$)-hydrocarbyl, a substituted or unsubstituted ($C_1$-$C_{30}$)heterohydrocarbyl, or -H; and

wherein the metal complex is overall charge-neutral; and

wherein step A occurs before step B, and at least a portion of the reactor product in reactor A is transferred to reactor B; or step B occurs before step A, and at least a portion of the reactor product in reactor B is transferred to reactor A; and

wherein if step A occurs before step B, then at least one chain shuttling agent is fed into the reactor A; and wherein if step B occurs before step A, then at least one chain shuttling agent is fed into the reactor B; and wherein the vinylarene in step A = the vinylarene in step B; and the alpha-olefin in step A = the alpha-olefin in step B.

2. The process of claim 1, wherein the metal complex S is selected from Formula S 1, and the metal complex H is selected from Formula H1.

3. The process of claim 1 or claim 2, wherein, the metal complex S is selected from structure s1a1 or structure s1a2:

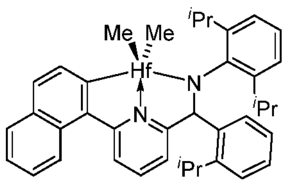 (s1a1) or 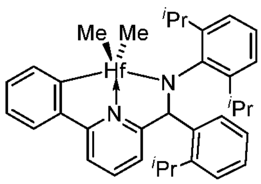 (s1a2).

4. The process of any one of claims 1-3, wherein, the metal complex H is selected from the following formulas h1a1, hla2, hla3, h1b1, hlb2, hlb3, h2al or h2a2 (note: Bn = benzyl group ($Ph-CH_2-$)):

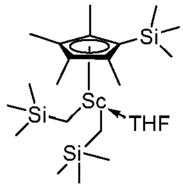 (h1a1), 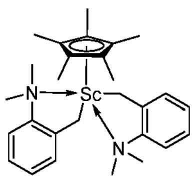 (h1a2), 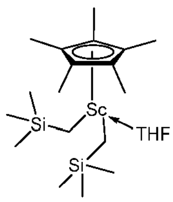 (h1a3), 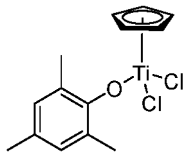 (h1b1),

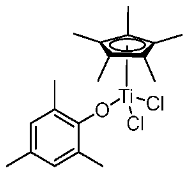 (h1b2), 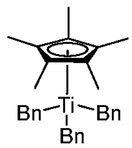 (h1b3), 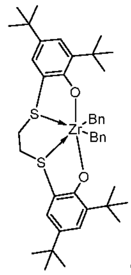 (h2a1), or 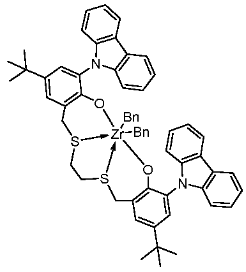 (h2a2).

5. The process of any one of claims 1-4, wherein the at least one chain shuttling agent is selected from the following: an alkyl zinc compound, an alkyl aluminum compound, a dual headed chain shuttling agent, or a combination thereof.

6. The process of any one of claims 1-5, wherein step A occurs before step B; or wherein step B occurs before step A.

7. The process of any one of claims 1-6, wherein, for the ethylene/vinylarene diblock interpolymer or the ethylene/-vinylarene triblock interpolymer, the vinylarene is styrene.

8. The process of any one of claims 1-7, wherein the mixture A comprises the alpha-olefin.

9. A composition formed from the process of any one of claims 1-8.

10. A composition comprising an ethylene/vinylarene diblock interpolymer or an ethylene/vinylarene triblock interpolymer, said diblock interpolymer comprising at least one polymer structure selected from Structure 1, as shown below, and said triblock interpolymer comprising at least one polymer structure selected from Structure 2 or Structure 3, each as shown below, where AR refers to vinylarene-rich and AP refers to vinylarene-poor:

(AR)-(AP) (Structure 1),

(AR)-(AP)-(AR) (Structure 2),

(AP)-(AR)-(AP) (Structure 3);

and

wherein each (AR) segment independently comprises, in polymerized form, ethylene, the vinylarene and optionally an alpha-olefin; and
wherein each (AP) segment independently comprises, in polymerized form, ethylene, optionally the vinylarene and optionally the alpha-olefin; and
wherein each (AR) segment independently comprises, in polymerized form, > 10 mol% of the vinylarene, based on the total moles of polymerized monomers in the (AR) segment; and
wherein each (AP) segment independently comprises, in polymerized form, ≤ 10 mol% of the vinylarene, based on the total moles of polymerized monomers in the (AP) segment.

11. The composition of claim 10, wherein, for the ethylene/vinylarene diblock interpolymer or the ethylene/vinylarene triblock interpolymer, each (AR) segment independently comprises, in polymerized form, from 15 mol% to < 100 mol% of the vinylarene, based on the total moles of polymerized monomers in the (AR) segment; and/or wherein, for the ethylene/vinylarene diblock interpolymer or the ethylene/vinylarene triblock interpolymer, each (AP) segment independently comprises, in polymerized form, from 0 mol% to 10 mol% of the vinylarene, based on the total moles of polymerized monomers in the (AP) segment; and/or
wherein, for the ethylene/vinylarene diblock interpolymer or the ethylene/vinylarene triblock interpolymer, each (AR) segment independently comprises, in polymerized form, from 2.0 mol% to 80 mol% of ethylene, based on the total moles of polymerized monomers in the (AR) segment; and/or wherein, for the ethylene/vinylarene diblock interpolymer or the ethylene/vinylarene triblock interpolymer, each (AP) segment independently comprises, in polymerized form, from 50 mol% to 100 mol% of ethylene, based on the total moles of polymerized monomers in the (AP) segment.

12. The composition of any one of claims 10-11, wherein, for the ethylene/vinylarene diblock interpolymer or triblock

interpolymer, ≥ 20 mol% of the polymerized vinylarene in each (AR) segment is present in a "back to back" configuration as shown below in subsegment bb:

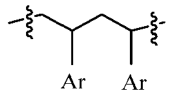

(subsegment bb); and wherein the mol% is based on the total moles of polymerized vinylarene in the (AR) segment.

**13.** The composition of any one of claims 10-12, wherein, for the ethylene/vinylarene diblock interpolymer or triblock interpolymer, ≥ 20 mol% of the polymerized vinylarene in each (AR) segment is present in a syndiotactic "back to back" configuration as shown below in subsegment sbb:

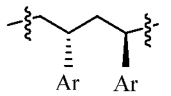

(subsegment sbb); and wherein the mol% is based on the total moles of polymerized vinylarene in the (AR) segment; and/orwherein, for the ethylene/vinylarene diblock interpolymer or triblock interpolymer, none of the polymerized vinylarene in each (AP) segment is present in a "back to back" configuration as shown below in subsegment bb:

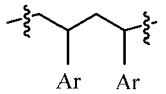

(subsegment bb); and wherein the mol% is based on the total moles of polymerized vinylarene in the (AP) segment.

**14.** The composition of any one of claims 10-13, wherein, for the ethylene/vinylarene diblock interpolymer or triblock interpolymer, the vinylarene is styrene.

**15.** An article comprising at least one component formed from the composition of any one of claims 9-14.

## Patentansprüche

**1.** Verfahren zum Ausbilden einer Zusammensetzung, umfassend ein Ethylen/Vinylarendiblockinterpolymer und/oder ein Ethylen/Vinylarentriblockinterpolymer, das Verfahren umfassend mindestens die folgenden Schritte:

A) Polymerisieren in einem Reaktor A einer Mischung A, umfassend Ethylen und optional ein Alpha-Olefin und optional ein Vinylaren, in der Gegenwart von mindestens dem Folgendem: a) einem Metallkomplex S, der aus dem Folgendem ausgewählt ist: Formel S1, Formel S2, Formel S3, Formel S4 oder Formel S5:

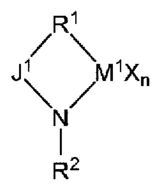

(Formel S1),

wobei $M^1$ ein Metall ist, das aus Titan (Ti), Zirkonium (Zr) oder Hafnium (Hf) ausgewählt ist; und wobei das Metall in einer formalen Oxidationsstufe von +2, +3 oder +4 ist;
jedes X aus einem substituierten oder unsubstituierten $(C_1\text{-}C_{30})$Hydrocarbyl, einem substituierten oder unsubstituierten $(C_1\text{-}C_{30})$Heterohydrocarbyl oder -H unabhängig ausgewählt ist; und wobei jedes X unabhängig ein einzähniger Ligand oder ein zweizähniger Ligand ist;
n 0, 1 oder 2 ist, und optional, wenn n 1 ist, X ein zweizähniger Ligand sein kann;
$R^1$ eine Brückengruppe ist, umfassend von 2 bis 41 Atome außer Wasserstoff, und wobei, optional, die

Bindung zwischen $R^1$ und M eine Pi-Bindung ist;
$R^2$ aus einer substituierten oder einer unsubstituierten $(C_1-C_{30})$Hydrocarbylgruppe oder einer substituierten oder einer unsubstituierten $(C_1-C_{30})$Heterohydrocarbylgruppe ausgewählt ist;
$J^1$ eine Brückengruppe ist, die N und $R^1$ verknüpft, und umfassend von 2 bis 40 Atome außer Wasserstoff, und wobei, optional, die Brückengruppe ein N-Atom umfasst, das über eine elektronenabgebende Bindung mit dem Metall $(M^1)$ interagieren kann; und
wobei der Metallkomplex insgesamt ladungsneutral ist;

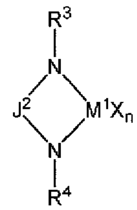
(Formel S2),

wobei $M^1$ ein Metall ist, das aus Titan (Ti), Zirkonium (Zr) oder Hafnium (Hf) ausgewählt ist; und bei dem das Metall in einer formalen Oxidationsstufe von +2, +3 oder +4 ist;
jedes X aus einem substituierten oder unsubstituierten $(C_1-C_{30})$Hydrocarbyl, einem substituierten oder unsubstituierten $(C_1-C_{30})$Heterohydrocarbyl oder -H unabhängig ausgewählt ist; und wobei jedes X unabhängig ein einzähniger oder ein zweizähniger Ligand ist;
n 0, 1 oder 2 ist, und optional, wenn n 1 ist, X ein zweizähniger Ligand sein kann;
jedes von $R^3$ und $R^4$ aus einer substituierten oder einer unsubstituierten $(C_6-C_{20})$Arylgruppe oder einer substituierten oder einer unsubstituierten $(C_5-C_{20})$Heteroarylgruppe unabhängig ausgewählt ist;
N und N durch eine Brückengruppe verknüpft sind, $J^2$, das von 2 bis 40 Atome außer Wasserstoff umfasst, und wobei, optional, die Brückengruppe ein N-Atom umfasst, das über eine elektronenabgebende Bindung mit dem Metall interagieren kann; und
wobei der Metallkomplex insgesamt ladungsneutral ist;

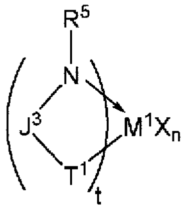
(Formel S3),

wobei $M^1$ ein Metall ist, das aus Titan (Ti), Zirkonium (Zr) oder Hafnium (Hf) ausgewählt ist; und wobei das Metall in einer formalen Oxidationsstufe von +2, +3 oder +4 ist;
jedes X aus einem substituierten oder unsubstituierten $(C_1-C_{30})$Hydrocarbyl, substituiert, einem unsubstituierten $(C_1-C_{30})$Heterohydrocarbyl oder -H unabhängig ausgewählt ist; und wobei jedes X unabhängig ein einzähniger Ligand oder ein zweizähniger Ligand ist;
n 0, 1 oder 2 ist, und optional, wenn n 1 ist, X ein zweizähniger Ligand sein kann;
$R^5$ eine substituierte oder unsubstituierte $(C_1-C_{30})$Hydrocarbylgruppe oder eine substituierte oder unsubstituierte $(C_1-C_{30})$Heterohydrocarbylgruppe, $-Si(R^C)_3$ oder -H ist;
$T^1$ aus -O-, -S-, $-N(R^N)-$ oder $-P(R^P)-$ ausgewählt ist;
t 1 oder 2 ist;
und wobei $T^1$ und N durch eine Brückengruppe verknüpft sind, bezeichnet durch $J^3$, das von 4 bis 50 Atome außer Wasserstoff umfasst;
wobei jedes $R^P$, $R^N$ und $R^C$ in Formel S3 unabhängig ein substituiertes oder unsubstituiertes $(C_1-C_{30})$ Hydrocarbyl, ein substituiertes oder unsubstituiertes $(C_1-C_{30})$Heterohydrocarbyl oder -H ist; und
wobei der Metallkomplex insgesamt ladungsneutral ist;

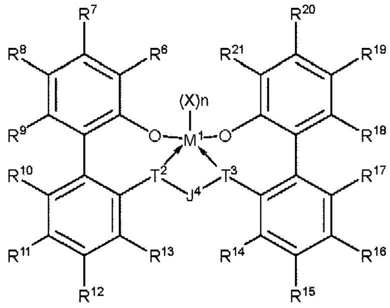

(Formel S4),

wobei $M^1$ ein Metall ist, das aus Zirkonium (Zr) oder Hafnium (Hf) ausgewählt ist; und wobei das Metall in einer formalen Oxidationsstufe von +2, +3 oder +4 ist;
jedes X aus einem substituierten oder unsubstituierten $(C_1-C_{30})$Hydrocarbyl, einem substituierten oder unsubstituierten $(C_1-C_{30})$Heterohydrocarbyl oder -H unabhängig ausgewählt ist; und wobei jedes X unabhängig ein einzähniger Ligand oder ein zweizähniger Ligand ist;
n 0, 1 oder 2 ist, und optional, wenn n 1 ist, X ein zweizähniger Ligand sein kann;
jedes von $-T^2-$ und $-T^3-$ aus -O-, -S-, $-N(R^N)-$ oder $-P(R^P)-$ unabhängig ausgewählt ist;
$R^6$ und $R^{21}$ jeweils aus der Gruppe unabhängig ausgewählt sind, bestehend aus -H, einem substituierten oder unsubstituierten $(C_1-C_{40})$Hydrocarbyl, einem substituierten oder unsubstituierten $(C_1-C_{40})$Heterohydrocarbyl, $-Si(R^C)_3$, $-Ge(R^C)_3$, $-P(R^P)_2$, $-N(R^N)_2$, $-OR^C$, $-SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R)-$, $(R^C)_2NC(O)-$, Halogen, Radikalen, die Formel (I) aufweisen, Radikalen, die Formel (II) aufweisen, und Radikalen, die Formel (III) aufweisen:

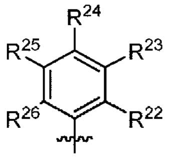 (I), 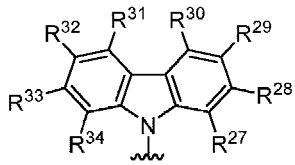 (II), 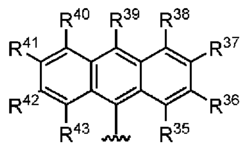 (III),

bei der jeder von $R^{22-26}$, $R^{27-34}$ und $R^{33-43}$ aus einem substituierten oder unsubstituierten$(C_1-C_{40})$Hydrocarbyl, einem substituierten oder unsubstituierten $(C1-C_{40})$Heterohydrocarbyl, $-Si(R^C)_3$, $-Ge(R^C)_3$, $-P(R^P)_2$, $-N(R^N)_2$, $-N=CHR^C$, $-OR^C$, $-SR^C$ , $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R^N)-$, $(R^C)_2NC(O)-$, Halogen oder -H unabhängig ausgewählt ist;
jeweils $R^{7-20}$ aus einem substituierten oder unsubstituierten $(C_1-C_{40})$Hydrocarbyl, einem substituierten oder unsubstituierten $(C_1-C_{40})$Heterohydrocarbyl, $-Si(R^C)_3$, $-Ge(R^C)_3$, $-P(R^P)_2$, $-N(R^N)_2$, $-N=CHR^C$, $-OR^C$, $- SR^C$, $-NO_2$, -CN, $-CF_3$, $R^CS(O)-$, $R^CS(O)_2-$, $(R^C)_2C=N-$, $R^CC(O)O-$, $R^COC(O)-$, $R^CC(O)N(R^N)-$, $(R^C)_2NC(O)-$, Halogen oder -H unabhängig ausgewählt ist;
$J^4$ ein substituiertes oder unsubstituiertes $(C_1-C_{40})$Hydrocarbylen oder ein substituiertes oder unsubstituiertes $(C_1-C_{40})$Heterohydrocarbylen ist, wobei das substituierte oder unsubstituierte $(C_1-C_{40})$Hydrocarbylen einen Anteil aufweist, der ein 1-Kohlenstoffatom bis 10-Kohlenstoffatom Verknüpferrückgrat umfasst, das die Gruppen $T^2$ und $T^3$ in Formel S4 (zu der $J^4$ gebunden ist) verknüpft; oder das substituierte oder unsubstituierte $(C_1-C_{40})$Heterohydrocarbylen einen Anteil aufweist, der ein 1- bis 10-Atom Verknüpferrückgrat umfasst, das die Gruppen $T^2$ und $T^3$ in Formel S4 verknüpft, wobei jedes der 1 bis 10 Atome des 1- bis 10-Atom Verknüpferrückgrats, unabhängig, ein Kohlenstoffatom oder ein Heteroatom einer Heteroatomgruppe ist, wobei jede Heteroatomgruppe unabhängig O, S, S(O), $S(O)_2$, $Si(R^C)_2$, $Ge(R^C)_2$, $P(R^C)$ oder $N(R^C)$ ist, wobei jedes $R^C$ unabhängig ein substituiertes oder unsubstituiertes $(C_1-C_{30})$Hydrocarbyl oder ein substituiertes oder unsubstituiertes $(C_1-C_{30})$Heterohydrocarbyl ist; und wobei jedes $R^P$, $R^N$ und verbleibendes $R^C$ in Formel S4 unabhängig ein substituiertes oder unsubstituiertes $(C_1-C_{30})$Hydrocarbyl, ein substituiertes oder unsubstituiertes $(C_1-C_{30})$Heterohydrocarbyl oder -H ist; und
wobei der Metallkomplex insgesamt ladungsneutral ist; oder

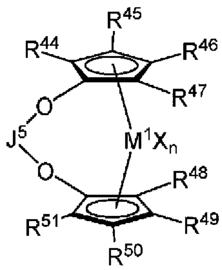

(Formel S5),

wobei $M^1$ ein Metall ist, das aus Titan (Ti), Zirkonium (Zr) oder Hafnium (Hf) ausgewählt ist; und wobei das Metall in einer formalen Oxidationsstufe von +2, +3 oder +4 ist;
jedes X aus einem substituierten oder unsubstituierten $(C_1\text{-}C_{30})$Hydrocarbyl, einem substituierten oder unsubstituierten $(C_1\text{-}C_{30})$Heterohydrocarbyl oder -H unabhängig ausgewählt ist; und wobei jedes X unabhängig ein einzähniger Ligand oder ein zweizähniger Ligand ist;
n 0, 1 oder 2 ist, und optional, wenn n 1 ist, X ein zweizähniger Ligand sein kann;
$R^{44\text{-}51}$ jeweils aus einem substituierten oder unsubstituierten $(C_1\text{-}_{40})$Hydrocarbyl, einem substituierten oder unsubstituierten $(C_1\text{-}C_{40})$Heterohydrocarbyl, $\text{-Si}(R^C)_3$ oder -H unabhängig ausgewählt sind; und optional zwei oder mehr Gruppen aus $R^{44\text{-}51}$ derart verknüpft sind, dass die Cyclopentadienylgruppe eine substituierte oder unsubstituierte Indenylgruppe oder eine substituierte oder unsubstituierte Fluorenylgruppe ist; und wobei $R^C$ aus einem substituierten oder unsubstituierten $(C_1\text{-}C_{30})$Hydrocarbyl, einem substituierten oder unsubstituierten $(C_1\text{-}C_{30})$Heterohydrocarbyl oder -H unabhängig ausgewählt ist;
O und O durch eine Brückengruppe verknüpft sind, bezeichnet durch $J^5$, das von 1 bis 30 Atome außer Wasserstoff umfasst; und
wobei der Metallkomplex insgesamt ladungsneutral ist;

B) Polymerisieren in einem Reaktor B, einer Mischung B, umfassend Ethylen, ein Vinylaren und

optional ein Alpha-Olefin, in der Gegenwart von mindestens dem Folgendem: b) einem Metallkomplex H, der aus der folgenden Formel H1 oder Formel H2 ausgewählt ist:

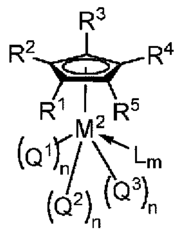

(Formel H1),

wobei $M^2$ Ti, Sc, Y oder ein Element aus der Lanthanidenreihe ist;
$R^1$, $R^2$, $R^3$, $R^4$ und $R^5$ jeweils unabhängig H oder eine substituierte oder unsubstituierte Hydrocarbylgruppe, eine substituierte oder unsubstituierte Heterohydrocarbylgruppe sind;
$Q^1$, $Q^2$ und $Q^3$ jeweils unabhängig eine substituierte oder unsubstituierte Hydrocarbylgruppe, eine substituierte oder unsubstituierte Heterohydrocarbylgruppe oder ein Halogen sind;
L eine Lewis-Base ist; und jedes n unabhängig 0 oder 1 ist; und m eine ganze Zahl von 0 bis 3 ist; und wobei optional mindestens eine L-Gruppe und mindestens eine Q-Gruppe verbunden sind, und optional mindestens eine R-Gruppe und mindestens eine Q-Gruppe verbunden sind;
wobei der Metallkomplex insgesamt ladungsneutral ist;

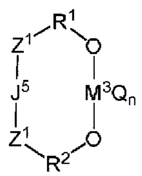

(Formel H2),

wobei $M^3$ ein Metall ist, das aus Titan (Ti), Zirkonium (Zr) oder Hafnium (Hf) ausgewählt ist; und wobei das

Metall in einer formalen Oxidationsstufe von +2, +3 oder +4 ist;
jedes Q aus einem substituierten oder unsubstituierten ($C_1$-$C_{30}$)Hydrocarbyl, einem substituierten oder unsubstituierten ($C_1$-$C_{30}$)Heterohydrocarbyl oder -H unabhängig ausgewählt ist; und wobei jedes Q unabhängig ein einzähniger Ligand oder ein zweizähniger Ligand ist;
n 0, 1 oder 2 ist, und optional, wenn n 1 ist, Q ein zweizähniger Ligand sein kann;
$R^1$ und $R^2$ jeweils unabhängig eine Brückengruppe sind, umfassend von 2 bis 41 Atome außer Wasserstoff, und wobei, optional, $R^1$ und $R^2$ jeweils unabhängig eine substituierte oder unsubstituierte Arylengruppe sein kann;
jedes von -$Z^1$- und -$Z^2$- aus -O-, -S-, -Se-, -N($R^N$)- oder -P($R^P$)-unabhängig ausgewählt ist; und wobei jedes -$Z^1$- und -$Z^2$- unabhängig über eine elektronenabgebenden Bindung mit dem Metall optional interagieren kann;
$Z^1$ und $Z^2$ durch eine Brückengruppe verknüpft sind, bezeichnet durch $J^5$, das von 1 bis 50 Atome außer Wasserstoff umfasst;
wobei $R^P$ und $R^N$ jeweils unabhängig ein substituiertes oder unsubstituiertes ($C_1$-$C_{30}$)Hydrocarbyl, ein substituiertes oder unsubstituiertes ($C_1$-$C_{30}$)Heterohydrocarbyl oder -H sind; und
wobei der Metallkomplex insgesamt ladungsneutral ist; und
wobei Schritt A vor Schritt B erfolgt und mindestens ein Anteil des Reaktorprodukts in Reaktor A zu Reaktor B übertragen wird; oder Schritt B vor Schritt A erfolgt und mindestens ein Anteil des Reaktorprodukts in Reaktor B zu Reaktor A übertragen wird; und
wobei, falls Schritt A vor Schritt B erfolgt, dann mindestens ein Kettentransportmittel in den Reaktor A eingespeist wird; und
wobei, falls Schritt B vor Schritt A erfolgt, dann mindestens ein Kettentransportmittel in den Reaktor B eingespeist wird; und
wobei das Vinylaren in Schritt A = das Vinylaren in Schritt B; und das Alpha-Olefin in Schritt A = das Alpha-Olefin in Schritt B.

2. Verfahren nach Anspruch 1, wobei der Metallkomplex S aus Formel S1 ausgewählt ist und der Metallkomplex H aus Formel H1 ausgewählt ist.

3. Verfahren nach Anspruch 1 oder 2, wobei der Metallkomplex S aus Struktur s1a1 oder Struktur s1a2 ausgewählt ist:

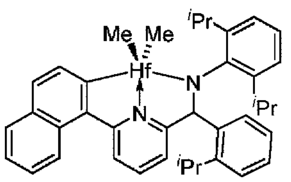 (s1a1) oder 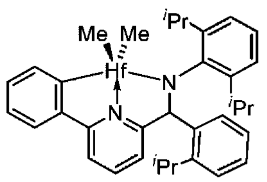 (s1a2).

4. Verfahren nach einem der Ansprüche 1 bis 3, wobei der Metallkomplex H aus den folgenden Formeln h1a1, h1a2, h1a3, h1 b1, h1b2, h1 b3, h2a1 oder h2a2 ausgewählt ist (Anmerkung: Bn = Benzyl Gruppe (Ph-$CH_2$-)):

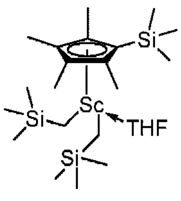 (h1a1), 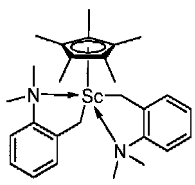 (h1a2), 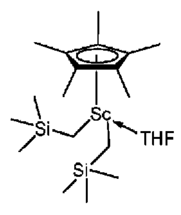 (h1a3), 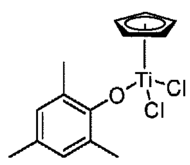

(h1b1), 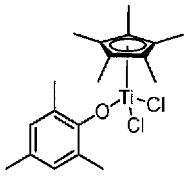 (h1b2), 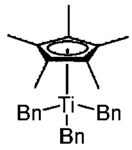 (h1b3), 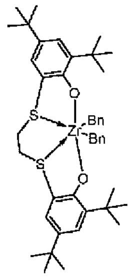 (h2a1), oder

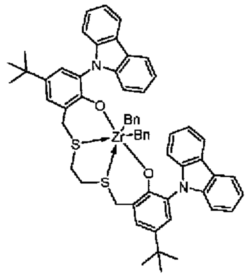 (h2a2).

5. Verfahren nach einem der Ansprüche 1 bis 4, wobei das mindestens eine Kettentransportmittel aus den Folgenden ausgewählt ist: einer Alkylzinkverbindung, einer Alkylaluminiumverbindung, einem doppelköpfigen Kettentransportmittel oder einer Kombination davon.

6. Verfahren nach einem der Ansprüche 1 bis 5, wobei Schritt A vor Schritt B erfolgt; oder wobei Schritt B vor Schritt A erfolgt.

7. Verfahren nach einem der Ansprüche 1 bis 6, wobei, für das Ethylen/Vinylarendiblockinterpolymer oder das Ethylen/Vinylarentriblockinterpolymer, das Vinylaren Styrol ist.

8. Verfahren nach einem der Ansprüche 1 bis 7, wobei die Mischung das Alpha-Olefin umfasst.

9. Zusammensetzung, die aus dem Verfahren nach einem der Ansprüche 1 bis 8 ausgebildet wird.

10. Zusammensetzung, umfassend ein Ethylen/Vinylarendiblockinterpolymer oder ein Ethylen/Vinylarentriblockinterpolymer, das Diblockinterpolymer umfassend mindestens eine Polymerstruktur, die aus Struktur 1 ausgewählt ist, wie unten gezeigt, und das Triblockinterpolymer umfassend mindestens eine Polymerstruktur, die aus Struktur 2 oder Struktur 3 ausgewählt ist, jeweils wie unten gezeigt, bei der AR für vinylarenreich steht und AP für vinylarenarm steht:

(AR)-(AP) (Struktur 1),

(AR)-(AP)-(AR) (Struktur 2),

(AP)-(AR)-(AP) (Struktur 3);

und

wobei jedes (AR)-Segment, in polymerisierter Form, Ethylen, das Vinylaren und optional ein Alpha-Olefin unabhängig umfasst; und
wobei jedes (AP)-Segment, in polymerisierter Form, Ethylen, optional das Vinylaren und optional das Alpha-Olefin unabhängig umfasst; und
wobei jedes (AR)-Segment, in polymerisierter Form, zu > 10 Mol-% das Vinylaren unabhängig umfasst, basierend auf der Gesamtmolzahl der polymerisierten Monomere in dem (AR)-Segment; und
wobei jedes (AP)-Segment, in polymerisierter Form, zu ≤ 10 Mol-% das Vinylaren unabhängig umfasst, basierend auf der Gesamtmolzahl der polymerisierten Monomere in dem (AP)-Segment.

11. Zusammensetzung nach Anspruch 10, wobei für das Ethylen/Vinylarendiblockinterpolymer oder das Ethylen/Vinylarentriblockinterpolymer jedes (AR)-Segment, in polymerisierter Form, von zu 15 Mol-% bis < 100 Mol-% das Vinylaren unabhängig umfasst, basierend auf der Gesamtmolzahl der polymerisierten Monomere in dem (AR)-Segment; und/oder wobei für das Ethylen/Vinylarendiblockinterpolymer oder das Ethylen/Vinylarentriblockinterpolymer jedes (AP)-Segment, in polymerisierter Form, von zu 0 Mol-% bis 10 Mol-% das Vinylaren unabhängig umfasst, basierend auf der Gesamtmolzahl der polymerisierten Monomere in dem (AP)-Segment; und/oder wobei, für das Ethylen/Vinylarendiblockinterpolymer oder das Ethylen/Vinylarentriblockinterpolymer, jedes (AR)-Segment, in polymerisierter Form, von zu 2,0 Mol-% bis 80 Mol-% Ethylen unabhängig umfasst, basierend auf der Gesamtmolzahl der polymerisierten Monomere in dem (AR)-Segment; und/oder wobei, für das Ethylen/Vinylarendiblockinterpolymer oder das Ethylen/Vinylarentriblockinterpolymer, jedes (AP)-Segment, in polymerisierter Form, von zu 50 Mol-% bis 100 Mol-% Ethylen unabhängig umfasst, basierend auf der Gesamtmolzahl der polymerisierten Monomere in dem (AP)-Segment.

**12.** Zusammensetzung nach einem der Ansprüche 10 bis 11, wobei, für das Ethylen/Vinylarendiblockinterpolymer oder -triblockinterpolymer, zu ≥ 20 Mol-% das polymerisierte Vinylaren in jedem (AR)-Segment in einer "Rücken an Rücken"-Konfiguration vorliegen, wie unten in dem Untersegment bb gezeigt:

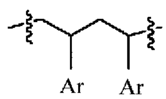

(Untersegment bb); und wobei die Mol-% auf der Gesamtmolzahl des polymerisierten Vinylarens in dem (AR)-Segment basieren.

**13.** Zusammensetzung nach einem der Ansprüche 10 bis 12, wobei, für das Ethylen/Vinylarendiblockinterpolymer oder -triblockinterpolymer, zu ≥ 20 Mol-% das polymerisierte Vinylaren in jedem (AR)-Segment in einer syndiotaktischen "Rücken an Rücken"-Konfiguration vorliegen, wie unten im Untersegment sbb gezeigt:

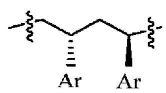

(Untersegment sbb); und wobei die Mol-% auf der Gesamtmolzahl des polymerisierten Vinylarens in dem (AR)-Segment basieren; und/oder wobei, für das Ethylen/Vinylarendiblockinterpolymer oder -triblockinterpolymer, keines der polymerisierten Vinylarene in jedem (AP)-Segment in einer "Rücken-an-Rücken"-Konfiguration vorliegt, wie unten in dem Untersegment bb gezeigt:

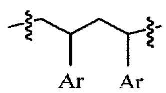

(Untersegment bb); und wobei die Mol-% auf der Gesamtmolzahl des polymerisierten Vinylarens in dem (AP)-Segment basieren.

**14.** Zusammensetzung nach einem der Ansprüche 10 bis 13, wobei, für das Ethylen/Vinylarendiblockinterpolymer oder -triblockinterpolymer, das Vinylaren Styrol ist.

**15.** Artikel, umfassend mindestens eine Komponente, die aus der Zusammensetzung nach einem der Ansprüche 9 bis 14 ausgebildet ist.

## Revendications

**1.** Procédé permettant de former une composition comprenant un interpolymère dibloc éthylène/vinylarène et/ou un interpolymère tribloc éthylène/vinylarène, ledit procédé comprenant au moins les étapes suivantes :

A) la polymérisation dans un réacteur A, d'un mélange A comprenant de l'éthylène, et facultativement une alpha-oléfine, et facultativement un vinylarène, en présence d'au moins ce qui suit : a) un complexe métallique S choisi

parmi ce qui suit : Formule S1, Formule S2, Formule S3, Formule S4, ou Formule S5 :

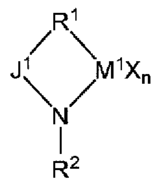

(Formule S1),

dans lequel $M^1$ est un métal choisi parmi titane (Ti), zirconium (Zr), ou hafnium (Hf) ; et dans lequel le métal est dans un état d'oxydation formel de +2, +3, ou +4 ;
chaque X est choisi indépendamment parmi un hydrocarbyle en $C_1$-$C_{30}$ substitué ou non substitué, un hétérohydrocarbyle en $C_1$-$C_{30}$ substitué ou non substitué, ou -H ; et dans lequel chaque X est indépendamment un ligand monodentate ou un ligand bidentate ;
n vaut 0, 1, ou 2, et facultativement lorsque n vaut 1, X peut être un ligand bidentate ;
$R^1$ est un groupe pontant comprenant de 2 à 41 atomes autres que l'hydrogène, et dans lequel, facultativement, la liaison entre $R^1$ et M est une liaison pi ;
$R^2$ est choisi parmi un groupe hydrocarbyle en $C_1$-$C_{30}$ substitué ou non substitué, ou un groupe hétérohydrocarbyle en $C_1$-$C_{30}$ substitué ou non substitué ;
$J^1$ est un groupe pontant liant N et $R^1$, et comprenant de 2 à 40 atomes autres que l'hydrogène, et dans lequel, facultativement, le groupe pontant comprend un atome N qui peut interagir avec le métal ($M^1$) par le biais d'une liaison donneuse d'électrons ; et
dans lequel le complexe métallique a une charge globalement neutre ;

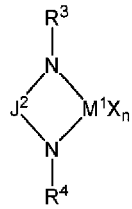

(Formule S2),

dans lequel $M^1$ est un métal choisi parmi titane (Ti), zirconium (Zr), ou hafnium (Hf) ; et où le métal est dans un état d'oxydation formel de +2, +3, ou +4 ;
chaque X est choisi indépendamment parmi un hydrocarbyle en $C_1$-$C_{30}$ substitué ou non substitué, un hétérohydrocarbyle en $C_1$-$C_{30}$ substitué ou non substitué ou -H ; et dans lequel chaque X est indépendamment un ligand monodentate ou bidentate ;
n vaut 0, 1, ou 2, et facultativement lorsque n vaut 1, X peut être un ligand bidentate ;
chacun de $R^3$ et $R^4$ est choisi indépendamment parmi un groupe aryle en $C_6$-$C_{20}$ substitué ou non substitué, ou un groupe hétéroaryle en $C_5$-$C_{20}$ substitué ou non substitué ;
N et N sont liés par un groupe pontant, $J^2$, qui comprend de 2 à 40 atomes autres que l'hydrogène, et dans lequel, facultativement, le groupe pontant comprend un atome N qui peut interagir avec le métal par le biais d'une liaison donneuse d'électrons ; et
dans lequel le complexe métallique a une charge globalement neutre ;

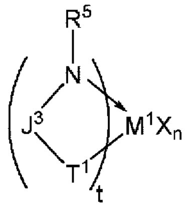

(Formule S3),

dans lequel $M^1$ est un métal choisi parmi titane (Ti), zirconium (Zr), ou hafnium (Hf) ; et dans lequel le métal est dans un état d'oxydation formel de +2, +3, ou +4 ;
chaque X est choisi indépendamment parmi un hydrocarbyle en $C_1$-$C_{30}$ substitué ou non substitué, substitué, un hétérohydrocarbyle en $C_1$-$C_{30}$ non substitué, ou -H ; et dans lequel chaque X est indépendamment un ligand monodentate ou un ligand bidentate ;
n vaut 0, 1, ou 2, et facultativement lorsque n vaut 1, X peut être un ligand bidentate ;
$R^5$ est un groupe hydrocarbyle en $C_1$-$C_{30}$ substitué ou non substitué, ou un groupe hétérohydrocarbyle en $C_1$-$C_{30}$ substitué ou non substitué, -$Si(R^C)_3$, ou -H ;
$T^1$ est choisi parmi -O-, -S-, -$N(R^N)$-, ou -$P(R^P)$- ;
t vaut 1 ou 2 ;
et dans lequel $T^1$ et N sont liés par un groupe pontant, désigné par $J^3$, qui comprend de 4 à 50 atomes autres que l'hydrogène ;
dans lequel chaque $R^P$, $R^N$, et $R^C$ dans la Formule S3 est indépendamment un hydrocarbyle en $C_1$-$C_{30}$ substitué ou non substitué, un hétérohydrocarbyle en $C_1$-$C_{30}$ substitué ou non substitué, ou -H ; et dans lequel le complexe métallique a une charge globalement neutre ;

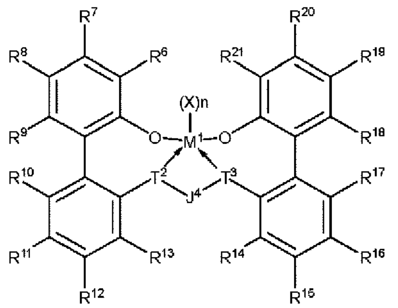
(Formule S4),

dans lequel $M^1$ est un métal choisi parmi zirconium (Zr) ou hafnium (Hf) ; et dans lequel le métal est dans un état d'oxydation formel de +2, +3, ou +4 ;
chaque X est choisi indépendamment parmi un hydrocarbyle en $C_1$-$C_{30}$ substitué ou non substitué, un hétérohydrocarbyle en $C_1$-$C_{30}$ substitué ou non substitué, ou -H ; et dans lequel chaque X est indépendamment un ligand monodentate ou un ligand bidentate ;
n vaut 0, 1, ou 2, et facultativement lorsque n vaut 1, X peut être un ligand bidentate ;
chacun de -$T^2$- et -$T^3$- est choisi indépendamment parmi -O-, -S-, - $N(R^N)$-, ou -$P(R^P)$- ;
$R^6$ et $R^{21}$ sont chacun choisis indépendamment dans le groupe constitué de -H, un hydrocarbyle en $C_1$-$C_{40}$ substitué ou non substitué, un hétérohydrocarbyle en $C_1$-$C_{40}$ substitué ou non substitué, -$Si(R^C)_3$, -$Ge(R^C)_3$, - $P(R^P)_2$, -$N(R^N)_2$, -$OR^C$, -$SR^C$, -$NO_2$, -CN, -$CF_3$, $R^CS(O)$-, $R^CS(O)_2$-, $(R^C)_2C{=}N$-, $R^CC(O)O$-, $R^COC(O)$-, $R^CC(O)N(R)$-, $(R^C)_2NC(O)$-, halogène, des radicaux ayant la formule (I), des radicaux ayant la formule (II), et des radicaux ayant la formule (III) :

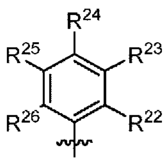
(I),
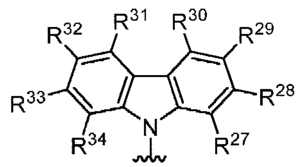
(II),
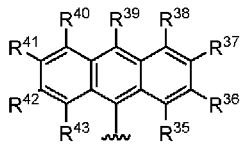
(III),

où chacun de $R^{22-26}$, $R^{27-34}$, et $R^{33-43}$ est choisi indépendamment parmi un hydrocarbyle en $C_1$-$C_{40}$ substitué ou non substitué, un hétérohydrocarbyle en $C_1$-$C_{40}$ substitué ou non substitué, -$Si(R^C)_3$, -$Ge(R^C)_3$, -$P(R^P)_2$, -$N(R^N)_2$, -$N{=}CHR^C$, - $OR^C$, -$SR^C$, -$NO_2$, -CN, -$CF_3$, $R^CS(O)$ -, $R^CS(O)_2$-, $(R^C)_2C{=}N$-, $R^CC(O)O$-, $R^COC(O)$ -, $R^CC(O)N(R^N)$ -, $(R^C)_2NC(O)$ -, halogène, ou -H ;
chacun de $R^{7-20}$ est choisi indépendamment parmi un hydrocarbyle en $C_1$-$C_{40}$ substitué ou non substitué, un hétérohydrocarbyle en $C_1$-$C_{40}$ substitué ou non substitué, -$Si(R^C)_3$, -$Ge(R^C)_3$, -$P(R^P)_2$, -$N(R^N)_2$, -$N{=}CHR^C$, -$OR^C$, -$SR^C$, -$NO_2$, - CN, -$CF_3$, $R^CS(O)$-, $R^CS(O)_2$-, $(R^C)_2C{=}N$-, $R^CC(O)O$-, $R^COC(O)$-, $R^CC(O)N(R^N)$-, $(R^C)_2NC(O)$-, halogène, ou -H ;
$J^4$ est un hydrocarbylène en $C_1$-$C_{40}$ substitué ou non substitué ou un hétérohydrocarbylène en $C_1$-$C_{40}$ substitué ou non substitué, dans lequel l'hydrocarbylène en $C_1$-$C_{40}$ substitué ou non substitué a une partie qui comprend un squelette de liaison de 1 atome de carbone à 10 atomes de carbone, liant les groupes $T^2$ et $T^3$ dans la Formule S4 (à laquelle $J^4$ est lié) ; ou l'hétérohydrocarbylène en $C_1$-$C_{40}$ substitué ou non substitué a une partie qui comprend un squelette de liaison de 1 atome à 10 atomes, liant les groupes $T^2$ et $T^3$ dans la Formule S4, dans lequel chacun des 1 à 10 atomes du squelette de liaison de 1 atome à 10 atomes, indépendamment, est un atome de carbone ou un hétéroatome d'un groupe d'hétéroatomes, dans lequel

chaque groupe d'hétéroatomes est indépendamment O, S, S(O), $S(O)_2$, $Si(R^C)_2$, $Ge(R^C)_2$, $P(R^C)$, ou $N(R^C)$, dans lequel chaque $R^C$ est indépendamment un hydrocarbyle en $C_1$-$C_{30}$ substitué ou non substitué ou un hétérohydrocarbyle en $C_1$-$C_{30}$ substitué ou non substitué ; et dans lequel chaque $R^P$, $R^N$, et $R^C$ restant dans la Formule S4 est indépendamment un hydrocarbyle en $C_1$-$C_{30}$ substitué ou non substitué, un hétérohydrocarbyle en $C_1$-$C_{30}$ substitué ou non substitué, ou -H ; et

dans lequel le complexe métallique a une charge globalement neutre ; ou

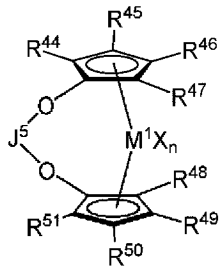

(Formule S5),

dans lequel $M^1$ est un métal choisi parmi titane (Ti), zirconium (Zr), ou hafnium (Hf) ; et dans lequel le métal est dans un état d'oxydation formel de +2, +3, ou +4 ;

chaque X est choisi indépendamment parmi un hydrocarbyle en $C_1$-$C_{30}$ substitué ou non substitué, un hétérohydrocarbyle en $C_1$-$C_{30}$ substitué ou non substitué, ou -H ; et dans lequel chaque X est indépendamment un ligand monodentate ou un ligand bidentate ;

n vaut 0, 1, ou 2, et facultativement lorsque n vaut 1, X peut être un ligand bidentate ;

$R^{44-51}$ sont chacun choisis indépendamment parmi un hydrocarbyle en $C_1$-$C_{40}$ substitué ou non substitué, un hétérohydrocarbyle en $C_1$-$C_{40}$ substitué ou non substitué, $-Si(R^C)_3$, ou -H ; et facultativement deux groupes de $R^{44-51}$ ou plus sont liés, de telle sorte que ce groupe cyclopentadiényle est un groupe indényle substitué ou non substitué, ou un groupe fluorényle substitué ou non substitué ; et dans lequel $R^C$ est choisi indépendamment parmi un hydrocarbyle en $C_1$-$C_{30}$ substitué ou non substitué, un hétérohydrocarbyle en $C_1$-$C_{30}$ substitué ou non substitué, ou -H ;

O et O sont liés par un groupe pontant, désigné par $J^5$, qui comprend de 1 à 30 atomes autres que l'hydrogène ; et

dans lequel le complexe métallique a une charge globalement neutre ;

B) la polymérisation dans un réacteur B d'un mélange B comprenant de l'éthylène, un vinylarène, et

facultativement une alpha-oléfine, en présence d'au moins ce qui suit : b) un complexe métallique H choisi parmi la Formule H1 ou la Formule H2 suivante :

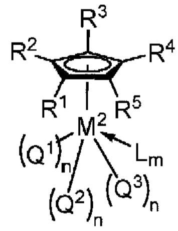

(Formule H1),

dans lequel $M^2$ est Ti, Sc, Y, ou un élément de la série des lanthanides ;

$R^1$, $R^2$, $R^3$, $R^4$, et $R^5$ sont chacun indépendamment H ou un groupe hydrocarbyle substitué ou non substitué, un groupe hétérohydrocarbyle substitué ou non substitué ;

$Q^1$, $Q^2$, et $Q^3$ sont chacun indépendamment un groupe hydrocarbyle substitué ou non substitué, un groupe hétérohydrocarbyle substitué ou non substitué, ou un halogène ;

L est une base de Lewis ; et chaque n vaut indépendamment 0 ou 1 ; et m est un nombre entier valant de 0 à 3 ; et

dans lequel facultativement au moins un groupe L et au moins un groupe Q sont reliés, et facultativement au moins un groupe R et au moins un groupe Q sont reliés ;

dans lequel le complexe métallique a une charge globalement neutre ;

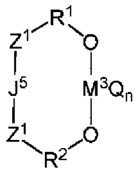 (Formule H2),

dans lequel $M^3$ est un métal choisi parmi titane (Ti), zirconium (Zr), ou hafnium (Hf) ; et dans lequel le métal est dans un état d'oxydation formel de +2, +3, ou +4 ;
chaque Q est choisi indépendamment parmi un hydrocarbyle en $C_1$-$C_{30}$ substitué ou non substitué, un hétérohydrocarbyle en $C_1$-$C_{30}$ substitué ou non substitué, ou -H ; et dans lequel chaque Q est indépendamment un ligand monodentate ou un ligand bidentate ;
n vaut 0, 1, ou 2, et facultativement lorsque n vaut 1, Q peut être un ligand bidentate ;
$R^1$ et $R^2$ sont chacun indépendamment un groupe pontant comprenant de 2 à 41 atomes autres que l'hydrogène, et dans lequel, facultativement, $R^1$ et $R^2$ peuvent chacun indépendamment être un groupe arylène substitué ou non substitué ;
chacun de -$Z^1$- et -$Z^2$- est choisi indépendamment parmi -O-, -S-, , -Se-, -N($R^N$)-, ou -P($R^P$)- ; et dans lequel chacun de -$Z^1$- et -$Z^2$-, indépendamment, peut facultativement interagir avec le métal par le biais d'une liaison donneuse d'électrons ;
$Z^1$ et $Z^2$ sont liés par un groupe pontant, désigné par $J^5$, qui comprend de 1 à 50 atomes autres que l'hydrogène ;
dans lequel $R^P$ et $R^N$ sont chacun indépendamment un hydrocarbyle en $C_1$-$C_{30}$ substitué ou non substitué, un hétérohydrocarbyle en $C_1$-$C_{30}$ substitué ou non substitué, ou -H ; et
dans lequel le complexe métallique a une charge globalement neutre ; et
dans lequel l'étape A se produit avant l'étape B, et au moins une partie du produit de réacteur dans le réacteur A est transférée dans le réacteur B ; ou l'étape B se produit avant l'étape A, et au moins une partie du produit de réacteur dans le réacteur B est transférée dans le réacteur A ; et
dans lequel, si l'étape A se produit avant l'étape B, alors au moins un agent de transfert de chaîne est introduit dans le réacteur A ; et
dans lequel, si l'étape B se produit avant l'étape A, alors au moins un agent de transfert de chaîne est introduit dans le réacteur B ; et
dans lequel le vinylarène de l'étape A = le vinylarène de l'étape B ; et l'alpha-oléfine de l'étape A = l'alpha-oléfine de l'étape B.

2. Procédé selon la revendication 1, dans lequel le complexe métallique S est choisi parmi la Formule S1, et le complexe métallique H est choisi parmi la Formule H1.

3. Procédé selon la revendication 1 ou la revendication 2, dans lequel le complexe métallique S est choisi parmi la structure s1a1 ou la structure s1a2 :

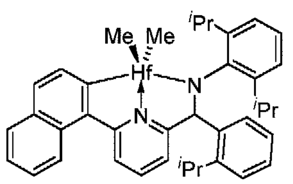 (s1a1) ou 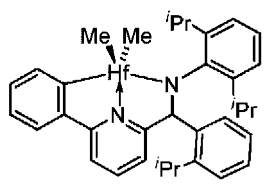 (s1a2).

4. Procédé selon l'une quelconque des revendications 1 à 3, dans lequel le complexe métallique H est choisi parmi les formules h1a1, h1a2, h1a3, h1 b1, h1b2, h1b3, h2a1, ou h2a2 suivantes (note : Bn = groupe benzyle (Ph-$CH_2$-)) :

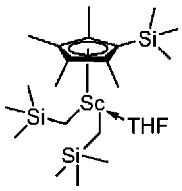 (h1a1), 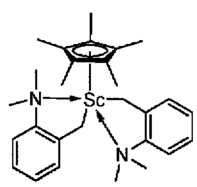 (h1a2), 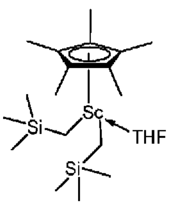 (h1a3), 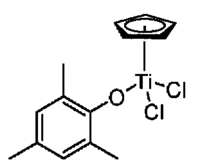

(h1b1), 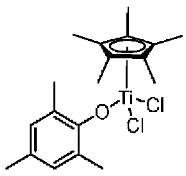 (h1b2), 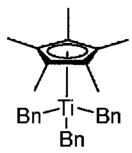 (h1b3), 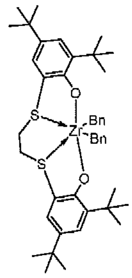 (h2a1), ou

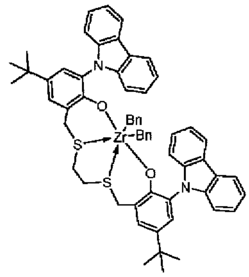 (h2a2).

**5.** Procédé selon l'une quelconque des revendications 1 à 4, dans lequel l'au moins un agent de transfert de chaîne est choisi parmi ce qui suit : un composé alkylzinc, un composé alkylaluminium, un agent de transfert de chaîne à tête double, ou une combinaison de ceux-ci.

**6.** Procédé selon l'une quelconque des revendications 1 à 5, dans lequel l'étape A se produit avant l'étape B ; ou dans lequel l'étape B se produit avant l'étape A.

**7.** Procédé selon l'une quelconque des revendications 1 à 6, dans lequel, pour l'interpolymère dibloc éthylène/vinylarène ou l'interpolymère tribloc éthylène/vinylarène, le vinylarène est le styrène.

**8.** Procédé selon l'une quelconque des revendications 1 à 7, dans lequel le mélange A comprend l'alpha-oléfine.

**9.** Composition préparée par le procédé selon l'une quelconque des revendications 1 à 8.

**10.** Composition comprenant un interpolymère dibloc éthylène/vinylarène ou un interpolymère tribloc éthylène/vinylarène, ledit interpolymère dibloc comprenant au moins une structure polymère choisie parmi la Structure 1, comme indiqué ci-après, et ledit interpolymère tribloc comprenant au moins une structure polymère choisie parmi la Structure 2 ou la Structure 3, chacune comme indiqué ci-après, où AR se réfère à riche en vinylarène et AP se réfère à pauvre en vinylarène :

(AR)-(AP) (Structure 1),

(AR)-(AP)-(AR) (Structure 2),

(AP)-(AR)-(AP) (Structure 3) ;

et

dans laquelle chaque segment (AR) comprend indépendamment, sous forme polymérisée, de l'éthylène, le vinylarène et facultativement une alpha-oléfine ; et
dans laquelle chaque segment (AP) comprend indépendamment, sous forme polymérisée, de l'éthylène, facultativement le vinylarène et facultativement l'alpha-oléfine ; et
dans laquelle chaque segment (AR) comprend indépendamment, sous forme polymérisée, > 10 % en moles du vinylarène, sur la base du nombre total de moles de monomères polymérisés dans le segment (AR) ; et
dans laquelle chaque segment (AP) comprend indépendamment, sous forme polymérisée, ≤ 10 % en moles du vinylarène, sur la base du nombre total de moles de monomères polymérisés dans le segment (AP).

**11.** Composition selon la revendication 10, dans laquelle, pour l'interpolymère dibloc éthylène/vinylarène ou l'interpolymère tribloc éthylène/vinylarène, chaque segment (AR) comprend indépendamment, sous forme polymérisée, de 15 % en moles à < 100 % en moles du vinylarène, sur la base du nombre total de moles de monomères polymérisés dans le segment (AR) ; et/ou dans laquelle, pour l'interpolymère dibloc éthylène/vinylarène ou l'interpolymère tribloc éthylène/vinylarène, chaque segment (AP) comprend indépendamment, sous forme polymérisée, de 0 % en moles en 10 % en moles du vinylarène, sur la base du nombre total de moles de monomères polymérisés dans le segment (AP) ; et/ou

dans laquelle, pour l'interpolymère dibloc éthylène/vinylarène ou l'interpolymère tribloc éthylène/vinylarène, chaque segment (AR) comprend indépendamment, sous forme polymérisée, de 2,0 % en moles à 80 % en moles d'éthylène, sur la base du nombre total de moles de monomères polymérisés dans le segment (AR) ; et/ou dans laquelle, pour l'interpolymère dibloc éthylène/vinylarène ou l'interpolymère tribloc éthylène/vinylarène, chaque segment (AP) comprend indépendamment, sous forme polymérisée, de 50 % en moles à 100 % en moles d'éthylène, sur la base du nombre total de moles de monomères polymérisés dans le segment (AP).

**12.** Composition selon l'une quelconque des revendications 10 et 11, dans laquelle, pour l'interpolymère dibloc éthylène/vinylarène ou l'interpolymère tribloc, ≥ 20 % en moles du vinylarène polymérisé dans chaque segment (AR) est présent dans une configuration « dos à dos » comme illustré ci-après dans le sous-segment bb :

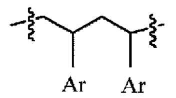

(sous-segment bb) ; et dans laquelle le % en moles est basé sur le nombre total de moles de vinylarène polymérisé dans le segment (AR).

**13.** Composition selon l'une quelconque des revendications 10 à 12, dans laquelle, pour l'interpolymère dibloc ou interpolymère tribloc éthylène/vinylarène, ≥ 20 % en moles du vinylarène polymérisé dans chaque segment (AR) est présent dans une configuration syndiotactique « dos à dos », comme illustré ci-après dans le sous-segment sbb :

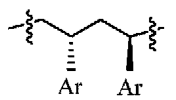

(sous-segment sbb) ; et dans laquelle le % en moles est basé sur le nombre total de moles de vinylarène polymérisé dans le segment (AR) ; et/ou dans laquelle, pour l'interpolymère dibloc ou l'interpolymère tribloc éthylène/vinylarène, aucun des vinylarènes polymérisés dans chaque segment (AP) n'est présent dans une configuration « dos à dos » comme illustré ci-après dans le sous-segment bb :

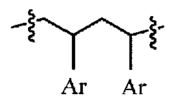

(sous-segment bb) ; et dans laquelle le % en moles est basé sur le nombre total de moles de vinylarène polymérisé dans le segment (AP).

**14.** Composition selon l'une quelconque des revendications 10 à 13, dans laquelle, pour l'interpolymère dibloc ou l'interpolymère tribloc éthylène/vinylarène, le vinylarène est le styrène.

**15.** Article comprenant au moins un composant formé à partir de la composition selon l'une quelconque des revendications 9 à 14.

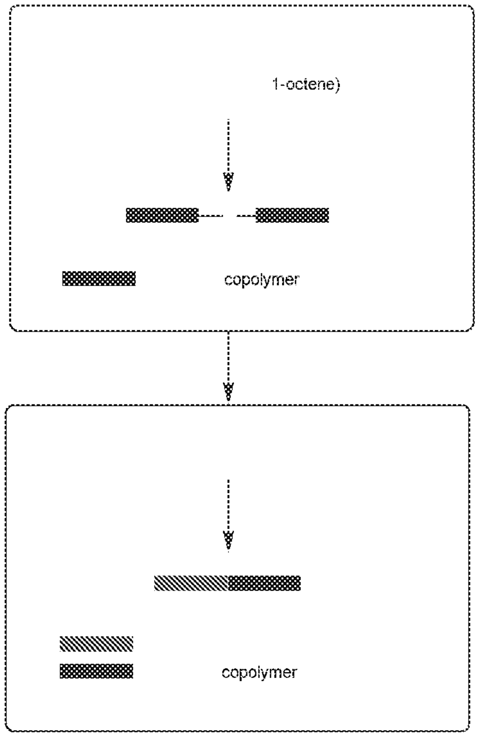


(a)

FIGURE 1A

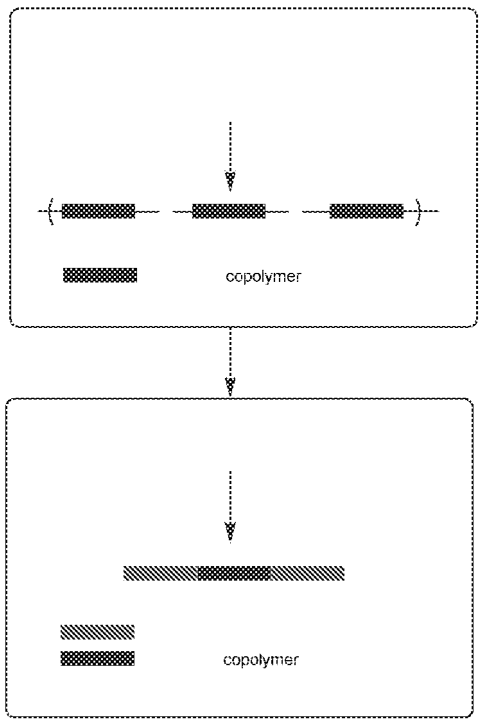


(b)

FIGURE 1B

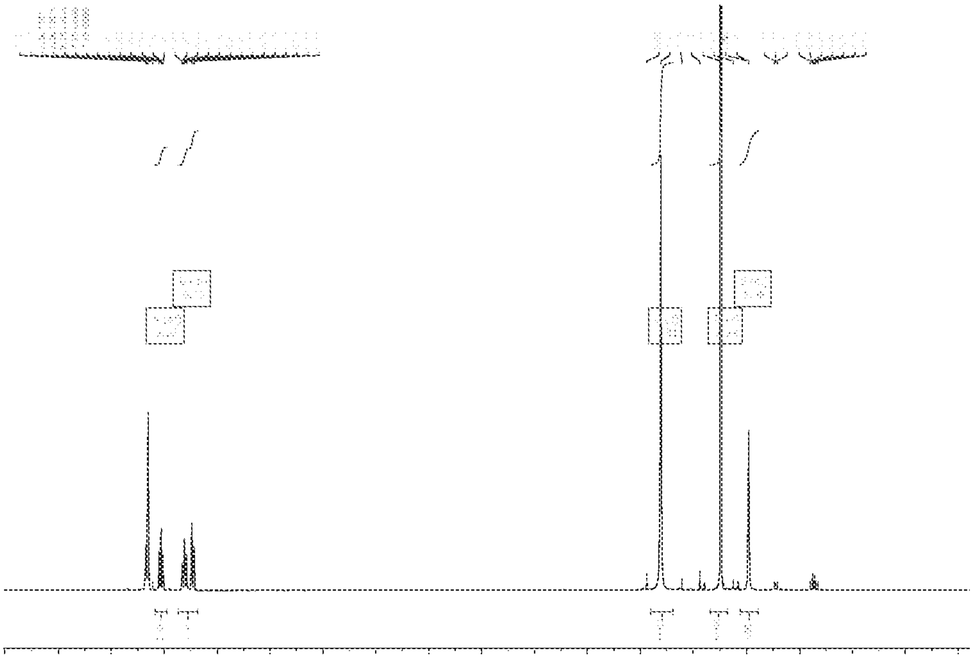

FIGURE 2

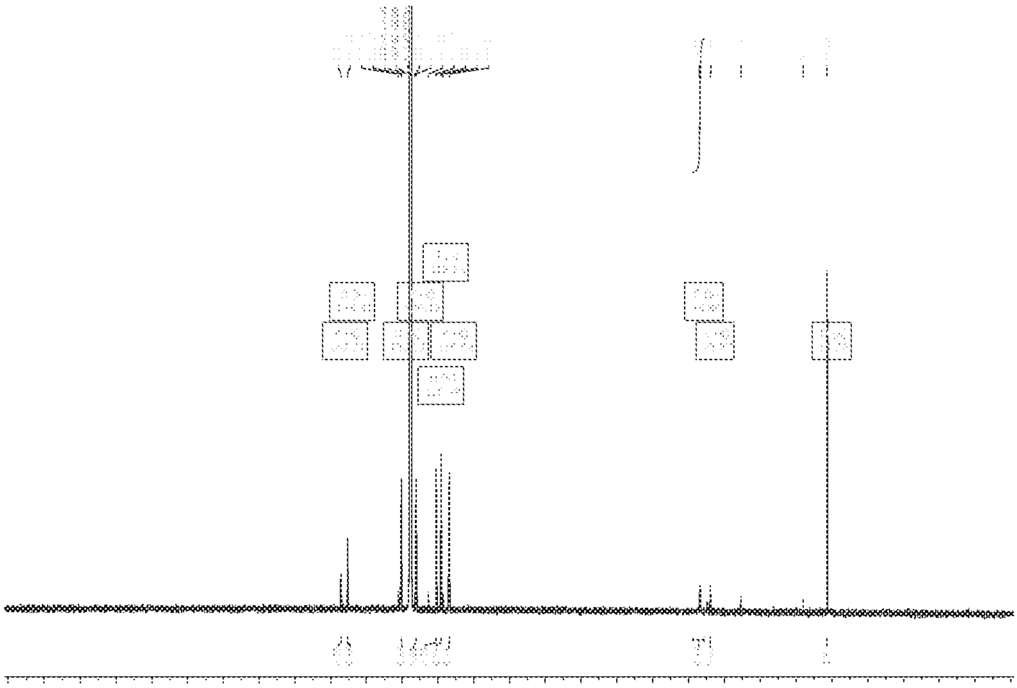

FIGURE 3

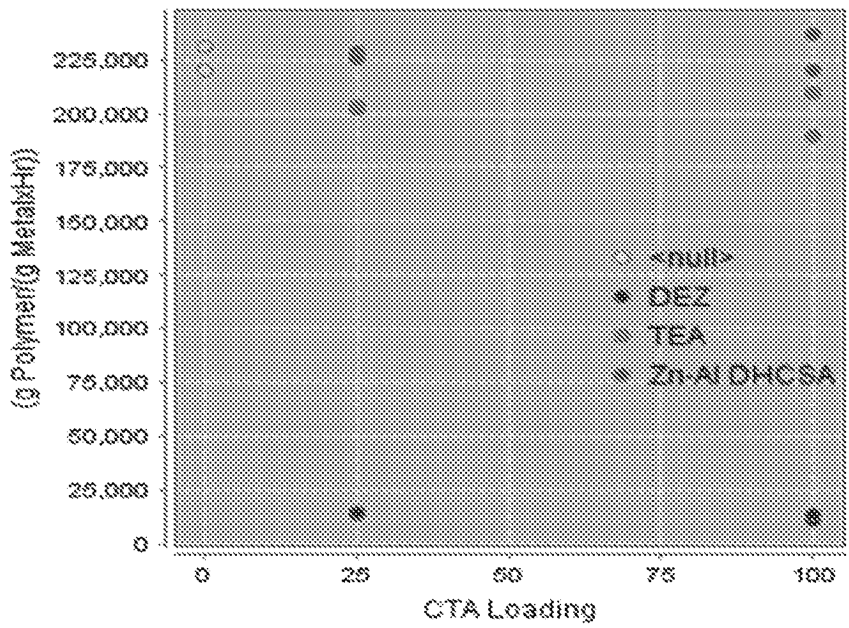


FIGURE 4

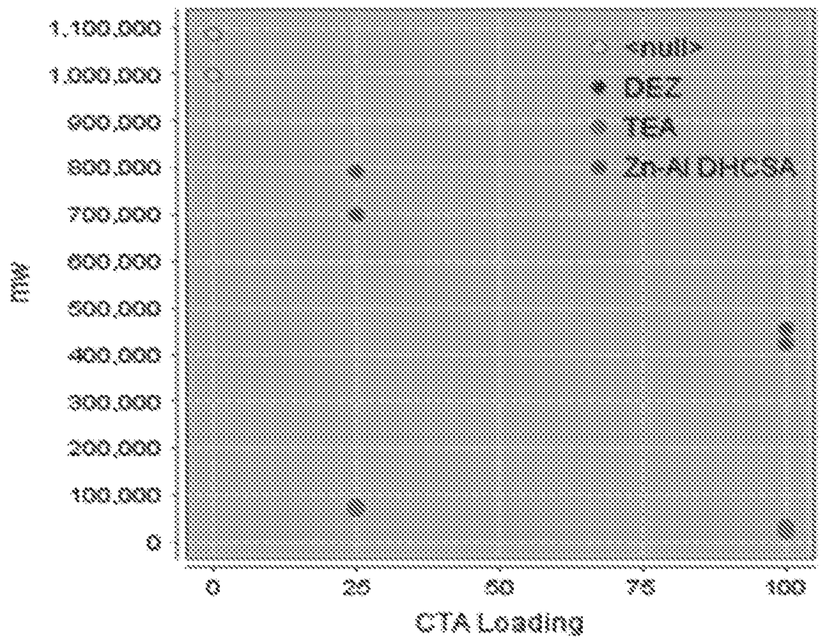


FIGURE 5

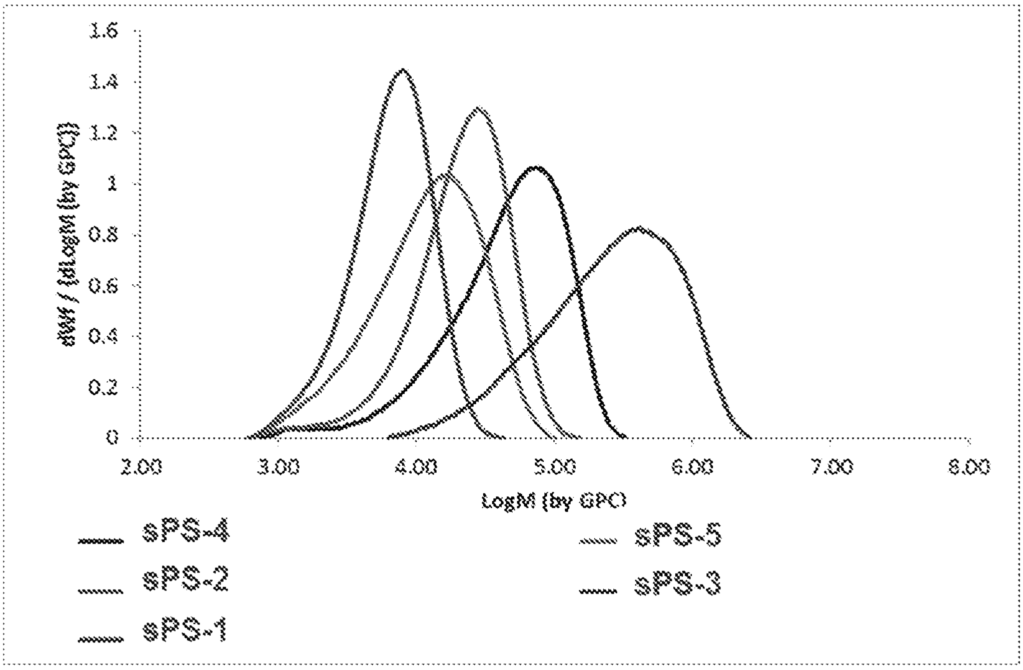


FIGURE 6

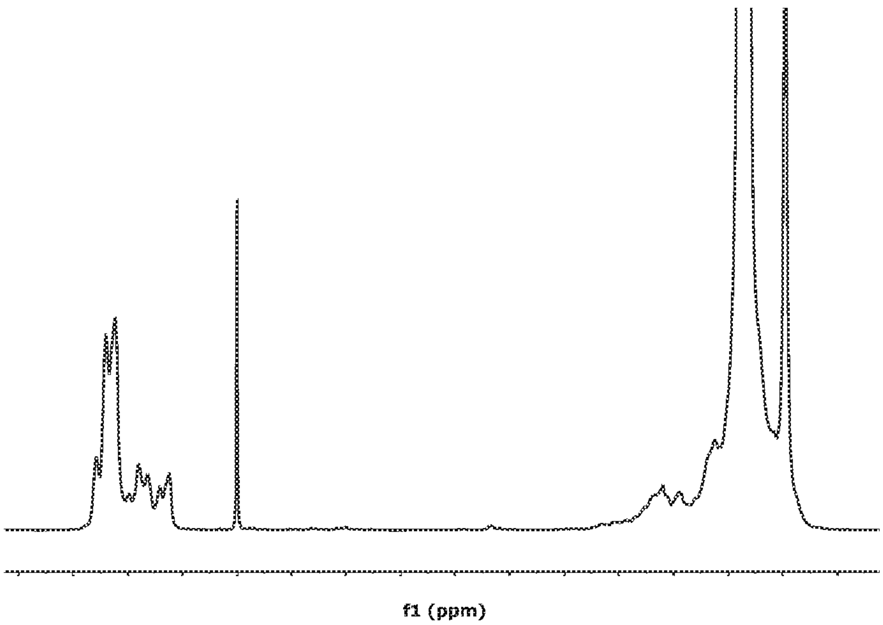


FIGURE 7

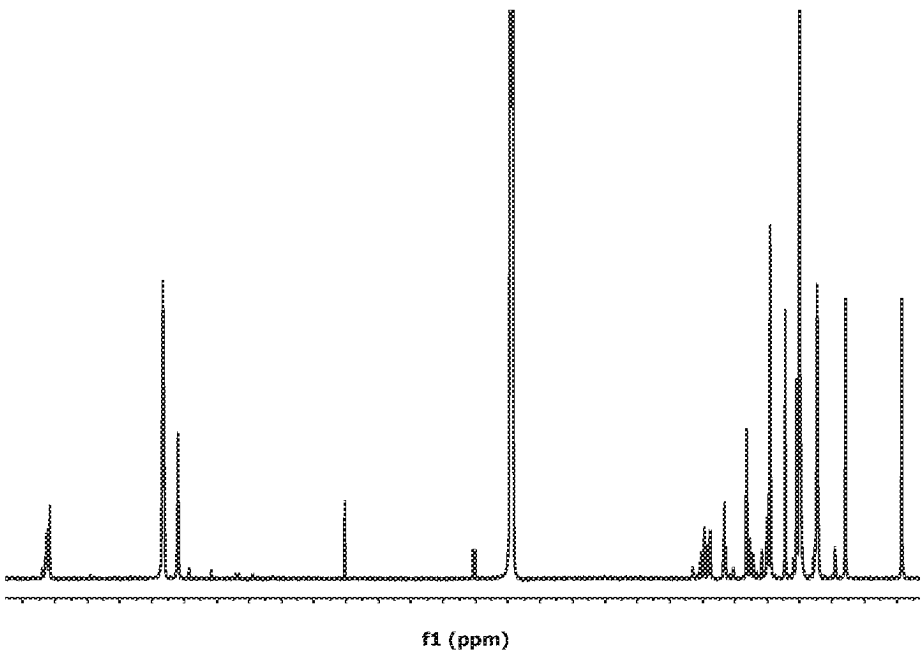


FIGURE 8

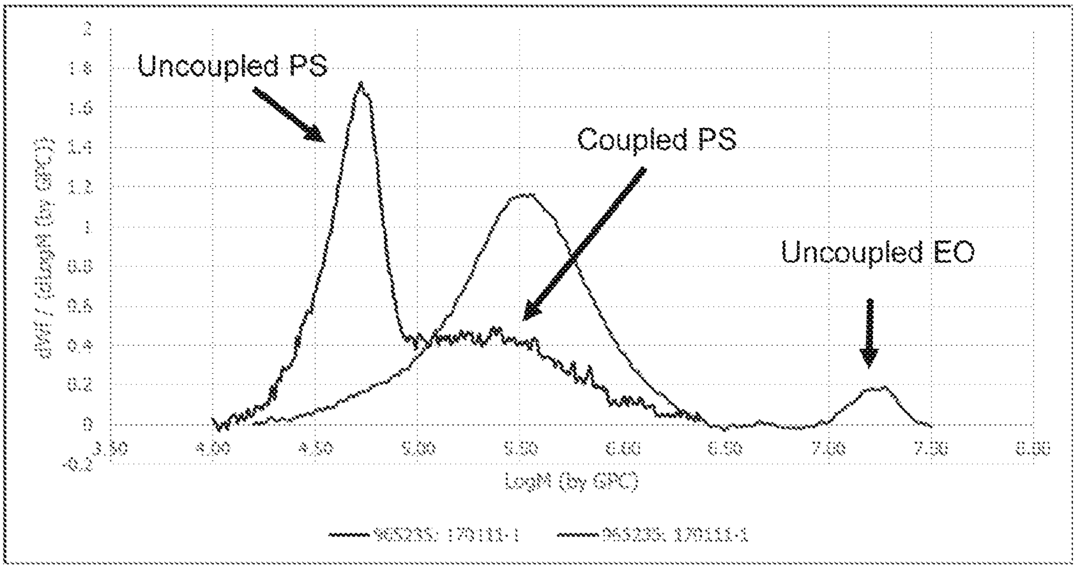


FIGURE 9

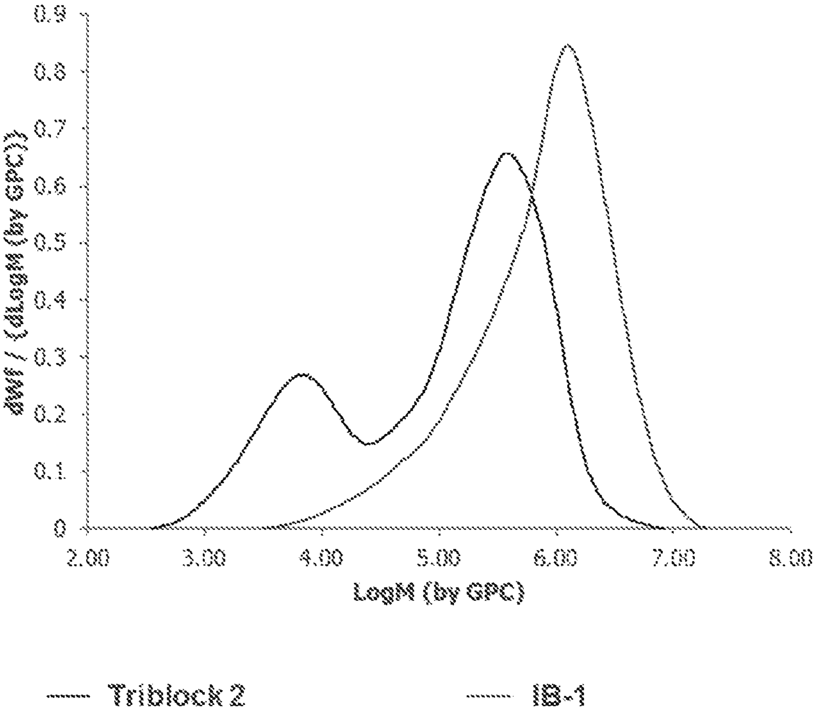


FIGURE 10A

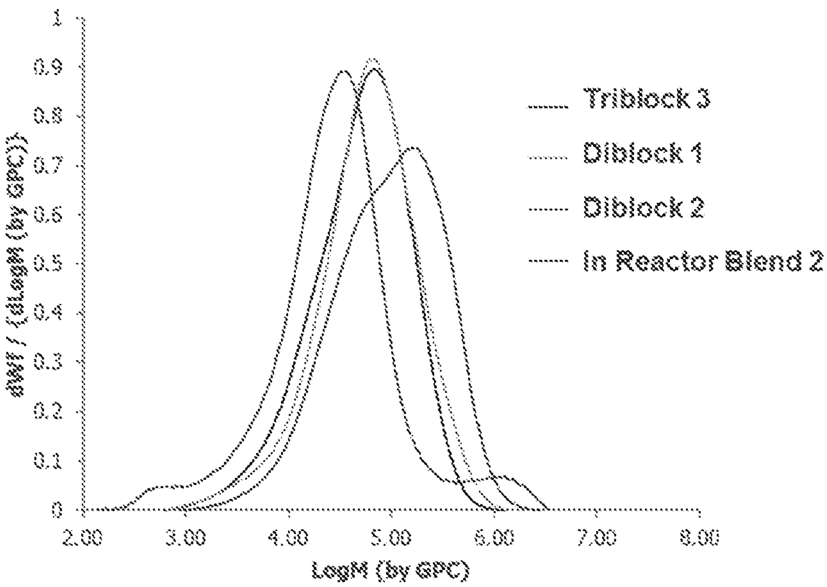


FIGURE 10B

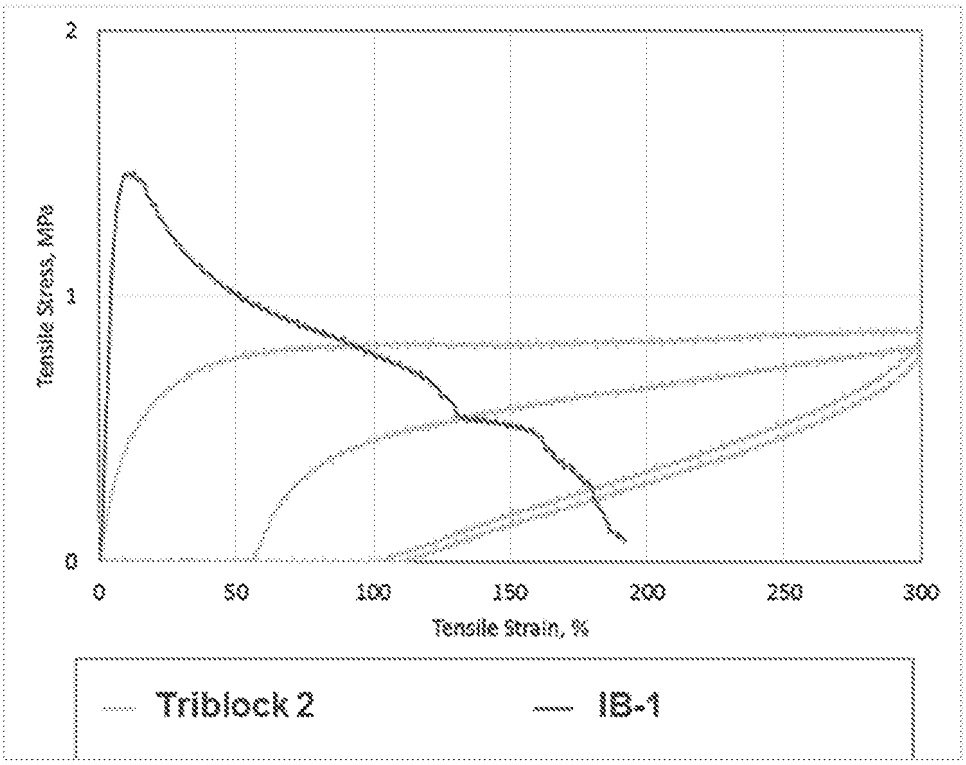


FIGURE 11

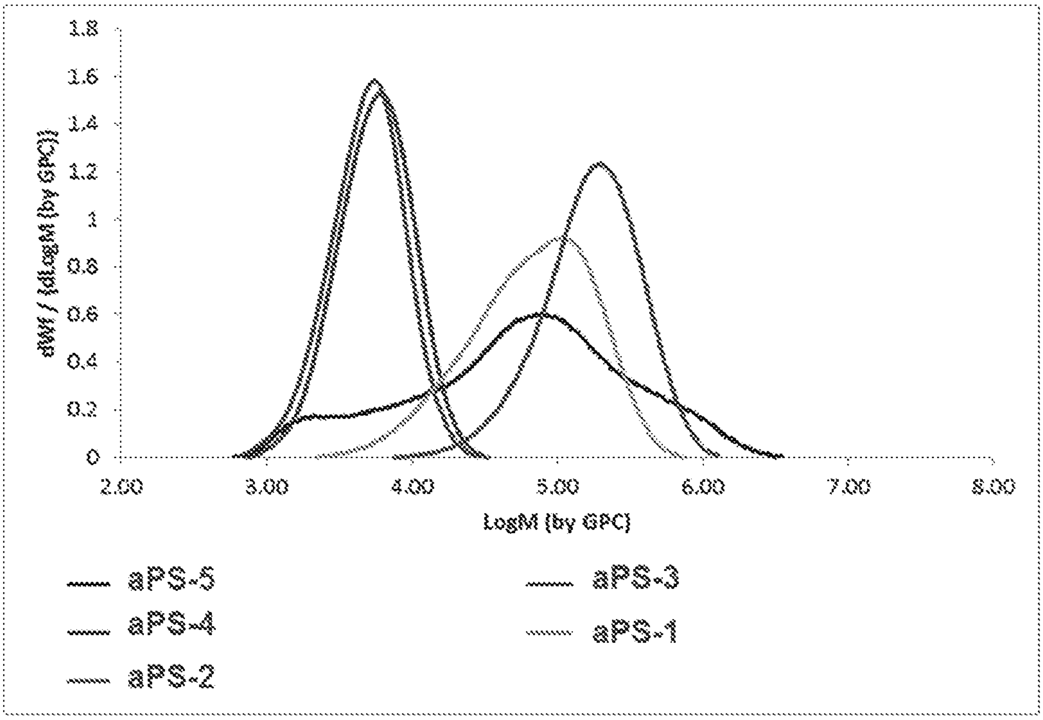


FIGURE 12

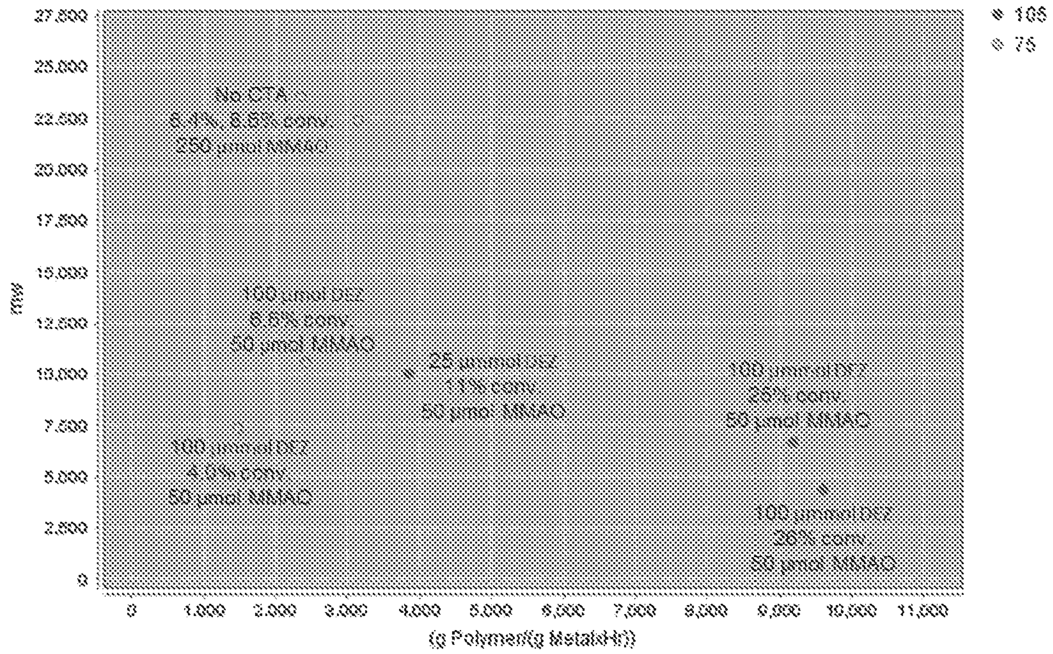


FIGURE 13

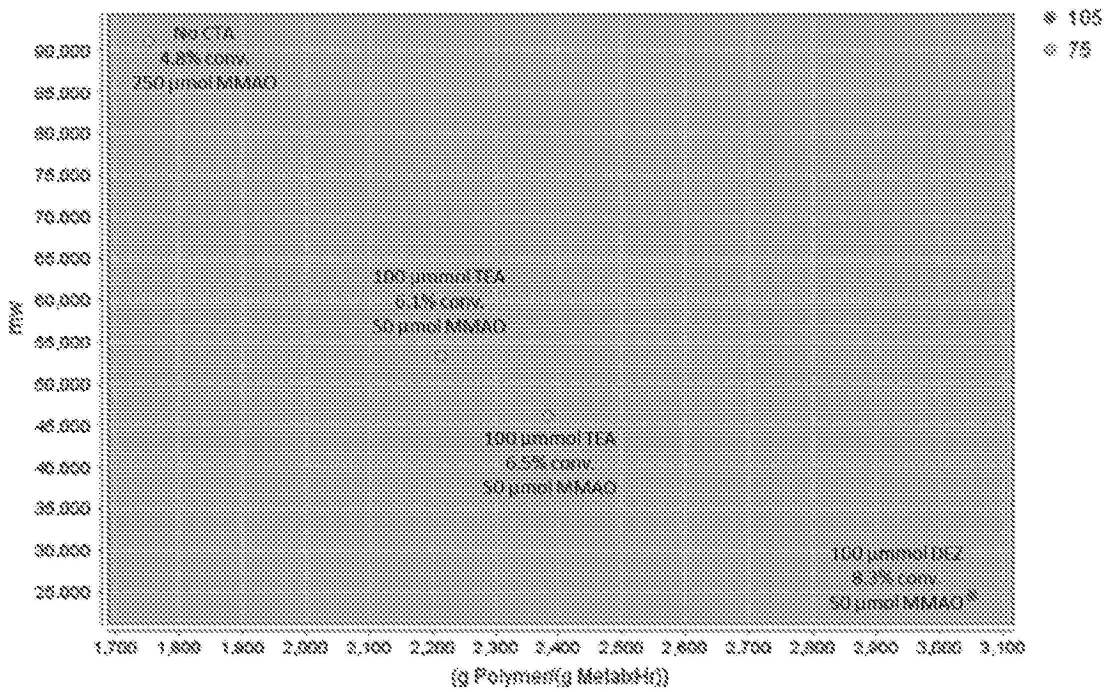


FIGURE 14

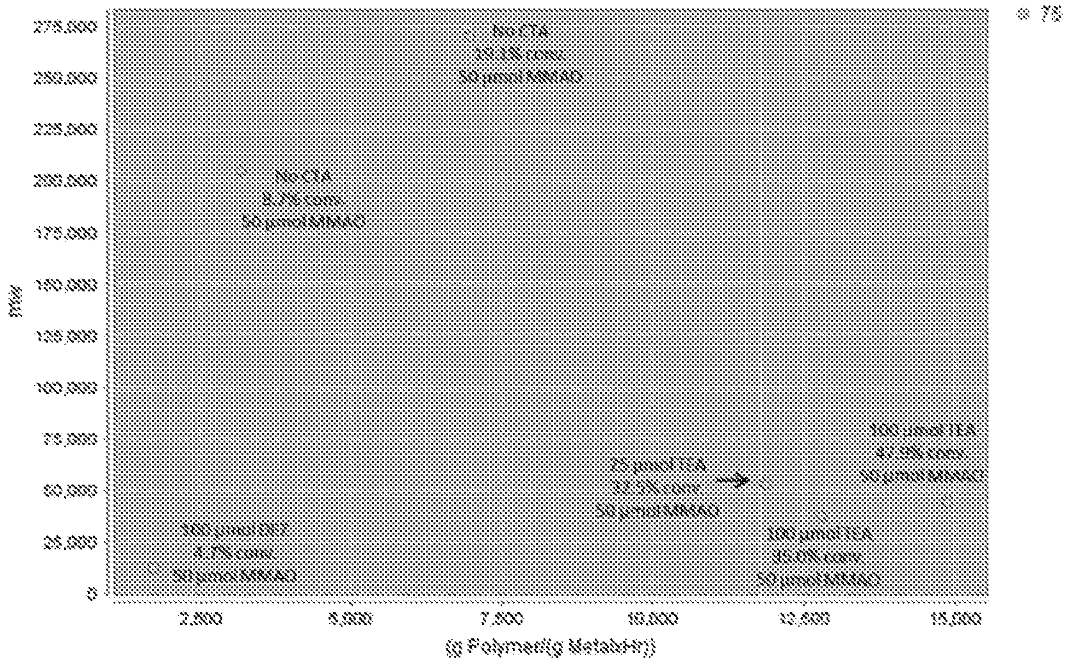
75
No CTA
19.1% conv.
50 μmol MMAO
No CTA
8.7% conv.
50 μmol MMAO
100 μmol TEA
47.9% conv.
50 μmol MMAO
75 μmol TEA
32.5% conv.
50 μmol MMAO
100 μmol DEZ
4.7% conv.
50 μmol MMAO
100 μmol TEA
35.0% conv.
50 μmol MMAO
Mw
275,000
250,000
225,000
200,000
175,000
150,000
125,000
100,000
75,000
50,000
25,000
0
2,500
5,000
7,500
10,000
12,500
15,000
(g Polymer/(g Metal-Hr))

FIGURE 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 63127350
- US 20140088276 A
- US 8623976 B
- US 20180022852 A
- US 8710143 B
- US 7915192 B
- US 8124709 B
- US 8501885 B
- US 8716400 B
- EP 1716190 B1
- EP 1926763 B1
- EP 2582747 B1
- WO 2018064546 A
- WO 0340195 A
- WO 0424740 A


### Non-patent literature cited in the description


- **A. VALENTE et al.** *Angew. Chem.. Int. Ed*, 2014, vol. 53, 4638-4641
- **L. PAN et al.** *Angew. Chem.. Int. Ed*, 2011, vol. 50, 12012-12015
- **S. S. PARK et al.** *Macromolecules*, 2017, vol. 50, 6606-6616
- **Y. LUO et al.** *J. Am. Chem. Soc.*, 2004, vol. 126, 13910-13911
- **H. HAGIHARA et al.** *Polymer Journal*, 2012, vol. 44, 147-154
- **F. LIN et al.** *Journal of Polymer Science, Part A: Polymer Chemistry*, 2017, vol. 55, 1243-1249
- **B. LIU et al.** *Macromolecules*, 2016, vol. 49, 6226-6231
- **WILLIAMS ; WARD**. *J. Polym. Sci., Polym. Let*, 1968, vol. 6, 621
- *Chem. Commun.*, 2007, vol. 40, 4137-4139